(19) Europäisches Patentamt
European Patent Office
Office européen des brevets

(11) **EP 4 404 664 A1**

(12) **EUROPEAN PATENT APPLICATION**
published in accordance with Art. 153(4) EPC

(43) Date of publication:
**24.07.2024 Bulletin 2024/30**

(21) Application number: **22875124.4**

(22) Date of filing: **29.09.2022**

(51) International Patent Classification (IPC):
*H04W 72/04* *(2023.01)*

(52) Cooperative Patent Classification (CPC):
**H04W 72/04**

(86) International application number:
**PCT/CN2022/122922**

(87) International publication number:
**WO 2023/051743 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 CN 202111166952
05.11.2021 CN 202111307853
10.01.2022 CN 202210023741
21.01.2022 CN 202210072983**

(71) Applicant: **Huawei Technologies Co., Ltd.
Shenzhen, Guangdong 518129 (CN)**

(72) Inventors:
• **LU, Shaozhong
Shenzhen, Guangdong 518129 (CN)**
• **GUO, Zhiheng
Shenzhen, Guangdong 518129 (CN)**
• **YAN, Mao
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **UPLINK TRANSMISSION METHOD AND APPARATUS**

(57)     This application provides an uplink transmission method and an apparatus. The method includes: A network device indicates a terminal device to send a first transport block in a plurality of time units, and further indicates the terminal device to send uplink control information UCI in a first time unit. The first time unit is one of the plurality of time units. Regardless of whether the terminal device detects that the network device indicates the terminal device to send the UCI, both the network device and the terminal device calculate, based on a parameter G corresponding to the first time unit, a location of a starting bit in a coded bit sequence that is output through rate matching in a second time unit. The second time unit is a next time unit of the first time unit in the plurality of time units, and the parameter G is a total quantity of coded bits available for transmission of the first transport block and the UCI in one time unit. Therefore, starting from the second time unit, the network device and the terminal device can align locations of starting bits in bit selection in each rate matching, thereby increasing a decoding success rate.

FIG. 8

**Description**

**TECHNICAL FIELD**

This application relates to the communication field, and more specifically, to an uplink transmission method and an apparatus.

**BACKGROUND**

Currently, transport block over multi-slot (transport block over multi-slot, TBoMS) rate matching is performed once in each time unit, and a location that is in a circular buffer and that is of a starting bit in bit selection in the latter rate matching is calculated in real time based on a location that is in the circular buffer and that is of an ending bit in bit selection in the current rate matching. In one data transmission, if a network device schedules, by using a physical downlink control channel (physical downlink control channel, PDCCH), a terminal device to report uplink control information (uplink control information, UCI), and indicates the terminal device to include the UCI on a physical uplink shared channel (physical uplink shared channel, PUSCH), but the terminal device does not detect the PUCCH, the UCI is not carried on the PUSCH. Consequently, the network device and the terminal device cannot align locations that are in circular buffers and that are of starting bits in bit selection in rate matching in one time unit. As a result, the network device incorrectly decodes all coded bit sequences starting from the time unit in currently transmitted coded bit sequences. In this case, how the network device and the terminal device determine a location that is in the circular buffer and that is of a starting bit in bit selection in each rate matching of the network device and the terminal device becomes an urgent problem to be resolved.

**SUMMARY**

This application provides an uplink transmission method and an apparatus, to increase a decoding success rate of uplink transmission of a terminal device.

According to a first aspect, an uplink transmission method is provided, including: A terminal device receives first indication information from a network device, where the first indication information indicates the terminal device to send a first transport block in a plurality of time units. The terminal device receives second indication information from the network device, where the second indication information indicates the terminal device to send uplink control information UCI in a first time unit, and the first time unit is one of the plurality of time units. The terminal device determines, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units. The terminal device sends the UCI and the first transport block to the network device in the plurality of time units.

In the foregoing solution, the network device indicates the terminal device to include indication information of the UCI in the first time unit; and when the terminal device detects the indication, the total quantity of coded bits of the UCI is not removed from the parameter G used by the network device and the terminal device to determine the location that is in the circular buffer and that is of the starting bit in the coded bit sequence that is output through rate matching in the second time unit (the next time unit of the first time unit). Therefore, starting from the second time unit, the network device and the terminal device can align locations that are in circular buffers and that are of starting bits in bit selection in each rate matching. This increases a decoding success rate. With reference to the first aspect, in some implementations of the first aspect, that the terminal device determines, based on a parameter G corresponding to the first time unit, a location that is in a circular buffer and that is of a starting bit in a first coded bit sequence includes: The terminal device determines, based on a times of the parameter G corresponding to the first time unit, the location that is in the circular buffer and that is of the starting bit in the first coded bit sequence, where $0<a\leq1$.

With reference to the first aspect, in some implementations of the first aspect, the method further includes: The terminal device determines a length of a second coded bit sequence based on the parameter G corresponding to the first time unit, where the second coded bit sequence is a coded bit sequence that is output through rate matching in the first time unit.

In the foregoing solution, when the terminal device receives the second indication information, the network device and the terminal device may determine the location that is in the circular buffer and that is of the starting bit in the first coded bit sequence, and a length of the second coded bit sequence in a manner the same as that used when the terminal device does not receive the second indication information. This extends an application scope of the uplink transmission method provided in this application.

With reference to the first aspect, in some implementations of the first aspect, a is equal to any one of the following numbers: 0.1x, where 0<x<10; 0.2x, where 0<x<5; or 0.01x, where 0<x<100; and x is an integer.

With reference to the first aspect, in some implementations of the first aspect, that the terminal device determines, based on a parameter G corresponding to the first time unit, a location that is in a circular buffer and that is of a starting bit in a first coded bit sequence includes: The terminal device determines, based on $Z_c$ and the parameter G corresponding to the first time unit, the location that is in the circular buffer and that is of the starting bit in the first coded bit sequence, where $Z_c$ is a low-density parity-check LDPC factor.

In the foregoing solution, when resource mapping is performed on a terminal side, a step of searching for a location that is in the first coded bit sequence and that is of a last bit mapped to a previous time unit is reduced, and on the basis of determining, based on G, the location that is in the circular buffer and that is of the starting bit in the first coded bit sequence, the location is determined with reference to $Z_c$. This simplifies calculation in a mapping process and reduces overheads.

With reference to the first aspect, in some implementations of the first aspect, the method further includes: The terminal device maps the second coded bit sequence to a time-frequency resource in the first time unit, where the second coded bit sequence is the coded bit sequence that is output through rate matching in the first time unit, and a quantity of bits in the second coded bit sequence is equal to the parameter G corresponding to the first time unit. The terminal device maps the UCI to some time-frequency resources in the first time unit, to replace some bit sequences in the first coded bit sequence carried in the some time-frequency resources.

In the foregoing solution, the UCI is multiplexed in the first time unit in a puncturing manner, so that a bit sequence that is included in the first transport block and that is carried on a time-frequency resource other than a time-frequency resource occupied by the UCI in the first time unit does not change. This increases a decoding success rate and accuracy of the network device.

With reference to the first aspect, in some implementations of the first aspect, the first indication information further indicates that the network device can send one transport block in the plurality of time units, and the first transport block is one transport block, where the first indication information includes a transport block over multi-slot transmission enabling field, or the first indication information includes a transport block over multi-slot mapping type parameter.

In the foregoing solution, that the network device supports a function of transmission over multi-slot is indicated to the terminal device in a plurality of forms, so that signaling designs are enriched, and uplink transmission efficiency is improved.

According to a second aspect, an uplink transmission method is provided, including: A network device sends first indication information to a terminal device, where the first indication information indicates the terminal device to send a first transport block in a plurality of time units. The network device sends second indication information to the terminal device, where the second indication information indicates the terminal device to send uplink control information UCI in a first time unit, and the first time unit is one of the plurality of time units. The network device receives the first transport block from the terminal device. The network device determines, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units.

In the foregoing solution, the network device indicates the terminal device to include indication information of the UCI in the first time unit; and when the terminal device detects or does not detect the indication, the total quantity of coded bits of the UCI is not removed from the parameter G used by the network device and the terminal device to determine the location that is in the circular buffer and that is of the starting bit in the coded bit sequence that is output through rate matching in the second time unit (the next time unit of the first time unit). Therefore, starting from the second time unit, the network device and the terminal device can align locations that are in circular buffers and that are of starting bits in bit selection in each rate matching. This increases a decoding success rate.

With reference to the second aspect, in some implementations of the second aspect, that the network device determines, based on a parameter G corresponding to the first time unit, a location that is in a circular buffer and that is of a starting bit in a first coded bit sequence includes: The network device determines, based on a times of the parameter G corresponding to the first time unit, the location that is in the circular buffer and that is of the starting bit in the first coded bit sequence, where 0<a≤1.

In the foregoing solution, G is multiplied by a that is greater than 0 and less than 1, so that the network device can calculate the location that is in the circular buffer and that is of the starting bit in the first coded bit sequence in advance. This shortens a gap between an ending bit in a second coded bit sequence and the starting bit in the first coded bit sequence, and improves channel quality. With reference to the second aspect, in some implementations of the first aspect, the method further includes: The network device determines a length of the second coded bit sequence based on the parameter G corresponding to the first time unit, where the second coded bit sequence is a coded bit sequence that is output through rate matching in the first time unit.

In the foregoing solution, further, the length of the second coded bit sequence is still calculated based on G. Because G is greater than aG, it can be further ensured that the foregoing gap is eliminated.

With reference to the second aspect, in some implementations of the first aspect, a is equal to any one of the following numbers: 0. 1x, where 0<x<10; 0.2x, where 0<x<5; or 0.01x, where 0<x<100; and x is an integer.

With reference to the second aspect, in some implementations of the first aspect, that the network device determines, based on a parameter G corresponding to the first time unit, a location that is in a circular buffer and that is of a starting bit in a first coded bit sequence includes: The network device determines, based on $Z_c$ and the parameter G corresponding to the first time unit, the location that is in the circular buffer and that is of the starting bit in the first coded bit sequence, where $Z_c$ is a low-density parity-check LDPC factor.

In the foregoing solution, when resource mapping is performed on a terminal side, a step of searching for a location that is in the first coded bit sequence and that is of a last bit mapped to a previous time unit is reduced, and on the basis of determining, based on G, the location that is in the circular buffer and that is of the starting bit in the first coded bit sequence, the location is determined with reference to $Z_c$. This simplifies calculation in a mapping process and reduces overheads.

With reference to the second aspect, in some implementations of the first aspect, the first indication information further indicates that the network device can send one transport block in the plurality of time units, and the first transport block is one transport block, where the first indication information includes a transport block over multi-slot transmission enabling field, or the first indication information includes a transport block over multi-slot mapping type parameter.

In the foregoing solution, that the network device supports a function of transmission over multi-slot is indicated to the terminal device in a plurality of forms, so that signaling designs are enriched, and uplink transmission efficiency is improved.

According to a third aspect, an uplink transmission method is provided, including: A terminal device receives first indication information from a network device, where the first indication information indicates the terminal device to send one transport block in a plurality of time units. The terminal device determines that transmission of a first coded bit sequence in a first time unit is canceled, where the first time unit is one of the plurality of time units, and the first coded bit sequence is a coded bit sequence that is output through rate matching in the first time unit. The terminal device sends the first coded bit sequence to the network device in a second time unit, where the second time unit is a time unit other than the first time unit in the plurality of time units. With reference to the third aspect, in some implementations of the third aspect, a starting bit in a bit sequence sent by the terminal device in a next time unit of the second time unit is a next bit of an ending bit in the first coded bit sequence.

With reference to the third aspect, in some implementations of the third aspect, the method further includes: The terminal device sends a second coded bit sequence to the network device in a third time unit, where the second coded bit sequence is a coded bit sequence that is output through rate matching in the third time unit, a starting bit in the second coded bit sequence is a next bit of an ending bit in a coded bit sequence carried in a last time unit in the plurality of time units, and the third time unit is a next time unit for carrying an uplink transport block in the first time domain resource.

According to a fourth aspect, an uplink transmission apparatus is provided, including: a transceiver module, configured to receive first indication information from a network device, where the first indication information indicates the terminal device to send a first transport block in a plurality of time units, where the transceiver module is further configured to receive second indication information from the network device, where the second indication information indicates the terminal device to send uplink control information UCI in a first time unit, and the first time unit is one of the plurality of time units; and a processing module, configured to determine, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units, where the transceiver module is further configured to send the UCI and the first transport block to the network device in the plurality of time units.

In the foregoing solution, the network device indicates the terminal device to include indication information of the UCI in the first time unit; and when the terminal device detects the indication, the total quantity of coded bits of the UCI is not removed from the parameter G used by the network device and the terminal device to determine the location that is in the circular buffer and that is of the starting bit in the coded bit sequence that is output through rate matching in the second time unit (the next time unit of the first time unit). Therefore, starting from the second time unit, the network device and the terminal device can align locations that are in circular buffers and that are of starting bits in bit selection in each rate matching. This increases a decoding success rate. With reference to the fourth aspect, in some implementations of the fourth aspect, the processing module is specifically configured to determine, based on a times of the parameter G corresponding to the first time unit, the location that is in the circular buffer and that is of the starting bit in the first coded bit sequence, where $0<a\leq1$.

With reference to the fourth aspect, in some implementations of the fourth aspect, the processing module is further configured to determine a length of a second coded bit sequence based on the parameter G corresponding to the first time unit, where the second coded bit sequence is a coded bit sequence that is output through rate matching in the first time unit.

With reference to the fourth aspect, in some implementations of the fourth aspect, a is equal to any one of the following numbers: 0. 1x, where 0<x<10; 0.2x, where 0<x<5; or 0.01x, where 0<x<100; and x is an integer.

With reference to the fourth aspect, in some implementations of the fourth aspect, the processing module is specifically configured to determine, based on $Z_c$ and the parameter G corresponding to the first time unit, the location that is in the circular buffer and that is of the starting bit in the first coded bit sequence, where $Z_c$ is a low-density parity-check LDPC factor.

With reference to the fourth aspect, in some implementations of the fourth aspect, the processing module is further configured to map the second coded bit sequence to a time-frequency resource in the first time unit, where the second coded bit sequence is the coded bit sequence that is output through rate matching in the first time unit, and a quantity of bits in the second coded bit sequence is equal to the parameter G corresponding to the first time unit.

The processing module is further configured to map the UCI to some time-frequency resources in the first time unit, to replace some bit sequences in the first coded bit sequence carried in the some time-frequency resources.

With reference to the fourth aspect, in some implementations of the fourth aspect, the first indication information further indicates that the network device can send one transport block in the plurality of time units, and the first transport block is one transport block.

The first indication information includes a transport block over multi-slot transmission enabling field, or the first indication information includes a transport block over multi-slot mapping type parameter.

According to a fifth aspect, an uplink transmission apparatus is provided, including: a transceiver module, configured to send first indication information to a terminal device, where the first indication information indicates the terminal device to send a first transport block in a plurality of time units, where the transceiver module is further configured to send second indication information to the terminal device, where the second indication information indicates the terminal device to send uplink control information UCI in a first time unit, and the first time unit is one of the plurality of time units; and the transceiver module is further configured to receive the first transport block from the terminal device; and a processing module, configured to determine, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units.

In the foregoing solution, the network device indicates the terminal device to include indication information of the UCI in the first time unit; and when the terminal device detects or does not detect the indication, the total quantity of coded bits of the UCI is not removed from the parameter G used by the network device and the terminal device to determine the location that is in the circular buffer and that is of the starting bit in the coded bit sequence that is output through rate matching in the second time unit (the next time unit of the first time unit). Therefore, starting from the second time unit, the network device and the terminal device can align locations that are in circular buffers and that are of starting bits in bit selection in each rate matching. This increases a decoding success rate.

With reference to the fifth aspect, in some implementations of the fifth aspect, the processing module is specifically configured to determine, based on a times of the parameter G corresponding to the first time unit, the location that is in the circular buffer and that is of the starting bit in the first coded bit sequence, where $0<a\leq1$.

With reference to the fifth aspect, in some implementations of the fifth aspect, the processing module is further configured to determine a length of a second coded bit sequence based on the parameter G corresponding to the first time unit, where the second coded bit sequence is a coded bit sequence that is output through rate matching in the first time unit.

With reference to the fifth aspect, in some implementations of the fifth aspect, a is equal to any one of the following numbers: 0. 1x, where 0<x<10; 0.2x, where 0<x<5; or 0.01x, where 0<x<100; and x is an integer.

With reference to the fifth aspect, in some implementations of the fifth aspect, the processing module is specifically configured to determine, based on $Z_c$ and the parameter G corresponding to the first time unit, the location that is in the circular buffer and that is of the starting bit in the first coded bit sequence, where $Z_c$ is a low-density parity-check LDPC factor.

With reference to the fifth aspect, in some implementations of the fifth aspect, the first indication information further indicates that the network device can send one transport block in the plurality of time units, and the first transport block is one transport block.

The first indication information includes a transport block over multi-slot transmission enabling field, or the first indication information includes a transport block over multi-slot mapping type parameter.

According to a sixth aspect, an uplink transmission method is provided, where the method includes: A terminal device receives downlink control information and first information from a network device, where the downlink control information indicates the terminal device to transmit aperiodic channel state information A-CSI on a first time domain resource, the first information indicates to transmit a physical uplink shared channel PUSCH on a second time domain resource, and the first time domain resource overlaps the second time domain resource. The terminal device cancels transmission of the A-CSI, or the terminal device cancels PUSCH transmission on an overlapped time domain resource between the first time domain resource and the second time domain resource. With reference to the seventh aspect, in some implementations of the seventh aspect, the first time domain resource and the second time domain resource are included in a same time unit. According to an eighth aspect, an uplink transmission method is provided, where the method includes:

A terminal device receives first indication information from a network device, where the first indication information indicates the terminal device to send a first transport block in a plurality of time units. The terminal device receives second indication information from the network device, where the second indication information indicates the terminal device to send a HARQ-ACK and first control information in a first time unit, the first control information includes channel state information CSI and/or configured grant-uplink control information CG-UCI, and the first time unit is one of the plurality of time units.

The terminal device determines, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the HARQ-ACK in one time unit, G is a positive integer, and the second time unit is a next time unit of the first time unit in the plurality of time units. The terminal device sends the HARQ-ACK, the first information, and the first transport block to the network device in the plurality of time units.

According to a ninth aspect, an uplink transmission method is provided, where the method includes: A terminal device receives first indication information from a network device, where the first indication information indicates the terminal device to send a first transport block in a plurality of time units.

The terminal device receives second indication information from the network device, where the second indication information indicates the terminal device to send a HARQ-ACK in a first time unit, and the first time unit is one of the plurality of time units.

When a quantity of bits occupied by the HARQ-ACK is greater than 2 bits, the terminal device multiplexes the HARQ-ACK to the first transport block in a puncturing manner.

The terminal device sends, to the network device in the plurality of time units, the first transport block to which the HARQ-ACK is multiplexed.

According to a tenth aspect, an uplink transmission method is provided, where the method includes: A network device sends first information to a terminal device, where the first information indicates the terminal device to send one transport block in a first transmission manner.

When the network device does not receive or does not correctly receive the transport block, the network device sends second information to the terminal device, where the second information indicates the terminal device to send the transport block in a second transmission manner.

The first transmission manner is a single-code-block based physical uplink shared channel PUSCH or single-code-block based PUSCH repetition of a repetition type A, and the second transmission manner is a multi-slot transport block or multi-slot transport block repetition; or

the first transmission manner is a multi-code-block based physical uplink shared channel PUSCH or multi-code-block based PUSCH repetition of a repetition type A, and the first transmission manner is the same as the second transmission manner.

With reference to the tenth aspect, in some implementations of the tenth aspect, the method further includes: The network device determines the second transmission manner based on the first transmission manner.

According to an eleventh aspect, an uplink transmission apparatus is provided, where the apparatus includes:

a transceiver module, configured to receive downlink control information and first information from a network device, where the downlink control information indicates the terminal device to transmit aperiodic channel state information A-CSI on a first time domain resource, the first information indicates to transmit a physical uplink shared channel PUSCH on a second time domain resource, and the first time domain resource overlaps the second time domain resource; and

a processing module, configured to cancel transmission of the A-CSI, or cancel PUSCH transmission on an overlapped time domain resource between the first time domain resource and the second time domain resource.

According to a twelfth aspect, an uplink transmission apparatus is provided, where the apparatus includes:

a transceiver module, configured to receive first indication information from a network device, where the first indication information indicates the terminal device to send a first transport block in a plurality of time units, where

the transceiver module is further configured to receive second indication information from the network device, where the second indication information indicates the terminal device to send a HARQ-ACK and first control information in a first time unit, the first control information includes channel state information CSI and/or configured grant-uplink control information CG-UCI, and the first time unit is one of the plurality of time units; and

a processing module, configured to determine, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the HARQ-ACK in one time unit, G is a positive integer, and the second time unit is a next time unit of the first time unit in the plurality of time units, where

the transceiver module is further configured to send the HARQ-ACK, the first information, and the first transport block to the network device in the plurality of time units. According to a thirteenth aspect, an uplink transmission apparatus is provided, where the apparatus includes:

a transceiver module, configured to receive first indication information from a network device, where the first indication information indicates the terminal device to send a first transport block in a plurality of time units, where

the transceiver module is further configured to receive second indication information from the network device, where the second indication information indicates the terminal device to send a HARQ-ACK in a first time unit, and the first time unit is one of the plurality of time units; and

a processing module, configured to: when a quantity of bits occupied by the HARQ-ACK is greater than 2 bits, multiplex the HARQ-ACK to the first transport block in a puncturing manner, where

the transceiver module is further configured to send, to the network device in the plurality of time units, the first transport block to which the HARQ-ACK is multiplexed. According to a fourteenth aspect, an uplink transmission apparatus is provided, where the apparatus includes:

a transceiver module, configured to send first information to a terminal device, where the first information indicates the terminal device to send one transport block in a first transmission manner.

When the transceiver module does not receive or does not correctly receive the transport block, the transceiver module is further configured to send second information to the terminal device, where the second information indicates the terminal device to send the transport block in a second transmission manner.

The first transmission manner is a single-code-block based physical uplink shared channel PUSCH or single-code-block based PUSCH repetition of a repetition type A, and the second transmission manner is a multi-slot transport block or multi-slot transport block repetition; or

the first transmission manner is a multi-code-block based physical uplink shared channel PUSCH or multi-code-block based PUSCH repetition of a repetition type A, and the first transmission manner is the same as the second transmission manner.

According to a fifteenth aspect, an uplink transmission method is provided, including:

A terminal device receives first indication information from a network device, where the first indication information indicates the terminal device to send a first transport block in a plurality of time units.

The terminal device receives second indication information from the network device, where the second indication information indicates the terminal device to send uplink control information UCI in a first time unit, and the first time unit is one of the plurality of time units.

The terminal device determines, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is one of the plurality of time units.

The terminal device sends the UCI and the first transport block to the network device in the plurality of time units.

In the foregoing solution, the network device indicates the terminal device to include indication information of the UCI in the first time unit; and when the terminal device detects the indication, the total quantity of coded bits of the UCI is not deducted from the parameter G used by the network device and the terminal device to determine the location that is in the circular buffer and that is of the starting bit in the coded bit sequence that is output through rate matching in the second time unit. Therefore, starting from the second time unit, the network device and the terminal device can align locations that are in circular buffers and that are of starting bits in bit selection in each rate matching. This increases a decoding success rate.

In an implementation, the plurality of time units correspond to an equal parameter G.

In an implementation, that the terminal device determines, based on a parameter G corresponding to the first time unit, a location that is in a circular buffer and that is of a starting bit in a first coded bit sequence includes:

determining, based on the parameter G corresponding to the first time unit and a real periodicity $N'_{cb}$ of bit selection, the location that is in the circular buffer and that is of the starting bit in the first coded bit sequence.

In an implementation, the determining, based on the parameter G corresponding to the first time unit and a real periodicity $N'_{cb}$ of bit selection, the location that is in the circular buffer and that is of the starting bit in the first coded bit sequence includes:

determining a first starting bit index $k'_{r,n}$ based on the parameter G corresponding to the first time unit and the real periodicity $N'_{cb}$ of bit selection; and

determining, based on the first starting bit index $k'_{r,n}$, the location $k_{r,n}$ that is in the circular buffer and that is of the starting bit in the first coded bit sequence.

n represents an index of the second time unit in the plurality of time units, and the index is obtained by counting the plurality of time units from 0 in a time sequence.

In an implementation, the first starting bit index $k'_{r,n}$ meets the following:

$$k'_{r,n} = \mathrm{mod}\left(k'_{r,0} + n \times G, N'_{cb}\right).$$

$k'_{r,0}$ represents a first starting bit index of a 1st time unit in the plurality of time units, $N'_{cb}$ represents the real periodicity of bit selection, $n$ represents the index of the second time unit in the plurality of time units, and the index is obtained by counting the plurality of time units from 0 in the time sequence.

In an implementation, the determining, based on $k'_{r,n}$, the location $k_{r,n}$ that is in the circular buffer and that is of the starting bit in the first coded bit sequence includes:

$$\text{If } 0 \leq k'_{r,n} < K'_{NULL} - 2Z_c, k_{r,n} = k'_{r,n};$$

or

$$\text{if } K'_{NULL} - 2Z_c \leq k'_{r,n} < N'_{cb}, k_{r,n} = k'_{r,n} + (K_{NULL} - K'_{NULL}).$$

$K'_{NULL} - 2Z_c$ represents a location of a 1st filler bit in the circular buffer, and $K_{NULL} - K'_{NULL}$ represents a quantity of filler bits in the circular buffer.

In an implementation, the real periodicity $N'_{cb}$ of bit selection meets the following: $N'_{cb} = N_{cb} - (K_{NULL} - K'_{NULL})$, where $K_{NULL} - K'_{NULL}$ represents the quantity of filler bits in the circular buffer, and $N_{cb}$ represents a size of the circular buffer.

In an implementation, the first starting bit index $k'_{r,n}$ of the 1st time unit in the plurality of time units meets the following:

If $0 \leq k_0 < K'_{NULL} - 2Z_c, k'_{r,0} = k_0$, where $K'_{NULL} - 2Z_c$ represents an index of the 1st filler bit in the circular buffer;

$$K'_{NULL} - 2Z_c \leq k_0 < K_{NULL} - 2Z_c, \quad k'_{r,0} = K'_{NULL} - 2Z_c,$$

where $K_{NULL} - 2Z_c$ represents an index of a 1st parity bit in the circular buffer;

if or

if

$$K_{NULL} - 2Z_c \leq k_0 < N_{cb} \,,\; k'_{r,0} = k_0 - (K_{NULL} - K'_{NULL}) \,,$$

where $K_{NULL} - K'_{NULL}$ represents a quantity of filler bits in the circular buffer.

$k_0$ represents a location that is in the circular buffer and that is of a starting bit, in coded bits, corresponding to the 1st time unit in the plurality of time units, and $k_0$ is jointly determined by a redundancy version RV and a base graph BG.

In the foregoing solution, it is ensured that a bit sequence obtained by performing bit selection in each of a plurality of slots is consecutive, thereby ensuring decoding performance.

According to a sixteenth aspect, a communications apparatus is provided, including a processor and a memory. The memory is configured to store a computer program, and the processor is configured to execute the computer program stored in the memory, so that the communications apparatus performs the communication method according to any one of the first aspect to the third aspect, the seventh aspect to the tenth aspect, and the fifteenth aspect.

According to a seventeenth aspect, a computer-readable storage medium is provided. The computer-readable storage medium stores a computer program, and when the computer program runs on a computer, the computer is enabled to perform the communication method according to any one of the first aspect to the third aspect, the seventh aspect to the tenth aspect, and the fifteenth aspect.

According to a seventeenth aspect, a chip system is provided, including: a processor, configured to invoke a computer program from a memory and run the computer program, so that a communications device in which the chip system is installed performs the communication method according to any one of the first aspect to the third aspect, the seventh aspect to the tenth aspect, and the fifteenth aspect.

**BRIEF DESCRIPTION OF DRAWINGS**

FIG. 1 is a schematic diagram of a wireless communications system 100 to which an embodiment of this application is applicable;

FIG. 2 is a schematic diagram of a multi-slot transport block;

FIG. 3 is a schematic flowchart of signal processing;

FIG. 4 is a schematic diagram of a transmission occasion;

FIG. 5 is a schematic diagram of TBoMS resource mapping based on a redundancy version cycle;

FIG. 6 is a schematic diagram of performing rate matching once in each slot in a TBoMS;

FIG. 7 shows a location that is in a circular buffer and that is of a starting bit used by a network device and a terminal device to perform bit selection in each rate matching;

FIG. 8 is a schematic interaction diagram of an uplink transmission method 100 according to this application;

FIG. 9 is a schematic interaction diagram of an uplink transmission method 200 according to this application;

FIG. 10 shows an example of two possible uplink-downlink slot configurations;

FIG. 11 is a schematic diagram of an example of determining a starting location of bit selection in rate matching;

FIG. 12 is a schematic diagram in which bit sequences in a circular buffer are sequentially carried by a PUSCH;

FIG. 13 is a schematic diagram in which bit sequences in a circular buffer are sequentially carried by a PUSCH;

FIG. 14 is a schematic diagram of sequentially carrying bit sequences in a circular buffer by a PUSCH;

FIG. 15 is a schematic diagram in which transmission over multi-slot bit sequences are sequentially carried by a PUSCH;

FIG. 16 illustrates RV cycling configuration scheduling of a PUSCH repetition type A;

FIG. 17 illustrates RV cycling configuration scheduling of a PUSCH repetition type A;

FIG. 18 illustrates RV cycling configuration scheduling of a PUSCH repetition type A;

FIG. 19 illustrates RV cycling configuration scheduling of a PUSCH repetition type A;

FIG. 20 is a schematic diagram of an example of an uplink transmission method 500;

FIG. 21 is a schematic diagram of another example of an uplink transmission method 500;

FIG. 22 is a schematic diagram of still another example of an uplink transmission method 500;

FIG. 23 is a schematic diagram of an example of TBoMS transmission;

FIG. 24 is a schematic block diagram of a communications apparatus used for uplink transmission according to an embodiment of this application;
FIG. 25 is a schematic diagram of an uplink transmission apparatus 20 according to an embodiment of this application;
FIG. 26 is a schematic block diagram of $k_0$ in filler bits;

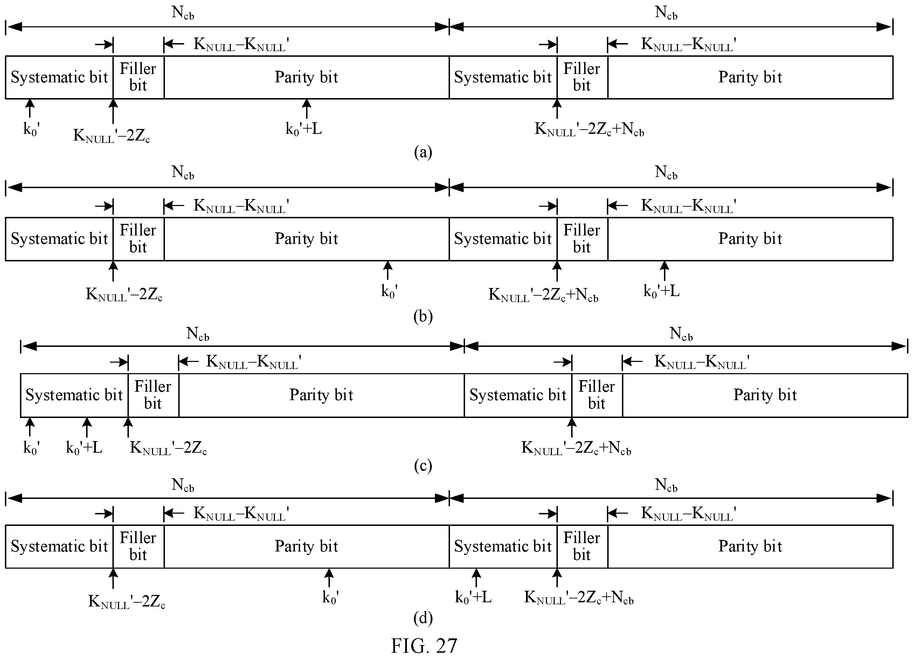

(a), (b), (c), and (d) in FIG. 27 are schematic diagrams of four different cases of locations of $k_0{}'$, $k_0$, and a filler bit in a circular buffer; and

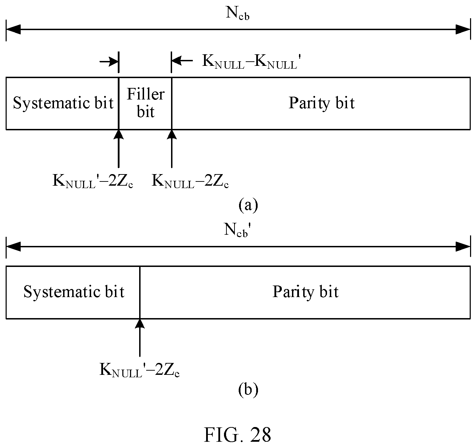

(a) and (b) in FIG. 28 show circular buffers whose lengths are $N_{cb}$ and $N'_{cb}$ respectively.

## DESCRIPTION OF EMBODIMENTS

Technical solutions in embodiments of this application may be applied to various communications systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS). In addition, the technical solutions in the embodiments of this application may be further applied to sidelink communication. For example, the technical solutions in the embodiments of this application may be further applied to device to device (device to device, D2D) communication, machine to machine (machine to machine, M2M) communication, machine type communication (machine type communication, MTC), and communication in an internet of vehicles system.

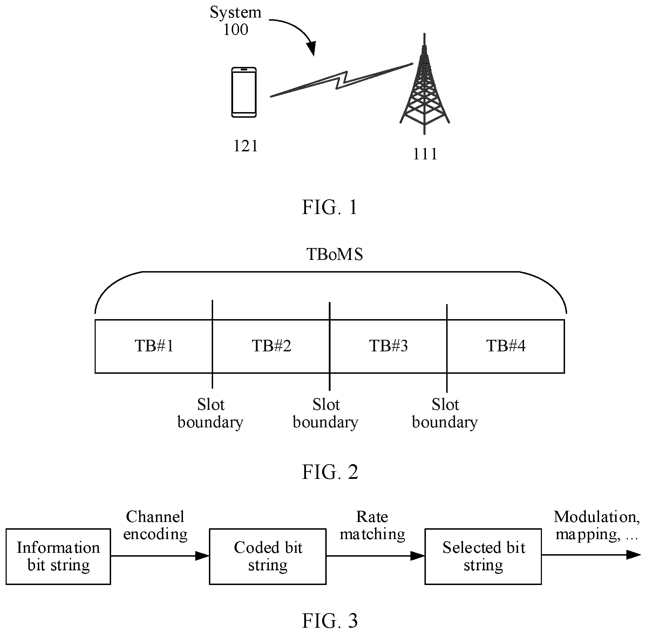

To help understand embodiments of this application, a communications system to which an embodiment of this application is applicable is first described with reference to FIG. 1.

FIG. 1 is a schematic diagram of a wireless communications system 100 to which an embodiment of this application is applicable. As shown in FIG. 1, the wireless communications system 100 may include at least one network device, for example, a network device 111 shown in FIG. 1. The wireless communications system 100 may further include at least one terminal device, for example, a terminal device 121 shown in FIG. 1. A plurality of antennas may be configured for both the network device and the terminal device, and the network device and the terminal device may communicate with each other by using a multi-antenna technology.

When the network device communicates with the terminal device, the network device may manage one or more cells. One cell may have an integer quantity of terminal devices. Optionally, the network device 111 and the terminal device 121 form a single-cell communications system. Without loss of generality, a cell is denoted as a cell #1. The network device 111 may be a network device in the cell #1, or the network device 111 may serve a terminal device (for example, the terminal device 121) in the cell #1.

It should be noted that the cell may be understood as a region within coverage of a wireless signal of the network device.

A transmitting end device mentioned in embodiments of this application may be a terminal device, and a receiving end device may be a network device. For example, the transmitting end device is the terminal device 121, and the receiving end device is the network device 111.

It should be understood that FIG. 1 is merely an example for description, and this application is not limited thereto. For example, embodiments of this application may be further applied to any communication scenario in which data (or a data block) needs to be repeatedly sent.

It should be further understood that the network device in the wireless communications system may be any device having a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), and the like. Alternatively, the device may be a gNB in a 5G system such as an NR system, a transmission point (TRP or TP), or one antenna panel or a group of antenna panels (including a plurality of antenna panels) of a base station in a 5G system. Alternatively, the device may be a network node that constitutes a gNB or a transmission point, for example, a baseband unit (BBU) or a distributed unit (distributed unit, DU). In some deployments, the gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may alternatively be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. It should be further understood that the terminal device in the wireless communications system may also be referred to as user equipment (user equipment, UE), an access terminal, a subscriber unit, a subscriber station, a mobile station, a remote station, a remote terminal, a mobile device, a user terminal, a terminal, a wireless communications device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

For ease of understanding of the embodiments of this application, the following first briefly describes the embodiments with reference to several terms in this application.

1. Time unit

The time unit is generally a unit of time. For example, the time unit may include but is not limited to a subframe (subframe), a slot (slot), a symbol, a physical slot, an available slot, a first symbol of a slot, a first symbol of a physical slot, a first symbol of an available slot, and the like. The symbol (for example, the first symbol) may be a time domain symbol (for example, an orthogonal frequency division multiplexing (orthogonal frequency division multiplexing, OFDM) symbol) or the like. The time unit may be determined based on both an uplink-downlink slot configuration and a TDRA table, and may be indicated by a starting symbol S and a length L in the TDRA table. For the slot (slot), one slot format may include several orthogonal frequency division multiplexing (orthogonal frequency division multiplexing, OFDM) symbols. For example, one slot format may include 14 OFDM symbols, or one slot format may include 12 OFDM symbols, or one slot format includes 7 OFDM symbols. In one slot, all OFDM symbols may be used for uplink transmission or may be used for downlink transmission; or some may be used for downlink transmission, some may be used for uplink transmission, and some are flexible time domain symbols (which may be flexibly configured to be used for uplink or downlink transmission). It should be understood that the foregoing examples are merely examples for description, and shall not constitute any limitation on this application. In consideration of system forward compatibility, a quantity of OFDM symbols included in a slot and the slot being used for uplink transmission and/or downlink transmission are not limited to the foregoing examples. In this application, a time domain symbol may be an OFDM symbol, to be specific, the time domain symbol may be replaced with the OFDM symbol.

2. Transport block over multi-slot (transport block over multi-slot, TBoMS)

Compared with LTE and long term evolution advanced (long term evolution advanced, LTE-A) wireless communications systems, an NR wireless communications system is deployed on a higher frequency band to obtain a larger communication bandwidth. However, a higher frequency band causes a larger path loss and a larger penetration loss, so that coverage performance of NR is far lower than that of LTE and LTE-A.

To improve coverage performance of NR, a transport block over multi-slot technology is proposed. For example, as shown in FIG. 2, TB#1 to TB#4 are aggregated into a large transport block (transport block, TB). In this technology, small data packets in each slot are aggregated into a large data packet and the aggregated data packet is transmitted in a plurality of slots, so as to reduce a quantity of TB segmentation times to reduce cyclic redundancy code (cyclic redundancy code, CRC) overheads, increase a transport block size (transport block size, TBS) to increase a coding gain, and reduce frequency resources to improve power spectral density and coverage performance.

3. Repeated transmission of type A (type A) and type B (type B)

As described above, in some scenarios, for example, some deep coverage scenarios, such as a cell edge or a basement, a path loss of radio signal propagation is very severe. To improve uplink transmission performance, a method for enhancing coverage performance is to repeatedly send a data block. For example, a terminal device repeatedly sends a PUSCH, and a network device performs combination detection on repeatedly sent data blocks. This manner can improve channel estimation performance, data demodulation performance, and a cell coverage capability.

A current NR protocol is used as an example. In the current NR protocol, a PUSCH can be repeatedly sent a maximum of 16 times, and a PUCCH can be repeatedly sent a maximum of 8 times. In the current NR protocol, repeated transmission of type A is supported for the PUCCH, and repeated transmission of type A and type B is supported for the PUSCH.

(1) Repeated transmission of type A

Repeated transmission of type A means that N consecutive slots need to be scheduled for N repetitions, and a starting location and a total length of a time domain symbol that needs to be occupied in one slot for one repeated transmission are configured. In the N slots, a slot that meets a condition that a starting location and a total length of a time domain symbol occupied for one repeated transmission are the same as a configured starting location and total length may be actually used for one repeated transmission. N is an integer greater than or equal to 1.

(2) Repeated transmission of type B

Repeated transmission of type B means that repeated transmission is performed N times on a plurality of consecutive time domain symbols based on a time domain starting symbol location S of $1^{st}$ repeated transmission and a quantity L of time domain symbols that need to be occupied in each repetition. To be specific, starting from an $S^{th}$ time domain symbol of a scheduled $1^{st}$ slot, subsequent N*L time domain symbols (which may be extended to another slot) are all used for performing repeated transmission N times.

It should be understood that, for specific descriptions of repeated transmission of type A and type B, refer to an existing protocol. The existing protocol does not limit the protection scope of embodiments of this application.

For ease of description, repeated transmission of type A is denoted as a repetition type A (repetition type A) and repeated transmission of type B is denoted as a repetition type B (repetition type B) below.

4. Redundancy version (redundancy version, RV)

Before an information bit string is sent by using a physical antenna, some signal processing processes are generally performed, as shown in FIG. 3.

Channel coding: Redundancy and parity bits are introduced into an information bit string. Therefore, after a signal arrives at a receiving end, the receiving end can better recover the information bit string based on a check relationship between a plurality of received bits (including information and parity bits). For a data channel, currently, NR may support low-density parity-check code (low-density parity-check code, LDPC) channel coding. For example, a 100-bit (bit) information bit string is converted into a 500-bit after-coded bit string through LDPC coding at a 1/5 code rate, and 400-bit redundancy is introduced. A ratio of a length of the information bit string to a length of the after-coded bit string is equal to the 1/5 code rate. For distinguishing, the after-coded bit string is denoted as a coded bit string.

Rate matching (rate matching, RM): Rate matching is performed on each code block (code block, CB), and mainly includes two parts: bit selection (bit selection) and bit interleaving (bit interleaving). The bit selection means sequentially reading some coded bits from a circular buffer (circular buffer) based on a redundancy version (redundancy version, RV), and the bit interleaving means performing row-column interleaving on the some coded bits. Finally, the bits of each code block that are obtained after the bit interleaving are sequentially concatenated, and a codeword (codeword, CW) is output. After a relatively long coded bit string is obtained through channel coding during information bit string transmission, not all coded bit strings are directly sent. Generally, the terminal device may determine, based on a configured quantity of available resource elements (resource element, RE) and a configured modulation order that are indicated by the network device to the terminal device, a quantity of bits that can be sent, and then perform selection from a coded bit string (a current protocol specifies four start points, which are approximately evenly distributed in the coded bit string, and are respectively marked as RV0, RV1, RV2, and RV3).

For example, a quantity of available REs in one current resource block (resource block, RB) is as follows: 12*12=144, and quadrature phase shift keying (quadrature phase shift keying, QPSK) modulation is performed, so that one physical resource block (physical resource block, PRB) can carry 144*2=288 bits. Therefore, 288 bits need to be selected from the 500-bit coded bit string as a selected bit string, and then modulation, resource mapping, and other processing are performed on the selected bit string. In this case, corresponding code rate=information bit string/length of the selected bit string=100/288.

More specifically, rate matching includes bit selection and bit interleaving. Bit selection means selecting coded bits from the circular buffer based on a start point specified by the RV. A selected coded bits length is determined by a size of a mapped time-frequency resource. Bit interleaving means performing row-column interleaving on the selected bits. Therefore, a bit interleaving granularity and a bit selection granularity are consistent, and may be collectively referred to as a rate matching granularity.

For example, if the mapped time-frequency resource is one or more OFDM symbols included in one TO, the length of the selected coded bits is a time-frequency resource on the one TO (code block segmentation is not considered). It may also be understood that the rate matching granularity is the one TO. Specifically, if code block segmentation is not considered, the length of the selected coded bits is the size of the mapped time-frequency resource, and may be represented by using a formula: $N_{TO} = N_{RE} \cdot Q_m \cdot N_L$, where $N_{TO}$ is a quantity of bits that can be carried by a time-frequency resource on one transmission occasion, $Q_m$ is a modulation order, and $N_L$ is a quantity of layers.

5. Repeated RV cycling mechanism

The following uses the repetition type A as an example to describe a current repeated RV cycling mechanism.

It is assumed that an RV indicated by downlink control information (downlink control information, DCI) for scheduling a physical uplink shared channel (physical uplink shared channel, PUSCH) is $rv_{id}$. For the repetition type A, an RV used on an $n^{th}$ transmission occasion of the PUSCH is shown in Table 1. One transmission occasion is defined as one slot. It should be understood that an RV update granularity is one transmission occasion, that is, a used RV needs to be updated on each transmission occasion. An update sequence is determined by an RV sequence, and the RV sequence is {0, 2, 3, 1} by default, that is, the RV is cyclically updated in an order of {0, 2, 3, 1}, and a cycling start point is determined by $rv_{id}$ indicated by the DCI for scheduling the PUSCH. In addition, if RV sequence indication information repK-RV is configured by using higher layer signaling, the RV is updated in an order indicated by repK-RV. For the repetition type B, an RV used for an $n^{th}$ actual repetition of the PUSCH is shown in Table 1. The actual repetition is obtained after a nominal repetition is segmented by a slot boundary and an invalid symbol. The nominal repetition is directly configured by a base station, for example, parameters such as a start and length indicator value (start and length indicator value, SLIV) and a quantity of repetitions K.

**Table 1 Repeated resource mapping mechanism**

| rvid indicated by the DCI for scheduling the PUSCH | Repetition Type A: rvid used on the nth transmission occasion Repetition Type B: rvid used for the nth actual repetition | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

The RV indicates a coded bit carried in one transmission occasion in the circular buffer. Specifically, data obtained after low-density parity-check (low-density parity-check, LDPC) coding is stored in the circular buffer, and is referred to as a coded bit. An RV start point is determined based on $rv_{id}$ in each transmission, and is denoted as $k_0$. Coded bits are sequentially selected from $k_0$ in the circular buffer, and are mapped to a time-frequency resource of one transmission occasion until the time-frequency resource is used up. There are four V start points in total, which are respectively indicated by $rv_{id}=0$, $rv_{id}=1$, $rv_{id}=2$, and $rv_{id}=3$, and are respectively denoted as RV0, RV1, RV2, and RV3. Each RV start point $k_0$ is related to a base graph (basic grapy, BG) used for the LDPC coding, as shown in Table 2, where $N_{cb}$ represents a length of coded bits, and $Z_C$ represents an expansion factor of the LDPC coding.

**Table 2 RV start point location $k_0$**

| rvid | $k_0$ | |
|---|---|---|
| | LDPC BG1 | LDPC BG2 |
| 0 | 0 | 0 |
| 2 | $\left\lceil \dfrac{17 N_{cb}}{66 Z_C} \right\rceil Z_C$ | $\left\lceil \dfrac{13 N_{cb}}{50 Z_C} \right\rceil Z_C$ |

(continued)

| rv$_{id}$ | k$_0$ | |
|---|---|---|
| | LDPC BG1 | LDPC BG2 |
| 3 | $\left\lceil \dfrac{33N_{cb}}{66Z_C} \right\rceil Z_C$ | $\left\lceil \dfrac{25N_{cb}}{50Z_C} \right\rceil Z_C$ |
| 1 | $\left\lceil \dfrac{56N_{cb}}{66Z_C} \right\rceil Z_C$ | $\left\lceil \dfrac{43N_{cb}}{50Z_C} \right\rceil Z_C$ |

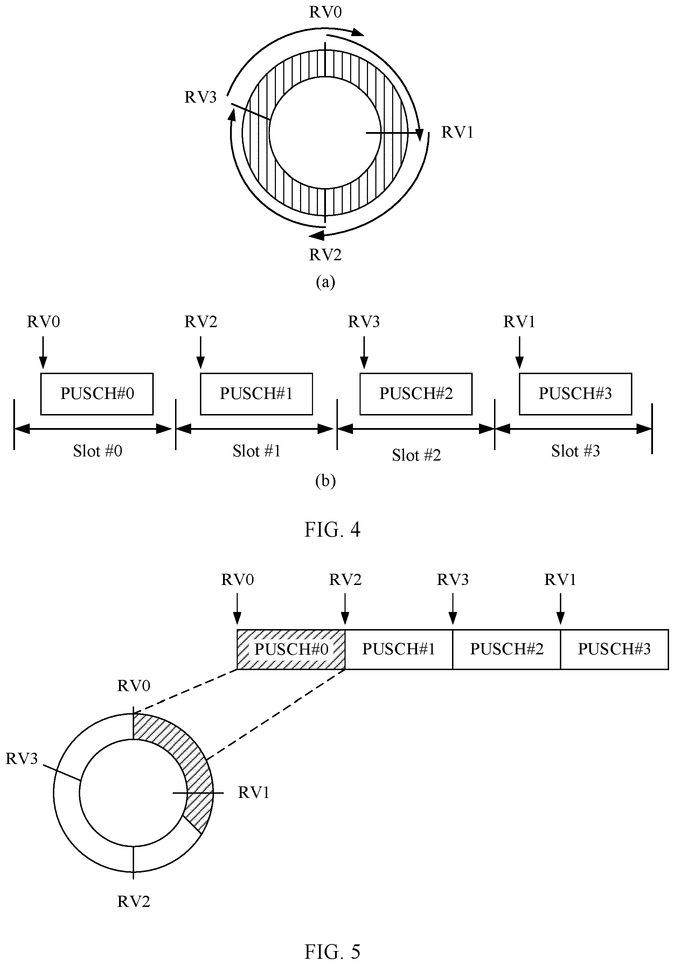

For example, as shown in (a) in FIG. 4, a circular ring represents a circular buffer that stores a coded bit string sequence obtained after channel coding is performed on an information bit, and locations of RV0 to RV3 are determined according to Table 2. (b) in FIG. 4 shows a resource mapping result of TDRA that is based on the repetition type A, and coded bits are sequentially mapped to time-frequency resources on four transmission occasions in an order of the RV sequence {0, 2, 3, 1}.

In the repeated resource mapping mechanism, that is, the RV cycling mechanism, one TB includes only data packets in one slot, and one TBoMS is an aggregation result of data packets in a plurality of slots. In a same quantity of slots, a TBS of the TBoMS is far greater than a repeated TBS. Consequently, it is very likely that information bits cannot be completely sent, and demodulation performance deteriorates.

For example, as shown in FIG. 5, a circular ring represents a circular buffer, and the circular buffer is configured to store a coded bit string sequence obtained after channel coding is performed on an information bit. A blank part in the circular ring is a coded parity bit, and a shadow part in the circular ring is a coded information bit. RV0, RV1, RV2, and RV3 are approximately four equal-division location points of the coded bit sequence. When the RV sequence {0, 2, 3, 1} is used for sending, that is, bits transmitted in different slots are selected from different RV start points (a bit sequence of a specific length is selected) for mapping and sending.

It should be noted that the circular buffer and the circular buffer have consistent meanings throughout the document.

6. Uplink control information (uplink control information, UCI) multiplexing technology

To reduce cross-modulation interference in uplink sending of the terminal device, when a physical uplink control channel (physical uplink control channel, PUCCH) and a PUSCH overlap in time domain, two transmission methods are supported:

(1) when a PUCCH priority is higher than a PUSCH priority, or when a PUCCH priority is the same as a PUSCH priority but a time line condition is not met, discarding PUSCH transmission; and
(2) when the PUCCH priority is the same as the PUSCH priority and the time line condition is met, multiplexing UCI carried on the PUCCH to the PUSCH for transmission.

In the second case, that is, the UCI is multiplexed on the PUSCH for transmission, the UCI includes at least one of a hybrid automatic repeat request-acknowledgment (hybrid automatic repeat request-acknowledgment, HARQ-ACK), channel state information (channel state information, CSI), and configured grant-uplink control information (configured grant-uplink control information, CG-UCI). Briefly descriptions are as follows:

(1) A UCI bit sequence is generated, including at least one of the HARQ-ACK, the CSI, and the CG-UCI.
(2) Code block segmentation is performed on the generated UCI bit sequence, and a cyclic redundancy check (cyclic redundancy check, CRC) code is generated and added.
(3) Channel coding is performed on each code block. The HARQ-ACK and the CSI are independently coded, and a CSI part 1 and a CSI part 2 are independently coded. For the CG-UCI, if no HARQ-ACK is multiplexed on the PUSCH for transmission, the CG-UCI is independently coded; otherwise, the CG-UCI and the HARQ-ACK are jointly coded.
(4) Rate matching is performed on each coded code block, including calculating a quantity of coded modulation symbols of each UCI layer and performing bit selection.
(5) Code block concatenation is performed to concatenate bit sequences that are output through rate matching of each code block.
(6) The UCI bits on which code block concatenation is performed are modulated and then mapped to a specified PUSCH transmission resource.

7. Cancel transmission:

In a communication process, sending resources of some signals may conflict, that is, the resources overlap. However, the terminal device may not have a capability of simultaneously sending the signals. Therefore, some rules need to be defined, to determine signals that need to be preferentially sent when the conflict occurs, so as to ensure that the network device and the terminal device have a consistent understanding, and ensure normal communication. The following lists some conflict processing mechanisms in various conflict scenarios in the conventional technology.

Case 1: A semi-statically configured downlink slot or symbol conflicts with an uplink data channel PUSCH resource.

The network device configures a frame structure for the UE by sending higher layer signaling, to be specific, which slots/or symbols are downlink slots/symbols, which slots/symbols are uplink slots/symbols, and which slots/symbols are flexible. Specifically, the higher layer signaling may be tdd-UL-DL-ConfigurationCommon and tdd-UL-DL-ConfigurationDedicated. Generally, a downlink slot or symbol can be configured to transmit only a downlink signal, an uplink slot or symbol can be configured to transmit only an uplink signal, and a flexible slot or symbol can be configured to transmit an uplink signal or a downlink signal sometimes. If a symbol occupied by the PUSCH overlaps the semi-statically configured downlink symbol, the PUSCH transmission is canceled even if the symbols partially overlap.

Case 2: A dynamically indicated downlink symbol conflicts with a semi-statically configured uplink data channel PUSCH resource.

There are two PUSCH scheduling modes, which are described as follows:
First scheduling mode: Dynamic grant (DG) scheduling, that is, grant-based scheduling. A scheduling network device sends a control information PDCCH to a user. The PDCCH schedules uplink data PUSCH transmission, that is, the PDCCH indicates a PDSCH or PUSCH time domain resource.

Second scheduling mode: Configured grant scheduling. The configured grant scheduling includes two types: a configured grant type 1 and a configured grant type 2. The scheduling mode of the configured grant type 2 is similar to the first dynamic scheduling mode, that is, one PDCCH activates the configured scheduling, and then sends the configured scheduling based on higher layer configuration information. For the configured grant type 1, the network device does not send a control information PDCCH to the user. A location of a time domain resource occupied by data transmission is configured by using higher layer signaling.

The network device may send one PDCCH to carry a DCI format 2_0. The DCI format may indicate that a symbol in one or more slots is an uplink symbol, a downlink symbol, or a flexible symbol. Alternatively, the DCI may schedule a PDSCH or a CSI-RS on some symbols. If a symbol occupied by a PUSCH of the configured grant scheduling overlaps a symbol indicated by the DCI (the DCI may be the DCI format 2_0, or may be DCI for scheduling the downlink data PDSCH or the CSI-RS), processing is performed according to the following rules:
If the terminal device does not report a partial cancellation capability, or the network device does not indicate a partial cancellation capability, and if a starting symbol of the PUSCH is within a time $T_{proc,2}$ after a last symbol of the DCI, transmission of the PUSCH is not canceled; otherwise, transmission of the PUSCH is canceled.

If the terminal device reports the partial cancellation capability, or the network device indicates the partial cancellation capability, only transmission of the PUSCH after the time $T_{proc,2}$ after the last symbol of the DCI is canceled, and transmission of the PUSCH before the time is not canceled.

$T_{proc,2}$ is calculated by using the following formula:

$$T_{proc,2} = \max\left(\left(N_2 + d_{2,1} + d_2\right)(2048 + 144) \cdot \kappa 2^{-\mu} \cdot T_c + T_{ext} + T_{switch}, d_{2,2}\right).$$

Any one of overlapped PUCCH(s) and PUSCH(s) corresponds to the PDCCH, and "correspondence" herein may indicate that the PDCCH is used to schedule PUSCH transmission, or the PDCCH is used to schedule a PDSCH, and the PDCCH indicates a PUCCH carrying PDSCH feedback information.

N2 is a PDSCH preparation time determined based on $\mu$ for a UE processing capability 1 and a UE processing capability 2 respectively according to Table 3 and Table 4, where $\mu$ corresponds to one of ($\mu_{DL}$, $\mu_{UL}$), and a value of $\mu$ meets a maximum value of $T_{proc,2}$. Herein, $\mu_{DL}$ corresponds to a subcarrier spacing of the PDCCH for scheduling the PUSCH, and $\mu_{UL}$ corresponds to a subcarrier spacing of an uplink channel for transmitting the PUSCH. For non-shared spectrum channel access processing, $T_{ext}$=0. If a 1st symbol of the PUSCH includes only a DM-RS, $d_{2,1}$=0; otherwise, $d_{2,1}$=1. If DCI scheduling triggers BWP switching, $d_{2,2}$ is equal to a switching time; otherwise, $d_{2,2}$=0. If a high-priority PUSCH overlaps a low-priority PUCCH, $d_2$ of the high-priority PUSCH is set by a value reported by the UE; otherwise, $d_2=0$.

**Table 3 PUSCH preparation time for a PUSCH timing capability 1**

| $\mu$ | PUSCH preparation time N2 [symbols] |
| --- | --- |
| 0 | 10 |
| 1 | 12 |
| 2 | 23 |
| 3 | 36 |

**Table 4 PUSCH preparation time for a PUSCH timing capability 2**

| $\mu$ | PUSCH preparation time N2 [symbols] |
| --- | --- |
| 0 | 5 |
| 1 | 5.5 |
| 2 | 11 for frequency range 1 |

Case 3: Repeated PUCCH and PUSCH resources conflict.

If the PUCCH is to be sent in N slots, the PUSCH is also to be sent in one slot or some slots, and the PUCCH and the PUSCH may be sent in some slots. In this case, in overlapped slots, the terminal device sends only the PUCCH, and does not send the PUSCH.

Case 4: A resource of a high-priority PUCCH conflicts with a resource of a low-priority PUSCH. A priority of the PUCCH may be indicated in DCI for scheduling a PDSCH, or may be configured by using higher layer signaling. In conclusion, there is a manner of determining whether a priority of a PUCCH is a high priority or a low priority. A priority of a dynamically scheduled PUSCH is indicated in the DCI, and a priority of a scheduled PUSCH is configured by using the higher layer signaling.

Once the resource of the high-priority PUCCH overlaps the resource of the low-priority PUSCH, the low-priority PUSCH is canceled.

Case 5: In a carrier aggregation scenario, a direction of a symbol in a reference cell or another cell conflicts with the PUSCH.

If a plurality of cells are configured for the UE, half-duplex-behavior = 'enable' is configured to indicate that half-duplex collision processing needs to be performed, the UE is incapable of supporting simultaneous transmission and reception in any cell, and the UE reports that the network device can support a half-duplex operation, and blind detection of the DCI format 2_0 is not configured, the following symbol conflicts with the PUSCH, and the PUSCH is canceled: The symbol is indicated by ssb-PositionsInBurst in SIB1 or ssb-PositionsInBurst in ServingCellConfigCommon in any serving cell as a symbol used to receive a synchronization signal (synchronization signal, SS)/physical broadcast channel (physical broadcast channel, PBCH) block.

The symbol is indicated by a tdd-UL-DL-ConfigurationCommon or tdd-UL-DL-ConfigurationDedicated parameter in a reference cell as a downlink symbol, or is configured by higher layer signaling to receive a PDCCH, a PDSCH, or a CSI-RS.

Case 6: Cancellation indication information indicates to cancel PUSCH transmission.

The network device may send cancellation indication information Cancellation indication to the terminal device. The cancellation indication information is carried in a DCI format 2_4. A bitmap specifically indicates a resource location at which a PUSCH is canceled in a reference time-frequency resource. Specifically, a location indicated as 1 indicates cancellation. If at least one of symbols occupied by the PUSCH is indicated as 1, all PUSCHs starting from a 1st symbol indicated as 1 in the PUSCH are canceled.

For example, the PUSCH occupies symbols 2 to 12, and the symbols 3 and 4 are indicated as 1. In this case, the symbol 2 is still reserved, and all PUSCHs from the symbols 3 to 12 are canceled.

Compared with long term evolution LTE and LTE-A wireless communications systems, a 5G NR wireless communications system is deployed on a higher frequency band to obtain a larger communication bandwidth. However, a high frequency band causes a larger path loss and a larger penetration loss, so that coverage performance of NR is far lower than that of LTE and LTE-A. To improve coverage performance, a TBoMS technology is proposed. In this technology, small data packets in each slot are aggregated into a large data packet and the aggregated data packet is transmitted in a plurality of slots, so as to reduce a quantity of TB segmentation times to reduce CRC overheads, increase a TBS to increase a coding gain, and reduce frequency resources to improve power spectral density and coverage performance.

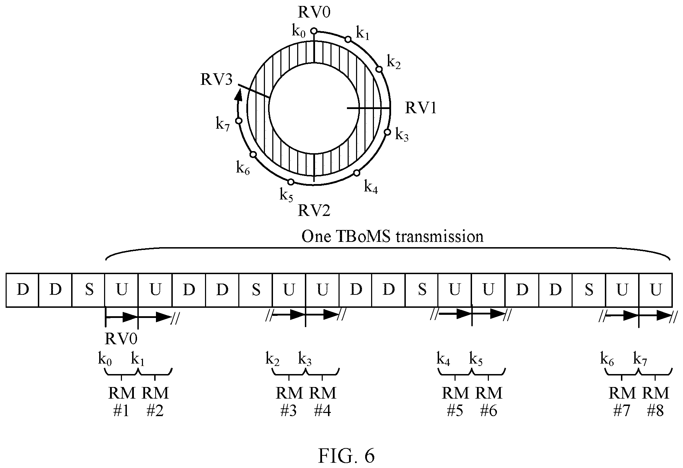

Currently, TBoMS rate matching is performed once in each slot. As shown in FIG. 6, a starting location of current bit selection in rate matching is a next bit of an ending location of previous bit selection, that is,

$$k_i = \begin{cases} k_0, i = 0 \\ l_{i-1} + 1, i = 1,2,\mathrm{L} \end{cases}$$

. $i$ represents a rate matching index; $i$=1,2,L ; $k_i$ represents a location that is in a circular buffer and that is of a starting bit in bit selection in current rate matching; $l_{i-1}$ represents a location that is in the circular buffer and that is of an ending bit in bit selection in previous rate matching; and $k_0$ represents a location that is in the circular buffer and that is of a starting bit in bit selection in 1st rate matching, and is determined by an RV number ($rv_{id}$=0, 1, 2, or 3) in this TBoMS transmission and an LDPC base graph, as shown in Table 2. $N_{cb}$ represents a size of a code block obtained after channel coding/a circular buffer size (length); and $Z_C$ represents an LDPC coding expansion factor (LDPC lifting size).

In 3GPP RAN1#106-e, it is proposed that a formula for calculating an intermediate parameter, that is, an information bit $N_{info}$, in TBS calculation for TBoMS PUSCH transmission is as follows:

$$N_{info} = K \cdot N_{RE} \cdot R \cdot Q_m \cdot N_L$$

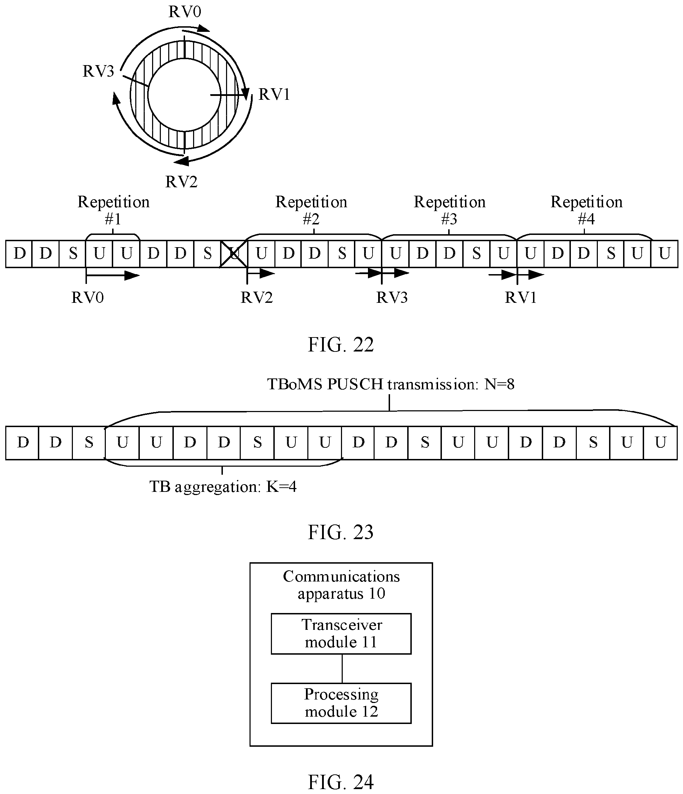

$N_{RE}$ represents a quantity of resource elements (resource element, RE) in one slot; R represents a code rate; $Q_m$ represents a modulation order; $N_L$ represents a quantity of layers; and $K$ is a scaling factor of TBS calculation, and represents that TBs in $K$ slots are aggregated into one large TB. In addition, a quantity N of slots allocated to TBoMS PUSCH transmission indicates that the TB into which the $K$ slots are aggregated is transmitted in the N slots. The quantity N of slots and the scaling factor K meet a condition: K≤N, which means that the quantity of slots for the TB aggregation may be different from the quantity of slots for the TB transmission. As shown in FIG. 23, it is assumed that a time division duplex (time division duplex, TDD) spectrum uplink-downlink slot configuration is DDSUU, N=8, and K=4. In this case, during TBoMS PUSCH transmission, a large TB into which four slots are aggregated is transmitted in eight slots. Currently, in a process in which the terminal device performs rate matching and the network device performs rate de-matching (which may be understood as an inverse processing process of rate matching of the terminal device), a location that is in a circular buffer and that is of a starting bit in bit selection in current rate matching is calculated in real time based on a location that is in the circular buffer and that is of an ending bit in bit selection in previous rate matching. Once one party incorrectly determines the location that is in the circular buffer and that is of the ending bit in bit selection in previous rate matching, starting from the current rate matching, locations of starting bits in bit selection in all rate matching are incorrectly determined, causing error propagation. Consequently, a bit expected to be received by the network device cannot be aligned with a bit sent by the terminal, and a decoding error occurs on a network side. It should be understood that, before the location that is in the circular buffer and that is of the ending bit in bit selection in previous rate matching is calculated, a bit length that is output in previous rate matching needs to be determined. Currently, the bit length that is output in rate matching is generally calculated based on a total quantity of coded bits available for transmission of the TB (G' is the total number of coded bits available for transmission of the transport block). It should be noted that, when the UCI is multiplexed on the PUSCH, the UCI occupies some coded bits originally available for the transmission of the TB. Therefore, when G' is calculated, a total quantity of coded bits occupied by the UCI needs to be deducted from a total quantity of coded bits occupied when the UCI is not multiplexed. The UCI may include at least one of the following: a HARQ-ACK, A-CSI, a CSI part 1, a CSI part 2, CG-UCI, and joint coding of the HARQ-ACK and the CG-UCI. An example in which the UCI is the A-CSI is used below for detailed description.

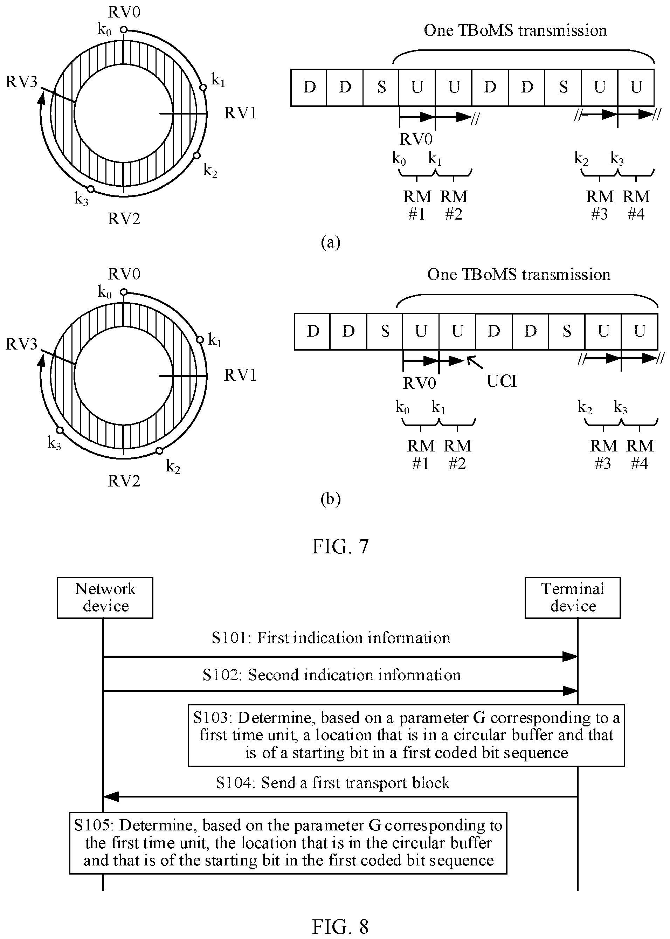

For example, the network device sends a PDCCH to schedule the terminal to report the A-CSI, and the reported A-CSI needs to be multiplexed on the TBoMS transmission. The network device performs rate de-matching on an uplink shared control channel (uplink shared channel, UL-SCH), and determines, in the foregoing manner, a location of a starting bit in bit selection in each rate matching. If the A-CSI is multiplexed on the UL-SCH, when an output bit length is calculated through rate matching, a total quantity of coded bits of the A-CSI needs to be deducted to obtain a total quantity G'G' of coded bits available for the transmission of the TB. Assuming that the A-CSI is multiplexed in a 2nd slot, a length of bits that are available for the transmission of the TB and that are output in 2nd rate matching is smaller than that in another slot. Therefore, a location that is in the circular buffer and that is of a starting bit in 3rd rate matching needs to be advanced. In this case, when performing rate de-matching, the network device also uses, as the length of the bits that are available for the transmission of the TB and that are output in 2nd rate matching, G' that is obtained after the total quantity of coded bits of the A-CSI is deducted. In this case, the network device considers that the terminal device transmits the TB to the network device in an uplink slot shown in (a) in FIG. 7. However, if the terminal device misses detecting the PDCCH, the terminal cannot learn that the A-CSI needs to be reported. Therefore, when the terminal device determines the length of the bits that are available for the transmission of the TB and that are output in 2nd rate matching, the total quantity of coded bits of the A-CSI is not deducted; and when the terminal device determines a location of a starting bit in bit selection in rate matching in a 3rd slot, the total quantity of coded bits of the A-CSI is not deducted to obtain the total quantity G' of coded bits available for the transmission of the TB. In this case, the uplink slot in which the terminal device transmits the TB to the network device is shown in (b) in FIG. 7. It can be learned from comparison between (a) in FIG. 7 and (b) in FIG. 7 that, in this case, the network device and the terminal device do not align locations that are in circular buffers and that are of starting bits in bit selection in each rate matching bit, causing a decoding error of the network device.

The following describes G and G' by using examples. G'=$\Phi$-$\theta$-$\psi$. $\Phi$ is a total quantity of coded bits that can be carried by allocated time-frequency resources, $\theta$ is a quantity of coded bits occupied by a reference signal or another channel, and $\psi$ represents a quantity of coded bits occupied by the UCI, where $\theta$ is greater than or equal to 0. When there is no other reference signal or other channel, $\theta$=0. When there is no UCI occupation, $\psi$ = 0.

In a possible manner (there is no UCI multiplexing), G'=$N_{RE} \times Q_m \times N_L$, where $N_{RE}$, $Q_m$, and $N_L$ respectively represent a quantity of REs, a modulation order, and a quantity of layers.

$N_{RE}$=min(156, $N_{RE}'$) $n_{prb}$, where $n_{prb}$ represents a total quantity of allocated PRBs.

$$N_{RE}' = N_{sc}^{RB} \cdot N_{symb}^{sh} - N_{D,\text{urP}}^{PRB} - N_{oh}^{PRB}$$ , where $N_{sc}^{RB} = 12$ is a quantity of subcarriers in frequency domain in a physical resource block, $N_{symb}^{sh}$ is a quantity L of symbols allocated to the PUSCH, $N_{DMRS}^{PRB}$ is a quantity of DM-RS REs of each PRB in allocated duration and includes that there is no data in a DM-RS CDM group, and $N_{oh}^{PRB}$ is overheads configured by a higher-layer parameter xOverhead of PUSCH-ServingCellConfig.

In another possible manner (there is UCI multiplexing), G'=$N_{RE} \times Q_m \times N_L$-$\psi$.

$\psi$ is not subtracted from G in an uplink transmission method provided in an embodiment of this application in the foregoing two manners.

8. Time domain resource allocation (Time Domain Resource allocation, TDRA) table

A PUSCH-TDRA table is used to configure a time-domain relationship between a PDCCH and a PUSCH. The PUSCH-TDRA table includes one or more PUSCH-TDRAs. The UE determines a bit width of a DCI field based on a quantity of entries in the PUSCH-TDRA table. A value 0 in the DCI field indicates a 1st element in the list, a value 1 in the DCI field indicates a 2nd element in the list, and so on.

PUSCH-TimeDomainResourceAllocationtist-r16 ::= SEQUENCE (S12E (1..maxizofUL-Allocations-r16)) OF PUSCH-TimeDomainResourceAllocacion-r16

PUSCH-TimeDomainResourceAllocation-r16 ::=.-SEQUENCE-{

k2-r16 INTEGER (0..32)........ OPTIONAL, -Need –S

puschAllocationList-r16SEQUENCE-(SIZE (1.. maxNrofMultiplePUSCHs-r16))-OF PUSCH-Allocation-r16,

...

}

PUSCH-Allocation-r16-::=.SEQUENCE{

‖mappingType-r16 ENUMERATED {type A, typeB} OPTIONAL, -Cond NotFormat01-02-0r-TypeA

startSymbolAndLength-r16 INTEGER-(0..127).......OPTIONAL, Cond NotFormat01-02-0r-TypeA

startSymipol-r16-. INTEGER (0..13) OPTIONAL, Cond-RepTypeB

length-r16.....INTEGER-(1..14)........OPTIONAL, Cond -RepTypeB

umberofRepetitions-r16.........ENUMERATED-(n1, n2, .n3, n4, n7, n8, n12, n16) OPTIONAL,. Cond-Format01-02

...

For details, refer to TS 38.331.

9. Filler bit (filler bit)

The filler bit is also referred to as a null bit (NULL) in this application.

It should be understood that LDPC coding requires that a size of a code block obtained before coding is an integer multiple of $Z_c$, where $Z_c$ is an LDPC lifting size. However, after TBS calculation, CRC addition, base graph selection, and code block segmentation, a size of each code block is not necessarily an integer multiple of $Z_c$. Therefore, a filler bit needs to be added after each code block, so that a size of a code block obtained before the LDPC coding is an integer multiple of $Z_c$.

For detailed descriptions of the filler bit, refer to TS 38.212 Section 5.2.2.

The following describes uplink transmission methods provided in this application with reference to FIG. 8 to FIG. 14.

The following describes in detail an uplink transmission method 100 in an embodiment of this application with reference to FIG. 8.

FIG. 8 is a schematic interaction diagram of the method 100 according to this application. The method 100 may be implemented in two different manners based on whether a terminal device detects second indication information.

In a first possible implementation, the terminal device detects the second indication information. S101: A network device sends first indication information to the terminal device, and correspondingly the terminal device receives the first indication information from the network device, where the first indication information indicates the terminal device to send a first transport block in a plurality of time units.

It should be understood that the first transport block herein is one transport block.

It should be noted that the time unit in this application may be understood as an available slot (available slot). Currently, the available slot is jointly determined based on an uplink-downlink slot configuration, a TDRA, and a synchronization signal and physical broadcast channel block (synchronization signal and PBCH block, SSB).

For example, the uplink-downlink slot configuration is DDSUU; and in a slot S, the first 10 symbols are downlink symbols, two symbols in the middle are flexible symbols, and the last two symbols are uplink symbols. The TDRA indicates that a starting slot is 1st D, and indicates that a quantity of slots is 4, a starting symbol S in one slot is a 1st symbol, and a symbol length L is 10. According to the indications of S and L, symbols corresponding to the slot D and the slot S are downlink symbols and cannot be used for TBoMS transmission. Therefore, it may be determined that available slots are four U in DDSUUDDSUU.

For another example, S indicates a 13th symbol, and L=2. In this case, available slots may be the first two S and U in DDSUUDDSUU. Because S and L indicate uplink symbols in the slot S, the slot S may also be used for transmission over multi-slot.

S102: The network device sends second indication information to the terminal device, and correspondingly the terminal device receives the second indication information from the network device, where the second indication information indicates the terminal device to send uplink control information UCI in a first time unit, and the first time unit is one of the plurality of time units.

It should be understood that the first indication information has indicated the terminal device to send the first transport block in the plurality of time units, the second indication information indicates the terminal device to send the UCI in the first time unit, and the terminal device sends, to the network device, the first transport block on which the UCI is multiplexed. The first transport block on which the UCI is multiplexed may be understood as that the first time unit carries the UCI and a coded bit of the first transport block.

S103: The terminal device determines, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units.

It should be understood that, in the plurality of time units, rate matching is performed once in each time unit, and a coded bit sequence is output once. As the next time unit of the first time unit, the location that is in the circular buffer and that is of the starting bit in the coded bit sequence (the foregoing first coded bit sequence) that is output through rate matching in the second time unit is determined based on the parameter G corresponding to the first time unit. Specifically, when the location that is in the circular buffer and that is of the starting bit in the first coded bit sequence is determined based on G, a length of a coded bit sequence that is output through rate matching in the first time unit needs to be first determined based on G, and then the location that is in the circular buffer and that is of the starting bit in the first coded bit sequence is determined based on the length. Alternatively, the location that is in the circular buffer and that is of the starting bit in the first coded bit sequence may be directly determined based on G.

S104: The terminal device sends the UCI and the first transport block to the network device in the plurality of time units.

It should be understood that, during specific implementation, because some time domain resources in the first time unit are used to carry the UCI, in S104, the network device may not be able to completely send the first transport block indicated in S101.

S105: The network device determines, based on the parameter G corresponding to the first time unit, the location that is in the circular buffer and that is of the starting bit in the first coded bit sequence.

It should be understood that a solution in which the network device determines the location that is in the circular buffer and that is of the starting bit in the first coded bit sequence in S105 is similar to a solution in which the terminal device determines the location that is in the circular buffer and that is of the starting bit in the first coded bit sequence in S103.

For details, refer to corresponding descriptions in S203 in the first possible implementation in the method 200.

In this embodiment of this application, the network device indicates the terminal device to include indication information of the UCI in the first time unit; and when the terminal device detects the indication, the total quantity of coded bits of the UCI is not deducted from the parameter G used by the network device and the terminal device to determine the location that is in the circular buffer and that is of the starting bit in the coded bit sequence that is output through rate matching in the second time unit (the next time unit of the first time unit). Therefore, starting from the second time unit, the network device and the terminal device can align locations that are in circular buffers and that are of starting bits in bit selection in each rate matching. This increases a decoding success rate.

In S103, in a possible implementation, the terminal device determines, based on a times of the parameter G corresponding to the first time unit, the location that is in the circular buffer and that is of the starting bit in the first coded bit sequence, where $0 < a \leq 1$. Herein, a is equal to any one of the following numbers: 0.1x, where $0 < x < 10$; 0.2x, where $0 < x < 5$; or 0.01x, where $0 < x < 100$; and x is an integer. For example, a may be any number in 0.1, 0.2, 0.3, ..., 0.9, or 1, or may be any number in 0.2, 0.4, 0.6, 0.8, and 1.

Similarly, when determining, based on aG, the location that is in the circular buffer and that is of the starting bit in the first coded bit sequence, the terminal device needs to first determine, based on aG, the length of the coded bit sequence that is output through rate matching in the first time unit, and then determine, based on the length, the location that is in the circular buffer and that is of the starting bit in the first coded bit sequence.

Correspondingly, the network device also determines, in a same manner, the location that is in the circular buffer and that is of the starting bit in the first coded bit sequence.

The method 100 further includes:

The terminal device determines a length of a second coded bit sequence based on the parameter G corresponding to the first time unit.

For details, refer to descriptions corresponding to step 2 and step 3 in S202 in a second possible implementation in the method 200.

In this embodiment of this application, when the terminal device receives the second indication information, the network device and the terminal device may determine the location that is in the circular buffer and that is of the starting bit in the first coded bit sequence, and the length of the second coded bit sequence in a manner the same as that used when the terminal device does not receive the second indication information. This extends an application scope of the uplink transmission method provided in this application.

In S103, in another possible implementation, the terminal device determines, based on $Z_c$ and the parameter G corresponding to the first time unit, the location that is in the circular buffer and that is of the starting bit in the first coded bit sequence, where $Z_c$ is a low-density parity-check LDPC factor.

Correspondingly, the network device also determines, in a same manner, the location that is in the circular buffer and that is of the starting bit in the first coded bit sequence.

For details, refer to corresponding descriptions in a third possible implementation in the method 200.

It should be understood that, in the conventional technology, when resource mapping is performed on a terminal side, a location that is in the circular buffer and that is of a last bit mapped to a previous time unit needs to be found, resulting in high calculation overheads.

In this embodiment of this application, when resource mapping is performed on the terminal side, a step of searching for a location that is in the first coded bit sequence and that is of the last bit mapped to the previous time unit is reduced, and on the basis of determining, based on G, the location that is in the circular buffer and that is of the starting bit in the first coded bit sequence, the location is determined with reference to $Z_c$. This simplifies calculation in a mapping process and reduces overheads.

In S103, in another possible implementation, the terminal device determines, based on $Z_c$ and a times of the parameter G corresponding to the first time unit, the location that is in the circular buffer and that is of the starting bit in the first coded bit sequence, where $Z_c$ is a low-density parity-check LDPC factor.

Correspondingly, the network device also determines, in a same manner, the location that is in the circular buffer and that is of the starting bit in the first coded bit sequence.

For details, refer to descriptions corresponding to step 2 and step 3 in S202 in a second possible implementation in the method 200.

It should be understood that, in the conventional technology, when resource mapping is performed on a terminal side, a location that is in the circular buffer and that is of a last bit mapped to a previous time unit needs to be found, resulting in high calculation overheads.

In this embodiment of this application, when resource mapping is performed on the terminal side, a step of searching for a location that is in the first coded bit sequence and that is of the last bit mapped to the previous time unit is reduced, and on the basis of determining, based on aG, the location that is in the circular buffer and that is of the starting bit in the first coded bit sequence, the location is determined with reference to $Z_c$. This simplifies calculation in a mapping process and reduces overheads.

The method 100 further includes:

The terminal device maps the second coded bit sequence to a time-frequency resource in the first time unit, where the second coded bit sequence is a coded bit sequence that is output through rate matching in the first time unit, and a quantity of bits in the second coded bit sequence is equal to the parameter G corresponding to the first time unit. The terminal device maps the UCI to some time-frequency resources in the first time unit, to replace some bit sequences in the first coded bit sequence carried in the some time-frequency resources.

It should be noted that, during specific implementation, a bit sequence mapped to a time-frequency resource is not a sequence on which rate matching is performed, and may be mapped to the time-frequency resource only after code block concatenation is performed.

In this embodiment of this application, the UCI is multiplexed in the first time unit in a puncturing manner, so that a bit sequence that is included in the first transport block and that is carried on a time-frequency resource other than a time-frequency resource occupied by the UCI in the first time unit does not change. This increases a decoding success rate and accuracy of the network device. The first indication information further indicates that the network device can send one transport block in the plurality of time units, and the first transport block is one transport block, where the first indication information includes a transport block over multi-slot transmission enabling field, or the first indication information includes a transport block over multi-slot mapping type parameter.

It should be understood that the foregoing solution provides several possible signaling designs of the first indication information. The first indication information may include the transport block over multi-slot transmission enabling field by newly adding a TDRA table to the first indication information. The first indication information may include the transport block over multi-slot mapping type parameter by changing a mappingtype field in the first indication information from 1 bit to 2 bits.

For details, refer to corresponding descriptions in S201 in the method 200.

In this embodiment of this application, that the network device supports a function of transmission over multi-slot is indicated to the terminal device in a plurality of forms, so that signaling designs are enriched, and uplink transmission efficiency is improved.

In the second possible implementation, the terminal device does not detect the second indication information.

For details of S101', refer to corresponding descriptions in S101 in the first possible implementation.

S102': The network device sends the second indication information to the terminal device, where the second indication information indicates the terminal device to send uplink control information UCI in a first time unit, and the first time unit is one of the plurality of time units. However, the terminal device does not detect the second indication information from the network device. Therefore, the terminal device does not send the UCI in the first time unit.

S103': The terminal device determines, based on a parameter G corresponding to the first time unit, a location that is in a circular buffer and that is of a starting bit in a first coded bit sequence, where the parameter G is a total quantity of coded bits available for transmission of the first transport block and the UCI in one time unit, G is a positive integer, and the second time unit is a next time unit of the first time unit in the plurality of time units.

It should be understood that, in this case, because the terminal device does not detect the second indication information, the parameter G corresponding to the first time unit is a total quantity of coded bits available for transmission of the first transport block in the first time unit.

It should be further understood that, in the plurality of time units, rate matching is performed once in each time unit, and a coded bit sequence is output once. As the next time unit of the first time unit, the location that is in the circular buffer and that is of the starting bit in the coded bit sequence (the foregoing first coded bit sequence) that is output through rate matching in the second time unit is determined based on the parameter G corresponding to the first time unit.

Optionally, S103' may be replaced with the following: The terminal device determines, according to the conventional technology, a location that is in a circular buffer and that is of a starting bit in a first coded bit sequence.

S104': The terminal device sends the first transport block to the network device in the plurality of time units.

It should be understood that the terminal device sends the first transport block in the plurality of time units, and the network device considers that the terminal device sends the UCI in the first time unit.

S105': The network device determines, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units.

It should be understood that, although the network device considers that the terminal device sends the UCI in the first time unit, the total quantity of coded bits of the UCI is not deducted from G used by the network device to determine the location that is in the circular buffer and that is of the starting bit in the first coded bit sequence. Therefore, regardless of whether the terminal device determines, based on G in S103', the location that is in the circular buffer and that is of the starting bit in the first coded bit sequence or determines, according to the conventional technology, the location that is in the circular buffer and that is of the starting bit in the first coded bit sequence, the location that is in the circular buffer, that is of the starting bit in the first coded bit sequence, and that is calculated by the terminal device in S103' is consistent with the location that is in the circular buffer, that is of the starting bit in the first coded bit sequence, and that is calculated by the network device in S105'.

In this embodiment of this application, the network device indicates the terminal device to include indication information of the UCI in the first time unit; and when the terminal device does not detect the indication, the total quantity of coded bits of the UCI is not deducted from the parameter G used by the network device and the terminal device to determine the location that is in the circular buffer and that is of the starting bit in the coded bit sequence that is output through rate matching in the second time unit (the next time unit of the first time unit). Therefore, starting from the second time unit, the network device and the terminal device can align locations that are in circular buffers and that are of starting bits in bit selection in each rate matching. This increases a decoding success rate.

In S103', in a possible implementation, the terminal device determines, based on a times of the parameter G corresponding to the first time unit, the location that is in the circular buffer and that is of the starting bit in the first coded bit sequence, where $0 < a \leq 1$. Herein, a is equal to any one of the following numbers: 0.1x, where $0 < x < 10$; 0.2x, where $0 < x < 5$; or 0.01x, where $0 < x < 100$; and x is an integer. For example, a may be any number in 0.1, 0.2, 0.3, ..., 0.9, or 1, or may be any number in 0.2, 0.4, 0.6, 0.8, and 1.

Similarly, when determining, based on aG, the location that is in the circular buffer and that is of the starting bit in the first coded bit sequence, the terminal device needs to first determine, based on aG, the length of the coded bit sequence that is output through rate matching in the first time unit, and then determine, based on the length, the location that is in the circular buffer and that is of the starting bit in the first coded bit sequence.

Correspondingly, the network device also determines, in a same manner, the location that is in the circular buffer and that is of the starting bit in the first coded bit sequence.

It should be understood that, when the terminal device does not detect the second indication information, if the network device calculates the location of the starting bit in the first coded bit sequence based on the parameter G from which the total quantity of coded bits of the UCI is not deducted, there is a gap between the location and an ending bit in a second coded bit sequence. Because the gap is on a network device side, the gap is caused by an RE used to carry the UCI. A gap in systematic bits may cause channel quality to deteriorate.

In this embodiment of this application, G is multiplied by a that is greater than 0 and less than 1, so that the network device can calculate the location that is in the circular buffer and that is of the starting bit in the first coded bit sequence in advance. This shortens a gap between the ending bit in the second coded bit sequence and the starting bit in the first coded bit sequence, and improves channel quality.

The method 100 further includes:

The terminal device determines a length of the second coded bit sequence based on the parameter G corresponding to the first time unit, where the second coded bit sequence is a coded bit sequence that is output through rate matching in the first time unit.

In this embodiment of this application, further, the length of the second coded bit sequence is still calculated based on G. Because G is greater than aG, it can be further ensured that the foregoing gap is eliminated.

In S103, in another possible implementation, the terminal device determines, based on $Z_c$ and the parameter G corresponding to the first time unit, the location that is in the circular buffer and that is of the starting bit in the first coded bit sequence, where $Z_c$ is a low-density parity-check LDPC factor.

Correspondingly, the network device also determines, in a same manner, the location that is in the circular buffer and that is of the starting bit in the first coded bit sequence.

For details, refer to corresponding descriptions in a third possible implementation in the method 200.

It should be understood that, in the conventional technology, when resource mapping is performed on a terminal side, a location that is in the circular buffer and that is of a last bit mapped to a previous time unit needs to be found, resulting in high calculation overheads.

In this embodiment of this application, when resource mapping is performed on the terminal side, a step of searching for a location that is in the first coded bit sequence and that is of the last bit mapped to the previous time unit is reduced, and on the basis of determining, based on G, the location that is in the circular buffer and that is of the starting bit in the first coded bit sequence, the location is determined with reference to $Z_c$. This simplifies calculation in a mapping process and reduces overheads.

In S103, in another possible implementation, the terminal device determines, based on $Z_c$ and a times of the parameter G corresponding to the first time unit, the location that is in the circular buffer and that is of the starting bit in the first coded bit sequence, where $Z_c$ is a low-density parity-check LDPC factor.

Correspondingly, the network device also determines, in a same manner, the location that is in the circular buffer and that is of the starting bit in the first coded bit sequence.

For details, refer to descriptions corresponding to step 2 and step 3 in S202 in a second possible implementation in the method 200.

It should be understood that, in the conventional technology, when resource mapping is performed on a terminal side, a location that is in the circular buffer and that is of a last bit mapped to a previous time unit needs to be found, resulting in high calculation overheads.

In this embodiment of this application, when resource mapping is performed on the terminal side, a step of searching for a location that is in the first coded bit sequence and that is of the last bit mapped to the previous time unit is reduced, and on the basis of determining, based on aG, the location that is in the circular buffer and that is of the starting bit in the first coded bit sequence, the location is determined with reference to $Z_c$. This simplifies calculation in a mapping process and reduces overheads.

The first indication information further indicates that the network device can send one transport block in the plurality of time units, and the first transport block is one transport block, where the first indication information includes a transport block over multi-slot transmission enabling field, or the first indication information includes a transport block over multi-slot mapping type parameter.

It should be understood that the foregoing solution provides several possible signaling designs of the first indication information. The first indication information may include the transport block over multi-slot transmission enabling field by newly adding a TDRA table to the first indication information. The first indication information may include the transport block over multi-slot mapping type parameter by changing a mappingtype field in the first indication information from 1 bit to 2 bits.

For details, refer to corresponding descriptions in S201 in the method 200.

In this embodiment of this application, that the network device supports a function of transmission over multi-slot is indicated to the terminal device in a plurality of forms, so that signaling designs are enriched, and uplink transmission efficiency is improved.

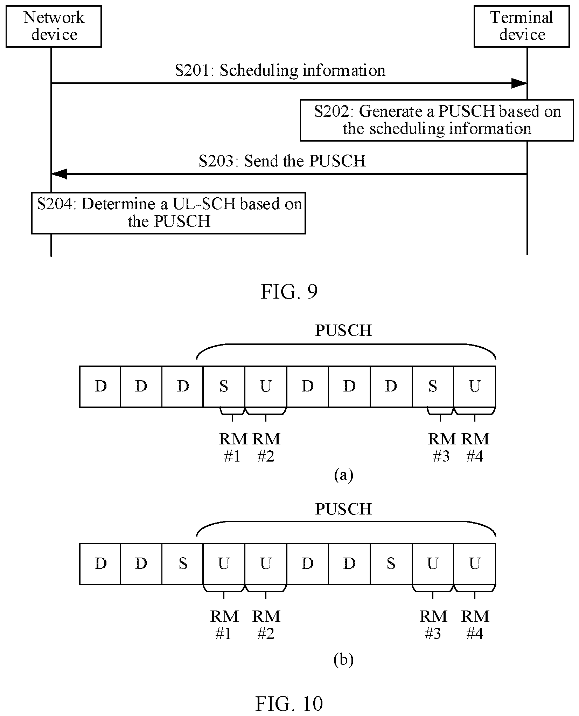

The following describes in detail an uplink transmission method 200 in an embodiment of this application with reference to FIG. 9. FIG. 9 is a schematic interaction diagram of the method 200 according to this application.

Specifically, the method 200 may have a plurality of different implementations. The following uses several different implementations as an example for description. The several different implementations separately provide a method in which a terminal device calculates, based on G corresponding to a time unit #n-1, a location of a starting bit in a bit sequence that is output through rate matching in a time unit #n.

In a first possible implementation, the terminal device calculates, based on G corresponding to the time unit #n-1, the location of the starting bit in the bit sequence that is output through rate matching in the time unit #n, and calculates, based on G corresponding to the time unit #n or G', a length of the bit sequence that is output through rate matching in the time unit #n. If quantities of OFDM symbols included in all time units are different, the time units correspond to different G. If the quantities of OFDM symbols included in all the time units are the same, the time units correspond to same G.

It should be noted that, in the following embodiment, for convenience, an example in which one time unit is equal to one slot is used for description. During specific implementation, one time unit may also be understood as a symbol, a physical slot, an available slot, or the like designed in the term explanation part of this application. This is not limited in this application.

S201: A network device sends scheduling information to the terminal device, where the scheduling information indicates the terminal device to send a PUSCH in a plurality of slots, and the PUSCH carries a UL-SCH corresponding to one TB, or the scheduling information indicates the terminal device to send a TBoMS PUSCH. In addition, the scheduling information further indicates the terminal device to include UCI on the PUSCH.

It should be noted that the terminal device may detect signaling that is in the scheduling information and that indicates the terminal device to include the UCI on the PUSCH, or may not detect the signaling.

It should be understood that the terminal device carries the UCI on the PUSCH in the following several cases. The following provides two common examples.

(1) DCI triggers the terminal device to perform A-CSI measurement and report CSI, and the reported CSI and the PUSCH overlap in time domain.

(2) DCI triggers the terminal device to receive a PDSCH, and send a HARQ-ACK corresponding to the PDSCH on a PUCCH. However, the PUCCH and the PUSCH overlap in time domain, and a priority of the PUCCH is the same as a priority of the PUSCH.

Optionally, the scheduling information further indicates at least one of the following: a quantity of TBoMS slots, a quantity of TBoMS repetitions, a TBS calculation scaling factor, an RV update granularity, and TBoMS transmission enabling.

The following describes several possible signaling designs:

Possible design 1:

The scheduling information indicates that the quantity of TBoMS slots is equal to N, where N is less than or equal to 4, 6, or 8. A specific implementation may be that a field numberOfSlots of 1 bit to 3 bits is newly added to PUSCH-Allocation in RRC signaling PUSCH-TimeDomainResourceAllocationList to indicate the slot quantity N.

A candidate value of N is {1, 2, ..., 8} or subsets thereof. For example, the subsets may be {2, 4}, {2, 4, 6}, {2, 4, 8}, {2, 4, 6, 8}, {2, 4, 7}, {2, 4, 7, 8}, {2, 3, 4, 7, 8}, {1, 2, 4}, {1, 2, 4, 6}, {1, 2, 4, 8}, {1, 2, 4, 6, 8}, {1, 2, 4, 7}, {1, 2, 4, 7, 8}, and {1, 2, 3, 4, 7, 8}.

It should be understood that, if a TBoMS repetition is not supported, the quantity of TBoMS slots indicates only a quantity of slots allocated to one TBoMS transmission. The TBS calculation scaling factor and the RV update granularity are implicitly indicated by the quantity of TBoMS slots. The TBS calculation scaling factor, the RV update granularity, and the quantity of TBoMS slots are all equal to K. The terminal device may determine, in the implicit indication manner, that K=N.

Whether the network device enables a TBoMS transmission function may be explicitly or implicitly indicated to the terminal device. There are three possible explicit indication methods:

(1) A TDRA table dedicated to TBoMS time domain resource allocation is newly added based on an existing TDRA table.

PUSCH-TimeDomainResourceAllocationListTBoMS.

It should be understood that, compared with another TDRA table, the foregoing newly added TDRA table has a highest priority. In other words, if the newly added TDRA table is configured, the TDRA table takes effect, and the another TDRA does not take effect. Therefore, if the newly added TDRA table is configured, TBoMS transmission is enabled; otherwise, TBoMS transmission is not enabled. The another TDRA table includes:

- pusch-TimeDomainAllocationList
- pusch-TimeDomainAllocationListDCI-0-1
- pusch-TimeDomainAllocationListDCI-0-2
- pusch-TimeDomainAllocationListForMultiPUSCH

(2) A 1-bit field enableTBoMS is newly added to PUSCH-Allocation in RRC signaling PUSCH-TimeDomain-ResourceAllocationList. If the field is 0 or is not configured, it indicates that TBoMS transmission is not enabled; otherwise, TBoMS transmission is enabled.

(3) A field mappingType in PUSCH-Allocation in RRC signaling PUSCH-TimeDomainResourceAllocationList is changed from 1 bit to 2 bits, indicating {typeA, typeB, TBoMS}. Herein, "10" or "11" indicates TBoMS transmission.

Optionally, if TBoMS transmission is explicitly enabled, but the quantity of TBoMS slots is: N=1, TBoMS transmission is not enabled. The implicit indication method is as follows: When the quantity of TBoMS slots is greater than 1, it indicates that TBoMS transmission is enabled. If the quantity of TBoMS slots is equal to 1 or the quantity of TBoMS slots is not configured, it indicates that TBoMS transmission is not enabled.

Possible design 2:

Based on the possible design 1, the scheduling information further indicates the quantity of TBoMS repetitions $N_{rep}$, which is indicated by an existing field numberOfRepetitions in PUSCH-Allocation in RRC signaling PUSCH-Time-DomainResourceAllocationList.

It should be understood that, in this case, a TBoMS repetition is supported, and a total quantity of slots for the TBoMS repetition is equal to $N \times N_{rep}$. Optionally, the total quantity of slots is not expected to exceed 16, 24, or 32.

Possible design 3:

The scheduling information indicates the quantity of TBoMS slots. The quantity of slots is less than or equal to 4, 6, or 8, and is indicated by an existing field numberOfRepetitions in PUSCH-Allocation in RRC signaling PUSCH-TimeDomainResourceAllocationList. A candidate value is {1, 2, ..., 8} or subsets thereof. For example, the subsets may be {2, 4}, {2, 4, 6}, {2, 4, 8}, {2, 4, 6, 8}, {2, 4, 7}, {2, 4, 7, 8}, {2, 3, 4, 7, 8}, {1, 2, 4}, {1, 2, 4, 6}, {1, 2, 4, 8}, {1, 2, 4, 6, 8}, {1, 2, 4, 7}, {1, 2, 4, 7, 8}, and {1, 2, 3, 4, 7, 8}.

It should be understood that, if a TBoMS repetition is not supported, the quantity of TBoMS slots indicates only a quantity of slots allocated to one TBoMS transmission. The TBS calculation scaling factor and the RV update granularity are implicitly indicated by the quantity of TBoMS slots. The TBS calculation scaling factor, the RV update granularity, and the quantity of TBoMS slots are all equal to K. The terminal device may determine, in the implicit indication manner, that K=N.

In addition, because the quantity of slots is indicated by the existing field numberOfRepetitions, two functions, namely, repetition and TBoMS, cannot be distinguished in the conventional technology. Therefore, new signaling needs to be added to explicitly indicate whether TBoMS transmission is enabled. For details, refer to the three explicit indication methods in the possible design 1.

Possible design 4:

The scheduling information indicates the quantity of TBoMS slots. The quantity of slots is less than or equal to 16, 24, or 32, and is indicated by an existing field numberOfRepetitions in PUSCH-Allocation in RRC signaling PUSCH-TimeDomainResourceAllocationList. The field has 3 bits or 4 bits. A candidate value is {1, 2, ..., 32} or subsets thereof. For example, the subsets may be {1, 2, 3, 4, 7, 8, 12, 16}, {1, 2, 3, 4, 7, 8, 12, 16, 20}, {1, 2, 3, 4, 7, 8, 12, 16, 24}, {1, 2, 3, 4, 7, 8, 12, 16, 28}, {1, 2, 3, 4, 7, 8, 12, 16, 32}, {1, 2, 3, 4, 7, 8, 12, 16, 20, 24}, {1, 2, 3, 4, 7, 8, 12, 16, 20, 28}, {1, 2, 3, 4, 7, 8, 12, 16, 20, 32}, {1, 2, 3, 4, 7, 8, 12, 16, 24, 28}, {1, 2, 3, 4, 7, 8, 12, 16, 24, 32}, {1, 2, 3, 4, 7, 8, 12, 16, 28, 32}, {1, 2, 3, 4, 7, 8, 12, 16, 20, 24, 28}, {1, 2, 3, 4, 7, 8, 12, 16, 20, 24, 32}, {1, 2, 3, 4, 7, 8, 12, 16, 20, 28, 32}, {1, 2, 3, 4, 7, 8, 12, 16, 24, 28, 32}, and {1, 2, 3, 4, 7, 8, 12, 16, 20, 24, 28, 32}.

The scheduling information indicates the TBS calculation scaling factor. A value of the scaling factor is equal to K, and K is less than or equal to 4, 6, or 8. A new field scalingFactor of 1 bit to 3 bits is added to PUSCH-Allocation in the RRC signaling PUSCH-TimeDomainResourceAllocationList to indicate the scaling factor. A candidate value is {1, 2, ..., 8} or subsets thereof. For example, the subsets may be {2, 4}, {2, 4, 6}, {2, 4, 8}, {2, 4, 6, 8}, {2, 4, 7}, {2, 4, 7, 8}, {2, 3, 4, 7, 8}, {1, 2, 4}, {1, 2, 4, 6}, {1, 2, 4, 8}, {1, 2, 4, 6, 8}, {1, 2, 4, 7}, {1, 2, 4, 7, 8}, and {1, 2, 3, 4, 7, 8}.

Optionally, it is not expected that N or K is not an integer.

It should be understood that, if K=N, it is not a TBoMS repetition essentially, and the quantity of slots represents only a quantity of slots allocated to one TBoMS transmission; or if K<N, it is a TBoMS repetition essentially, the quantity of slots represents a total quantity of slots including transmission of a TBoMS repetition, and K represents a quantity of slots for one TBoMS transmission, and if N/K is an integer, a quantity of TBoMS repetitions is N/K. The RV update granularity is K slots. It is not expected that K>N.

Whether to enable a TBoMS transmission function may be explicitly or implicitly indicated. The explicit indication is shown in the three explicit indication methods in the possible design 1. Optionally, if TBoMS transmission is explicitly enabled, but K=1 or K>N, TBoMS transmission is not enabled. The implicit indication method is as follows: If the TBS calculation scaling factor K is configured, K≠1, and K ≤ N, it indicates that TBoMS transmission is enabled; otherwise (that is, the scaling factor K is not configured, or K is configured but K=1 or K>N), TBoMS transmission is not enabled.

Possible design 5:

The scheduling information indicates the quantity of TBoMS slots. The quantity of slots is less than or equal to 16, 24, or 32. A new field numberOfSlots of 3 bits or 4 bits is added to PUSCH-Allocation in RRC signaling PUSCH-TimeDomainResourceAllocationList to indicate the quantity of slots N. A candidate value is {1, 2, ..., 32} or subsets thereof. For example, the subsets may be {1, 2, 3, 4, 7, 8, 12, 16}, {1, 2, 3, 4, 7, 8, 12, 16, 20}, {1, 2, 3, 4, 7, 8, 12, 16, 24}, {1, 2, 3, 4, 7, 8, 12, 16, 28}, {1, 2, 3, 4, 7, 8, 12, 16, 32}, {1, 2, 3, 4, 7, 8, 12, 16, 20, 24}, {1, 2, 3, 4, 7, 8, 12, 16, 20, 28}, {1, 2, 3, 4, 7, 8, 12, 16, 20, 32}, {1, 2, 3, 4, 7, 8, 12, 16, 24, 28}, {1, 2, 3, 4, 7, 8, 12, 16, 24, 32}, {1, 2, 3, 4, 7, 8, 12, 16, 28, 32}, {1, 2, 3, 4, 7, 8, 12, 16, 20, 24, 28}, {1, 2, 3, 4, 7, 8, 12, 16, 20, 24, 32}, {1, 2, 3, 4, 7, 8, 12, 16, 20, 28, 32}, {1, 2, 3, 4, 7, 8, 12, 16, 24, 28, 32}, and {1, 2, 3, 4, 7, 8, 12, 16, 20, 24, 28, 32}.

The scheduling information indicates the TBS calculation scaling factor. A value of the scaling factor is K, and K is less than or equal to 4, 6, or 8. An existing field numberOfRepetitions 1 bit to 3 bits in PUSCH-Allocation in the RRC signaling PUSCH-TimeDomainResourceAllocationList indicates the scaling factor. A candidate value is subsets of {1, 2, ..., 8}. For example, the subsets may be {1, 2, 3, 4, 7, 8, 12, 16}, {1, 2, 3, 4, 7, 8, 12, 16, 20}, {1, 2, 3, 4, 7, 8, 12, 16, 24}, {1, 2, 3, 4, 7, 8, 12, 16, 28}, {1, 2, 3, 4, 7, 8, 12, 16, 32}, {1, 2, 3, 4, 7, 8, 12, 16, 20, 24}, {1, 2, 3, 4, 7, 8, 12, 16, 20, 28}, {1, 2, 3, 4, 7, 8, 12, 16, 20, 32}, {1, 2, 3, 4, 7, 8, 12, 16, 24, 28}, {1, 2, 3, 4, 7, 8, 12, 16, 24, 32}, {1, 2, 3, 4, 7, 8, 12, 16, 28, 32}, {1, 2, 3, 4, 7, 8, 12, 16, 20, 24, 28}, {1, 2, 3, 4, 7, 8, 12, 16, 20, 24, 32}, {1, 2, 3, 4, 7, 8, 12, 16, 20, 28, 32}, {1, 2, 3, 4, 7, 8, 12, 16, 24, 28, 32}, and {1, 2, 3, 4, 7, 8, 12, 16, 20, 24, 28, 32}.

Optionally, it is not expected that N/K is not an integer.

It should be understood that a difference between the possible design 4 and the possible design 5 lies in a specific signaling indication.

Possible design 6:

The scheduling information indicates the quantity of TBoMS slots. A value of the quantity of slots is N, and N is less than or equal to 16, 24, or 32. A new field numberOfSlots of 3 bits or 4 bits is added to PUSCH-Allocation in RRC signaling PUSCH-TimeDomainResourceAllocationList to indicate the quantity of slots N. A candidate value is {1, 2, ..., 32} or subsets thereof. For example, the subsets may be {1, 2, 3, 4, 7, 8, 12, 16}, {1, 2, 3, 4, 7, 8, 12, 16, 20}, {1, 2, 3, 4, 7, 8, 12, 16, 24}, {1, 2, 3, 4, 7, 8, 12, 16, 28}, {1, 2, 3, 4, 7, 8, 12, 16, 32}, {1, 2, 3, 4, 7, 8, 12, 16, 20, 24}, {1, 2, 3, 4, 7, 8, 12, 16, 20, 28}, {1, 2, 3, 4, 7, 8, 12, 16, 20, 32}, {1, 2, 3, 4, 7, 8, 12, 16, 24, 28}, {1, 2, 3, 4, 7, 8, 12, 16, 24, 32}, {1, 2, 3, 4, 7, 8, 12, 16, 28, 32}, {1, 2, 3, 4, 7, 8, 12, 16, 20, 24, 28}, {1, 2, 3, 4, 7, 8, 12, 16, 20, 24, 32}, {1, 2, 3, 4, 7, 8, 12, 16, 20, 28, 32}, {1, 2, 3, 4, 7, 8, 12, 16, 24, 28, 32}, and {1, 2, 3, 4, 7, 8, 12, 16, 20, 24, 28, 32}.

The scheduling information indicates the quantity of TBoMS repetitions $N_{rep}$, which is indicated by an existing field numberOfRepetitions in PUSCH-Allocation in RRC signaling PUSCH-TimeDomainResourceAllocationList.

It should be understood that, in this case, the TBoMS repetition is supported, the quantity of repetitions is indicated by $N_{rep}$, and the quantity of slots indicates a quantity of all slots allocated to the TBoMS repetition. The TBS calculation scaling factor and the RV update granularity are jointly indicated by the quantity of TBoMS repetitions $N_{rep}$ and the quantity of slots, that is, $K=N/N_{rep}$. Therefore, it is not expected that $N/N_{rep}$ is not an integer.

Whether to enable a TBoMS transmission function may be explicitly or implicitly indicated. The explicit indication is shown in the three explicit indication methods in the possible design 1. Optionally, if TBoMS transmission is explicitly enabled, but $N_{rep} \geq N$ or $N/N_{rep}$ is not an integer, TBoMS transmission is not enabled. The implicit indication method is as follows: If $N_{rep}<N$ and $N/N_{rep}$ is an integer, TBoMS transmission is enabled; otherwise, TBoMS transmission is not enabled.

Optionally, when the terminal device is scheduled to send a PUSCH, the PUSCH does not carry a TB but carries CSI for reporting, TBoMS time domain resource allocation is not expected to be performed to send the PUSCH.

The foregoing describes six signaling designs of the scheduling information.

S202: Generate the PUSCH based on the scheduling information.

The terminal device performs rate matching based on the scheduling information, to generate the UL-SCH.

It should be understood that, in addition to rate matching, generating the UL-SCH further includes processes such as TBS calculation, code block segmentation, LDPC coding, code block concatenation, resource mapping, and modulation. Because these processes may be performed according to the conventional technology, details are not described in this application. Specifically, in step 1, the terminal device determines, based on the quantity of slots that are indicated by the scheduling information and that are for sending the PUSCH, a quantity of times of performing rate matching and a time unit in which each rate matching is performed.

Optionally, the quantity of times of performing rate matching is equal to the quantity of slots for sending the PUSCH, and is equal to N. It should be understood that rate matching is performed once in each slot, and a bit length that is output in each rate matching is determined by an available time-frequency resource in one slot.

For example, as shown in (a) in FIG. 10, an uplink-downlink slot configuration is DDDSU, and the quantity of slots for sending the PUSCH is equal to 4. Assuming that both a slot S and a slot U can be used to send the PUSCH, a quantity of times of rate matching is equal to 4, a time unit for performing rate matching RM#0/RM#2 is the slot S, and a time unit for performing rate matching RM#1/RM#3 is the slot U.

For example, as shown in (b) in FIG. 10, an uplink-downlink slot configuration is DDSUU, and the quantity of slots for sending the PUSCH is equal to 4. Assuming that only a slot U is used to send the PUSCH, a quantity of times of rate matching is equal to 4, and a time unit for performing each rate matching is the slot U.

How to determine a bit sequence that is output through rate matching is described in detail by performing step 2 to step 4 subsequently.

In step 2, a length of the bit sequence that is output through rate matching is calculated based on the parameter G in the uplink transmission method provided in this application, and is denoted as $E_r$; in step 3, a start point of the bit sequence that is output through rate matching is determined based on $E_r$; and in step 4, the terminal device performs bit selection based on a starting bit location and the bit length $E_r$, to determine the output bit sequence. Alternatively, in step 2, a length $E_r'$ of the bit sequence that is output through rate matching is calculated based on the parameter G' in the conventional technology; in step 3, a length of the bit sequence that is output through rate matching is calculated based on the parameter G in the uplink transmission method provided in this application, and is denoted as $E_r$, and a start point of the bit sequence that is output through rate matching is determined based on $E_r$; and in step 4, the terminal device performs bit selection based on a starting bit location and the bit length $E_r'$, to determine the output bit sequence.

In a case in which there is only one code block, because $E_r=G$, step 2 and step 3 may alternatively be simplified as follows: Step 2 is not performed, and in step 3, the start point of the bit sequence that is output through rate matching may be directly determined based on G.

Before step 2 to step 4 are specifically described, the following first uses (b) in FIG. 7 as an example to describe a main difference between G and G'. It is assumed that UCI needs to be multiplexed in a slot corresponding to RM#2. In this case, in the solution in the conventional technology, when a location that is in a circular buffer and that is of a starting bit in a bit sequence that is output in a slot corresponding to RM#3 is calculated, a total quantity G' of used coded bits is only a total quantity of coded bits available for transmission of the TB, that is, G' does not include a total quantity of coded bits occupied by the UCI. However, in this embodiment of this application, when a location that is in a circular buffer and that is of a starting bit in a bit sequence that is output in a slot corresponding to RM#3 is calculated, a total quantity G of coded bits includes a total quantity of coded bits available for transmission of the TB and a total quantity of coded bits occupied by the UCI.

Step 2: The terminal device determines the bit length that is output through rate matching.

It should be understood that the terminal device needs to determine, based on the total quantity G of coded bits or G', the bit length that is output through rate matching. However, G or G' may be determined by the terminal device, or may be indicated by the network device (for example, indicated by using RRC or DCI).

It should be further understood that, if time domain resources available for uplink transmission in different time units are different, for example, quantities of OFDM symbols included in a special slot and an uplink slot are different, different slots also have different G or G'. Therefore, the terminal device needs to separately determine different G or G'. based on different slots.

When the bit length is determined based on G or G', the following also describes a method of determining the bit length based on that quantities of OFDM symbols included in all time units are the same or are different.

1. Calculate $E_r$ based on G

(1) The quantities of OFDM symbols included in all the time units are different.

The terminal device determines, based on a total quantity $G_n$ of coded bits available for transmission of the TB in the time unit #n, a bit length $E_{r,n}$ that is output through rate matching of a code block #r in the time unit #n, where r=0, 1, ..., or C-1, n=0, 1, ..., or N-1, and C is a quantity of code blocks. For example, the terminal device determines the bit length $E_{r,n}$, as shown in Algorithm 1, where C' is a quantity of scheduled code blocks.

Optionally, the total quantity $G_n$ of coded bits is determined by a total quantity $N_{RE,n}$ of REs allocated to the PUSCH in the time unit #n, and the total quantity of coded bits occupied by the UCI is not deducted. For example, $G_n = N_{RE,n} \times Q_m \times N_L$, where $Q_m$ represents a modulation order, and $N_L$ represents a quantity of layers.

It should be understood that, regardless of whether the terminal device multiplexes the UCI and the UL-SCH, a payload size of the UCI is not deducted from calculation of $G_n$. Specifically, if the terminal device misses detecting scheduling information indicating that the UCI is multiplexed with the UL-SCH, the terminal device naturally cannot learn of a size of the coded bits occupied by the UCI. If the terminal device detects the scheduling information indicating that the UCI is multiplexed with the UL-SCH and the UCI is multiplexed on the UL-SCH, $G_n$ is not deducted. For example, (a) in FIG. 10 is used as an example. It is assumed that an allocated time unit is an available slot, and it is assumed that both the slot S and the slot U are considered as available slots. A quantity of time units is equal to 4, a quantity of available symbols in the slot S is 4, a quantity of available symbols in the slot U is 13, and a quantity of RBs is 40. In this case, $N_{RE,0} = N_{RE,2} = 1920$, and $N_{RE,1} = N_{RE,3} = 6240$. In addition, it is assumed that $Q_m = 2$, $N_L = 1$, and C'=C=2. In this case, $G_0 = G_2 = 3840$, and $G_1 = G_3 = 12480$. Therefore, $E_{0,0} = E_{1,0} = E_{0,2} = E_{1,2} = 960$, and $E_{0,1} = E_{1,1} = E_{0,3} = E_{1,3} = 3900$.

---

Algorithm 1:

---

Set j=0

for n=0 to N−1

for r=0 to C−1

if CBGTI indicates that an $r^{th}$ code block is not scheduled for transmission

$E_{r,n} = 0$;

else

If $j \leq C' - mod\left(G_n / \left(N_L \cdot Q_m\right), C'\right) - 1$

$E_{r,n} = N_L \cdot Q_m \cdot \left\lfloor \dfrac{G_n}{N_L \cdot Q_m \cdot C'} \right\rfloor$;

else

$E_{r,n} = N_L \cdot Q_m \cdot \left\lceil \dfrac{G_n}{N_L \cdot Q_m \cdot C'} \right\rceil$;

end if

$j = j + 1$;

end if

end for

| Algorithm 1: |
| --- |
| end for |

(2) The quantities of OFDM symbols included in all the time units are the same, and a manner of calculating the bit length based on G is as follows:

The terminal device determines, based on a total quantity G of coded bits available for transmission of the TB in one time unit corresponding to one rate matching, a bit length $E_r$ that is output through rate matching of a code block #r in the time unit #n, where r=0, 1, ..., or C-1, and n=0, 1, ..., or N-1. For example, the terminal device determines the bit length $E_r$, as shown in Algorithm 2.

Optionally, the total quantity G of coded bits is determined by a total quantity $N_{RE}$ of REs allocated to the PUSCH in one time unit, and a size of the coded bits of the UCI is not deducted. For example, $G = N_{RE} \times Q_m \times N_L$, where $Q_m$ represents a modulation order, and $N_L$ represents a quantity of layers. It should be understood that, in this case, a total quantity of REs allocated to the PUSCH in a time unit in which each rate matching is performed remains consistent.

For example, (b) in FIG. 10 is used as an example. Assuming that N=4, a quantity of available symbols in each slot U is 13, and a quantity of RBs is 40, $N_{RE}$=6240. In addition, assuming that $Q_m$=2, $N_L$=1, C'=C=3, G=12480. In this case, $E_0 = E_1 = E2 = 4160$ .

| Algorithm 2: |
| --- |
| Set j=0 |
| for r=0 to C−1 |
| if CBGTI indicates that the code block #$r$ is not scheduled for transmission |
| $E_r = 0$ ; |
| else |
| if $j \leq C' - mod\left(G/\left(N_L \cdot Q_m\right), C'\right) - 1$ |
| $E_r = N_L \cdot Q_m \cdot \left\lfloor \dfrac{G}{N_L \cdot Q_m \cdot C'} \right\rfloor$ ; |
| else |
| $E_r = N_L \cdot Q_m \cdot \left\lceil \dfrac{G}{N_L \cdot Q_m \cdot C'} \right\rceil$ ; |
| end if |
| $j = j + 1$ ; |
| end if |

| Algorithm 2: |
| --- |
| end for |

2. Calculate $E_r$' based on G'

(1) The quantities of OFDM symbols included in all the time units #n are different.

A manner of calculating $E_{r,n}$' based on $G_n$' is similar to the manner (1) of calculating $E_{r,n}$ based on $G_n$. A difference is as follows:
All $G_n$ is replaced with $G_n$', and all $E_{r,n}$ is replaced with $E_{r,n}$'. The total quantity $G_n$' of coded bits is determined by a total quantity $N_{RE,n}$ of REs allocated to the PUSCH in the time unit #n, and the total quantity of coded bits occupied by the UCI is deducted. For example, the total quantity $G_n$ of coded bits is determined by the total quantity $N_{RE,n}$ of REs allocated to the PUSCH in the time unit #n (the total quantity of coded bits occupied by the UCI is not deducted). For example, $G_n = N_{RE,n} \times Q_m \times N_L$, and $G_n' = N_{RE,n} \times Q_m \times N_L - \psi$, where $Q_m$ represents a modulation order, $N_L$ represents a quantity of layers, and $\psi$ represents the total quantity of coded bits occupied by the UCI.

(2) The quantities of OFDM symbols included in all the time units #n are the same.

A manner of calculating $E_r$' based on G' is similar to the manner (2) of calculating $E_r$ based on G. A difference is as follows:
All G is replaced with G', and all $E_r$ needs to be replaced with $E_r$'. The total quantity G of coded bits is determined by a total quantity $N_{RE}$ of REs allocated to the PUSCH in one time unit, and the total quantity C of coded bits is determined by the total quantity $N_{RE}$ of REs allocated to the PUSCH in one time unit, and the total quantity of coded bits occupied by the UCI is not deducted. For example, $G = N_{RE} \times Q_m \times N_L$, and $G' = N_{RE} \times Q_m \times N_L - \psi$, where $Q_m$ represents a modulation order, $N_L$ represents a quantity of layers, and $\psi$ represents the total quantity of coded bits occupied by the UCI.
Step 3: The terminal device determines a starting bit location in bit selection in rate matching.
It should be understood that the terminal device determines the starting bit location in bit selection in rate matching based on the bit length $E_r$ that is output through rate matching.
The following provides several possible implementations.

Possible implementation 1:

The terminal device determines, based on a location $k_{r,n-1}$ of a starting bit in bit selection of a code block #r in the time unit #n-1, a bit length $E_{r,n-1}$, and an RV update time interval K, a location $k_{r,n}$ of a starting bit in bit selection in rate matching of the code block #r in the time unit #n. For example, the terminal device determines, based on Algorithm 3 or based on the following formula, the location $k_{r,n}$ of the starting bit in bit selection in rate matching of the code block #r in the time unit #n:

$$ k_{r,n} = \begin{cases} k_0, & n = mK \\ \mod\left( k_0 + \sum_{k=0}^{n-1} E_{r,k}, N_{cb} \right), & otherwise \end{cases} $$

Herein, m is an integer, $k_0$ represents an offset of the starting bit in bit selection, and $N_{cb}$ represents a size of a code block that is finally stored in the circular buffer after LDPC coding. It should be understood that $k_0$ is jointly determined based on an RV index $rv_{id}$ and a BG. The RV index $rv_{id}$ is determined based on a start RV and an RV sequence. When n is an integer multiple of K, the location $k_{r,n}$ of the starting bit in bit selection in rate matching of the code block #r in the time unit #n is determined by $k_0$, that is, specified by the RV When n is not an integer multiple of K, the location $k_{r,n}$ of the starting bit in bit selection in rate matching of the code block #r in the time unit #n is determined by the location $k_{r,n-1}$ of the starting bit in bit selection in rate matching of the code block #r in the time unit #n-1 and the bit length $E_{r,n-1}$.

**Algorithm 3:**

for $n = 0$ to N−1

if $n = mK$

$k_{r,\mathrm{n}} = k_0$ ;

else

$k_{r,n} = \mathrm{mod}\left(k_{r,n-1} + E_{r,n-1}, N_{cb}\right)$ ;

end if

end for

Possible implementation 2:

The terminal device determines, based on a bit length $E_r$ that is output through one rate matching of a code block #r, and an RV update time interval K, a location $k_{r,n}$ of a starting bit in bit selection in rate matching of the code block #r in the time unit #n.

For example, the terminal device determines, based on the following formula, the location $k_{r,n}$ of the starting bit in bit selection in rate matching of the code block #r in the time unit #n, where m is an integer.

$$k_{r,n} = \begin{cases} k_0, & n = mK \\ mod\left(k_0 + nE_r, N_{cb}\right), & otherwise \end{cases}$$

It should be understood that, in this case, a total quantity of REs allocated to the PUSCH in a time unit in which each rate matching is performed remains consistent.

Possible implementation 3:

The terminal device determines, based on a location $k_{r,n-1}$ of a starting bit in bit selection in rate matching #n-1 of a code block #r, a bit length $E_{r,n-1}$, a quantity of NULL bits, and an RV update time interval K, a location $k_{r,n}$ of a starting bit in bit selection in rate matching #n of the code block #r.

For example, the terminal device determines, based on Algorithm 4, the location $k_{r,n}$ of the starting bit in bit selection in rate matching #n of the code block #r. Herein, m is an integer, $K_{NULL}'$ represents a size of a code block obtained before a NULL bit is inserted, $K_{NULL}$ represents a size of a code block obtained after the NULL bit is inserted, $Z_c$ represents an LDPC expansion factor, $K_{NULL}' - 2Z_c$ represents a quantity of systematic bits, $K_{NULL} - K_{NULL}'$ represents a quantity of NULL bits, and $N_{cb}-(K_{NULL}-K_{NULL}')$ represents a quantity of non-NULL bits in the circular buffer. $k_0$, $N_{cb}$, $K_{NULL}$, $K_{NULL}'$, $Z_c$, and the BG are all determined by using the conventional technology.

It should be understood that, if bit selection in current rate matching passes through a NULL bit, a starting location in bit selection in next rate matching is a starting location in current rate matching plus a sequence length that is output through current rate matching plus a quantity of NULL bits; otherwise, a starting location in bit selection in next rate matching is a starting location in current rate matching plus a sequence length that is output through current rate matching.

**Algorithm 4:**

for $n = 0$ to N−1

if $n = mK$

Algorithm 4:

$$k_{r,0} = k_0 \, ;$$

else

$$k_{r,n} = k_{r,n-1} + \mathrm{mod}\left(E_{r,n-1}, N_{cb} - \left(K_{NULL} - K_{NULL}{}'\right)\right) \, ;$$

if ($k_{r,n-1} < K_{NULL}{}' - 2Z_c$ and $k_{r,n} \geq K_{NULL}{}' - 2Z_c$) or

($k_{r,n} \geq K_{NULL}{}' - 2Z_c + N_{cb}$)

$$k_{r,n} = k_{r,n} + K_{NULL} - K_{NULL}{}' \, ;$$

end if

$$k_{r,n} = \mathrm{mod}\left(k_{r,n}, N_{cb}\right) \, ;$$

end if

end for

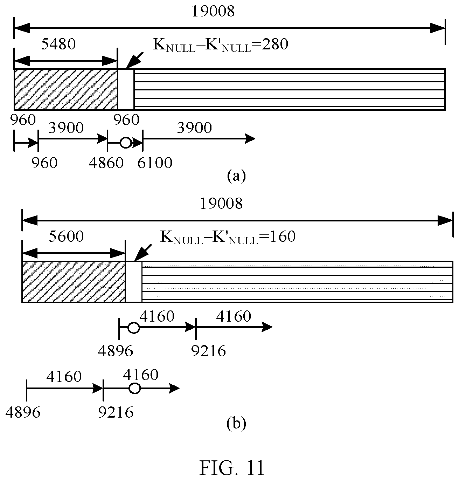

For example, (a) in FIG. 10 is used as an example. Assuming that a start RV is RV2, K=4, N=4, $K_{NULL}$=6336, $K_{NULL}{}'$=6056, $N_{cb}$=19008, and $Z_c$=288, and only a 1st code block is considered, $E_{0,0}$=$E_{0,2}$=960, and $E_{0,1}$=$E_{0,3}$=3900. In this case, $k_{0,0}$=0, $k_{0,1}$=960, $k_{0,2}$=4860, and $k_{0,3}$=6100, as shown in (a) in FIG. 11.

Possible implementation 4:

The terminal device determines, based on a location $k_{r,n-1}$ of a starting bit in bit selection in rate matching #n-1 of a code block #r, a bit length $E_r$ that is output through one rate matching, a quantity of NULL bits, and an RV update time interval K, a location $k_{r,n}$ of a starting bit in bit selection in rate matching #n of the code block #r. For example, this is shown in Algorithm 5. It should be understood that, in this case, a total quantity of REs allocated to the PUSCH in a time unit in which each rate matching is performed remains consistent.

Algorithm 5:

for $n = 0$ to N−1

if $n = mK$

$$k_{r,0} = k_0 \, ;$$

else

Algorithm 5:

$$k_{r,n} = k_{r,n-1} + \mathrm{mod}\left(E_r, N_{cb} - \left(K_{NULL} - K_{NULL}'\right)\right);$$

if $(k_{r,n-1} < K_{NULL}' - 2Z_c$ and $k_{r,n} \geq K_{NULL}' - 2Z_c)$ or

$(k_{r,n} \geq K_{NULL}' - 2Z_c + N_{cb})$

$$k_{r,n} = k_{r,n} + K_{NULL} - K_{NULL}';$$

end if

$$k_{r,n} = \mathrm{mod}\left(k_{r,n}, N_{cb}\right);$$

end if

end for

For example, (b) in FIG. 10 is used as an example. Assuming that a start RV is RV1, an RV sequence is {0, 2, 3, 1}, N=4, $K_{NULL}$=6336, $K_{NULL}'$=6176, $N_{cb}$ =19008, and $Z_c$ =288, and only a 1st code block is considered, $E_0$ = 4160. In this case, $k_{0,0}$ =4896, $k_{0,1}$ =9216, $k_{0,2}$ =0, and $k_{0,3}$ =4160, as shown in (b) in FIG. 11.

The foregoing describes the possible implementation 4, and the following describes possible implementations 5 to 8.

First, an overall idea and main steps of the possible implementations 5 to 8 are briefly described. A quantity of time units allocated to one TBoMS transmission is N, a TBS calculation scaling factor K=N, and an RV update periodicity is also N. It should be understood that, if a TBoMS repetition is not enabled, TBoMS transmission occupies N time units, one RV is used, and the used RV is indicated by higher layer signaling; or if a TBoMS repetition is enabled, M represents a quantity of TBoMS repetitions, and each TBoMS repetition occupies N time units, so that M TBoMS repetitions occupy M×N time units in total, an RV is updated in a 1st time unit of each TBoMS repetition, and an update sequence is indicated by higher layer signaling.

In this case, a starting bit index (or a starting bit location) $k_0$ in bit selection in rate matching performed in each time unit may be determined in the following manner:

(1) For the 1st time unit in N time units of each TBoMS repetition:
$k_0$ is determined based on the RV and the BG. For a specific determining manner, refer to descriptions corresponding to Table 2 in this application.

Optionally, if a starting bit indicated by the starting bit index $k_0$ in bit selection in rate matching corresponding to the 1st time unit is filler bits (filler bits), $k_0$ needs to be corrected to an index of a next bit of a last bit of the filler bits.

It should be understood that the filler bits are not selected during bit selection. Therefore, correcting $k_0$ can ensure that a starting bit in bit selection in rate matching corresponding to another time unit other than the 1st time unit in the N time units that are of each TBoMS repetition and that are obtained by using a subsequent method is a next bit of an ending bit in bit selection in rate matching corresponding to a previous time unit of the time unit (it is noted that, if the next bit is a filler bit, the next bit is also corrected to a next bit of a last filler bit). In this way, it is ensured that coded bit sequences that are output through rate matching corresponding to two adjacent time units do not overlap in a case of no UCI multiplexing, discarding, or transmission cancellation.

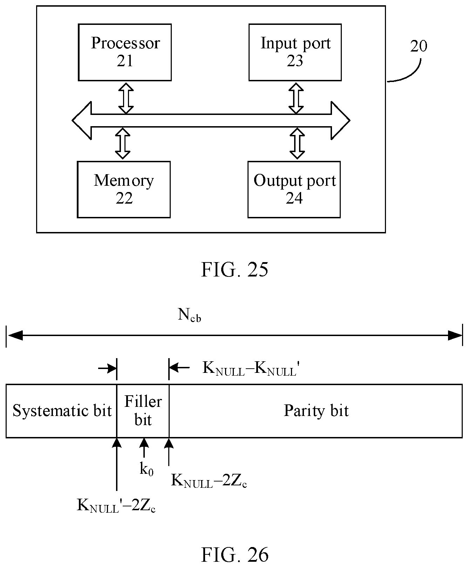

For example, as shown in FIG. 26, before correction, $K_{NUUL}' - 2Z_c \leq k_0 < K_{NULL} - 2Z_c$. In this case, after correction, $k_0 = K_{NULL}' - 2Z_c$, where $K_{NULL}' - 2Z_c$ represents a location of a 1st bit of the filler bits in the circular buffer, and $K_{NULL} - 2Z_c$ represents a location of a next bit of a last bit of the filler bits in the circular buffer.

(2) For another time unit other than the 1st time unit in the N time units of one TBoMS repetition:
A starting bit index $k_0$ in bit selection in rate matching corresponding to the another time unit is determined by at least one of the following parameters:

1. a starting bit index $k_0'$ in bit selection in rate matching in a previous time unit;
2. a circular buffer length (periodicity) $N_{cb}$, where the circular buffer is configured to store a code block obtained after LDPC coding;
3. a quantity $K_{NULL} - K_{NULL}'$ of filler bits in the circular buffer;
4. a starting location $K_{NULL}' - 2Z_c$ of a filler bit in the circular buffer;
5. a location $K_{NULL} - 2Z_c$ of a next bit of a last filler bit in the circular buffer;
6. a value of G corresponding to the previous time unit;
7. a bit length $E_r$ ($E_r$ is determined by the value of G corresponding to the previous time unit) that is output through rate matching corresponding to the previous time unit and that is determined in step 2;
8. a value of G corresponding to the 1st time unit;
9. a bit length $E_r$ (determined by the value of G corresponding to the 1st time unit) that is output through rate matching corresponding to the 1st time unit and that is determined in step 2;
10. a value of G corresponding to any time unit in the N time units of the one TBoMS repetition; and
11. a bit length $E_r$ (determined by the value of G corresponding to the any time unit) that is output through rate matching corresponding to the any time unit in the N time units of the one TBoMS repetition and that is determined in step 2.

For example, when a quantity of code blocks is: C=1, $E = E_r = G$, and $r = 0$. In this case, $k_0$ may be directly determined based on the value of G. When C>1, $E_r \neq G$, and $k_0$ needs to be determined based on $E_r$. $G \equiv N_{RE} \times Q_m \times N_L$, and $N_{RE}$=min(156, $N_{RE}'$) $n_{prb}$, where $n_{prb}$ represents a total quantity of allocated PRBs;

$$\mathrm{N}_{RE}' = N_{sc}^{RB} \cdot N_{symb}^{sh} - N_{D,\mathrm{urP}}^{PRB} - N_{oh}^{PRB}$$ , where $N_{sc}^{RB} = 12$ is a quantity of subcarriers in frequency domain in a physical resource block, $N_{symb}^{sh}$ is a quantity L of symbols allocated to the PUSCH, $N_{DMRS}^{PRB}$ is a quantity of DM-RS REs of each PRB in allocated duration and includes that there is no data in a DM-RS CDM group, and $N_{oh}^{PRB}$ is overheads configured by a higher-layer parameter xOverhead of PUSCH-ServingCellConfig; and r is a code block index, r=0, 1, ..., or C-1, and n=0, 1, ..., or N-1, where C is the quantity of code blocks. Specially, the quantity $N_L$ of layers is equal to 1. In this case, $G \equiv N_{RE} \times Q_m$.

The following separately describes the possible implementations 5 to 8. A manner of determining $k_0$ based on $E_r$ or the value of G (that is, C≠1 or C=1) is separately described.

Possible implementation 5:

Step (1):

Determine a real periodicity $N_{cb}'$ of bit selection.
The following should be understood: (i) In a bit selection process, data in the circular buffer is sequentially read. Because the circular buffer is periodic (a periodicity is $N_{cb}$), bits selected through the bit selection process are also periodic. Herein, a periodicity of the bits selected through the bit selection process is referred to as the real periodicity $N_{cb}'$ of bit selection. (ii) Because filler bits are not selected through the bit selection process, the real periodicity of bit selection is less than the circular buffer length (periodicity) $N_{cb}$.
For example,

$$N_{cb}' = N_{cb} - \left(K_{NULL} - K_{NULL}'\right).$$

Step (2):

Map $E_r$ and G to the real periodicity $N_{cb}'$ of bit selection to obtain a bit sequence length, which is denoted as $L$.
A manner of representing $L$ includes but is not limited to the following several examples:

$$L = \mathrm{mod}\left(E_r, N_{cb} - \left(K_{NULL} - K_{NULL}'\right)\right);$$

or

$$L = \mathrm{mod}\left(E_r, N_{cb}'\right);$$

or

$$L = \mathrm{mod}\left(G, N_{cb} - \left(K_{NULL} - K_{NULL}'\right)\right);$$

or

$$L = \mathrm{mod}\left(G, N_{cb}'\right).$$

It should be understood that an addressing manner of the circular buffer is a modulo operation. To be specific, when an addressing step is an integer multiple of the real periodicity $N_{cb}'$ of bit selection, start addresses of two consecutive times addressing are unchanged. The modulo operation may be understood as that $E_r$ or $G$ is split into two parts. A bit sequence length corresponding to the first part is less than $N_{cb}'$, that is, $0 \le L < N_{cb}'$. A bit sequence length corresponding to the other part is $\varepsilon$ times of $N_{cb}'$, where $\varepsilon$ is an integer and $\varepsilon \ge 0$. Therefore,

$$E_r = N_{cb}' \times \varepsilon + L \ \text{or} \ G = N_{cb}' \times \varepsilon + L.$$

Step (3):

Assuming that there is no filler bit, determine a starting bit index $\overline{k_0}$ (an intermediate variable) of another time unit other than the 1st time unit in the N time units of the one TBoMS repetition based on $L$ and $k_0'$.
A manner of representing $\overline{k_0}$ includes but is not limited to the following several examples:

$$\overline{k_0} = k_0' + L;$$

or

$$\overline{k_0} = k_0' + \mathrm{mod}\left(E_r, N_{cb} - \left(K_{NULL} - K_{NULL}'\right)\right);$$

or

$$\overline{k_0} = k_0' + \mathrm{mod}\left(E_r, N_{cb}'\right);$$

or

$$\overline{k_0} = k_0' + \mathrm{mod}\left(G, N_{cb} - \left(K_{NULL} - K_{NULL}'\right)\right);$$

or

$$\overline{k_0} = k_0' + \mathrm{mod}\left(G, N_{cb}'\right).$$

Step (4):

Determine a starting bit index $k_0$ of the time unit #n based on $k_0'$, $\overline{k_0}$, and a location of a filler bit in the circular buffer.
First, it is determined, based on $k_0'$, $\overline{k_0}$, and the location of the filler bit in the circular buffer, whether a bit selection process in which a bit selection length is $L$ is performed with the filler bit. The following separately describes several different cases.

1. If a bit sequence -1 is filled with filler bits, $\overline{k}_0$ is corrected based on a quantity $K_{NULL}$-$K_{NULL}$' of filler bits, that is, $k_0 = \overline{k}_0 + K_{NULL} - K_{NULL}$'.

For example, as shown in (a) in FIG. 27, when $k_0'<K_{NULL}$'-$2Z_c$ and $\overline{k}_0 \geq K_{NULL}$'-$2Z_c$, the bit selection process is performed with filler bits, and therefore $k_0 = $ mod $(\overline{k}_0 + K_{NULL}$-$K_{NULL}$', $N_{cb}$). For another example, as shown in (b) in FIG. 27, when $k_0' \geq K_{NULL}$-$2Z_c$ and $\overline{k}_0 \geq K_{NULL}$'-$2Z_c$+$N_{cb}$ (or this condition may be simplified as: when $\overline{k}_0 \geq K_{NULL}$'-$2Z_c$+$N_{cb}$), the bit selection process is performed with filler bits, and therefore

$$k_0 = \mathrm{mod}\left(\overline{k}_0 + K_{NULL} - K_{NULL}', N_{cb}\right).$$

2. If a bit sequence -1 is filled with no filler bit, $k_0$ is obtained based on $\overline{k}_0$.

For example, as shown in (c) in FIG. 27, when $k_0'<K_{NULL}$'-$2Z_c$ and $\overline{k}_0 <K_{NULL}$'-$2Z_c$ (or this condition may be simplified as: when $\overline{k}_0 <K_{NULL}$'-$2Z_c$), the bit selection process is performed with no filler bit, and therefore $k_0 = $ mod$(\overline{k}_0, N_{cb})$ or $k_0 = \overline{k}_0$.

For another example, as shown in (d) in FIG. 27, when $k_0' \geq K_{NULL}$-$2Z_c$ and $\overline{k}_0 <K_{NULL}$'-$2Z_c$+$N_{cb}$, the bit selection process is performed with no filler bit, and therefore

$$k_0 = \mathrm{mod}\left(\overline{k}_0, N_{cb}\right) \text{ or } k_0 = \overline{k}_0.$$

Optionally, if the starting bit indicated by $k_0$ is a filler bit, $K_{NULL}$'-$2Z_c \leq k_0 <K_{NULL}$-$2Z_c$. In this case, $\overline{k}_0$ is corrected based on $K_{NULL}$-$2Z_c$ and $k_0$', to obtain $k_0$. For example, $k_0 = $ mod$(\overline{k}_0 + K_{NULL}$-$2Z_c$-$k_0$', $N_{cb}$) or $k_0 = \overline{k}_0 + K_{NULL}$-$2Z_c$-$k_0$'.

The following provides several examples of the possible implementation 5:

---

Algorithm 7-a:

$\overline{k}_0 = k_0' + \mathrm{mod}\left(E_r, N_{cb} - (K_{NULL} - K'_{NULL})\right);$

if $\left(k_0' < K'_{NULL} - 2Z_c \text{ and } \overline{k}_0 \geq K'_{NULL} - 2Z_c\right) \text{or} \left(k_0' > K_{NULL} - 2Z_c \text{ and } \overline{k}_0 \geq K'_{NULL} - 2Z_c + N_{cb}\right)$

$\overline{k}_0 = \overline{k}_0 + K_{NULL} - K'_{NULL};$

end if

$k_0 = \mathrm{mod}\left(\overline{k}_0, N_{cb}\right);$

---

Algorithm 7-b:

$\overline{k}_0 = k_0' + \mathrm{mod}\left(E_r, N_{cb} - (K_{NULL} - K'_{NULL})\right);$

if $\left(k_0' < K'_{NULL} - 2Z_c \text{ and } \overline{k}_0 \geq K'_{NULL} - 2Z_c\right) \text{or} \left(\overline{k}_0 \geq K'_{NULL} - 2Z_c + N_{cb}\right)$

$\overline{k}_0 = \overline{k}_0 + K_{NULL} - K'_{NULL};$

end if

$k_0 = \mathrm{mod}\left(\overline{k}_0, N_{cb}\right);$

Algorithm 7-c:

$$\bar{k}_0 = k'_0 + \mathrm{mod}\big(E_r, N_{cb} - (K_{NULL} - K'_{NULL})\big);$$

$$\text{if } \big(k'_0 < K'_{NULL} - 2Z_c \text{ and } \bar{k}_0 \geq K'_{NULL} - 2Z_c\big) \text{or } \big(k'_0 > K_{NULL} - 2Z_c \text{ and } \bar{k}_0 \geq K'_{NULL} - 2Z_c + N_{cb}\big)$$

$$k_0 = \mathrm{mod}\big(\bar{k}_0 + K_{NULL} - K'_{NULL}, N_{cb}\big);$$

else

$$k_0 = \mathrm{mod}\big(\bar{k}_0, N_{cb}\big);$$

end if

Algorithm 7-d:

$$\bar{k}_0 = k'_0 + \mathrm{mod}\big(E_r, N_{cb} - (K_{NULL} - K'_{NULL})\big);$$

$$\text{if } \big(k'_0 < K'_{NULL} - 2Z_c \text{ and } \bar{k}_0 \geq K'_{NULL} - 2Z_c\big) \text{or } \big(\bar{k}_0 \geq K'_{NULL} - 2Z_c + N_{cb}\big)$$

$$k_0 = \mathrm{mod}\big(\bar{k}_0 + K_{NULL} - K'_{NULL}, N_{cb}\big);$$

else

$$k_0 = \mathrm{mod}\big(\bar{k}_0, N_{cb}\big);$$

end if

Algorithm 7-e:

$$\bar{k}_0 = k'_0 + \mathrm{mod}\big(G, N_{cb} - (K_{NULL} - K'_{NULL})\big);$$

$$\text{if } \big(k'_0 < K'_{NULL} - 2Z_c \text{ and } \bar{k}_0 \geq K'_{NULL} - 2Z_c\big) \text{or } \big(k'_0 > K_{NULL} - 2Z_c \text{ and } \bar{k}_0 \geq K'_{NULL} - 2Z_c + N_{cb}\big)$$

$$\bar{k}_0 = \bar{k}_0 + K_{NULL} - K'_{NULL};$$

end if

$$k_0 = \mathrm{mod}\big(\bar{k}_0, N_{cb}\big);$$

Algorithm 7-f:

$$\bar{k}_0 = k'_0 + \mathrm{mod}\big(G, N_{cb} - (K_{NULL} - K'_{NULL})\big);$$

$$\text{if } \left(k'_0 < K'_{NULL} - 2Z_c \text{ and } \bar{k}_0 \geq K'_{NULL} - 2Z_c\right) \text{or } \left(\bar{k}_0 \geq K'_{NULL} - 2Z_c + N_{cb}\right)$$

$$\bar{k}_0 = \bar{k}_0 + K_{NULL} - K'_{NULL};$$

$$\text{end if}$$

$$k_0 = \text{mod}\left(\bar{k}_0, N_{cb}\right);$$

---

Algorithm 7-g:

---

$$\bar{k}_0 = k'_0 + \text{mod}\left(G, N_{cb} - (K_{NULL} - K'_{NULL})\right);$$

$$\text{if } \left(k'_0 < K'_{NULL} - 2Z_c \text{ and } \bar{k}_0 \geq K'_{NULL} - 2Z_c\right) \text{or } \left(k'_0 > K_{NULL} - 2Z_c \text{ and } \bar{k}_0 \geq K'_{NULL} - 2Z_c + N_{cb}\right)$$

$$k_0 = \text{mod}\left(\bar{k}_0 + K_{NULL} - K'_{NULL}, N_{cb}\right);$$

$$\text{else}$$

$$k_0 = \text{mod}\left(\bar{k}_0, N_{cb}\right);$$

$$\text{end if}$$

---

Algorithm 7-h:

---

$$\bar{k}_0 = k'_0 + \text{mod}\left(G, N_{cb} - (K_{NULL} - K'_{NULL})\right);$$

$$\text{if } \left(k'_0 < K'_{NULL} - 2Z_c \text{ and } \bar{k}_0 \geq K'_{NULL} - 2Z_c\right) \text{or } \left(\bar{k}_0 \geq K'_{NULL} - 2Z_c + N_{cb}\right)$$

$$k_0 = \text{mod}\left(\bar{k}_0 + K_{NULL} - K'_{NULL}, N_{cb}\right);$$

$$\text{else}$$

$$k_0 = \text{mod}\left(\bar{k}_0, N_{cb}\right);$$

$$\text{end if}$$

---

Possible implementation 6:

A first counter $j$ and a second counter $k$ are set to 0. It should be understood that the first counter is configured to determine a starting bit $k_0$ in another time unit other than the 1st time unit in the N time units of the one TBoMS repetition, and the second counter is configured to count a quantity of selected coded bits.

Coded bits stored in the circular buffer are sequentially traversed based on $E_r$ or $G$, and a starting bit index $k_0'$ of a previous time unit of a current time unit, and then a starting bit index $k_0$ of the current time unit is determined.

Step 1: Read a bit whose index is mod ($k_0' + j$, $N_{cb}$) from the circular buffer.

Step 2: When the read bit is not a filler bit, add 1 to the second counter, that is, $k = k + 1$; otherwise, keep the second counter unchanged, and skip this step.

Step 3: Add 1 to the first counter, that is, $j = j + 1$.

Step 4: Determine whether the second counter k is less than $E_r$ or $G$; and if yes, return to step 1 for continuing; otherwise, perform step 5.

Step 5: Determine that the starting bit index of the current time unit is $k_0 = \text{mod}(k_0' + j, N_{cb})$. The following describes two possible algorithms.

---

Algorithm 8-a:

---

$j = 0$ ;

$k = 0$ ;

while $k < E_r$

if $d_{(k_0' + j) mod N_{cb}} \neq NULL$

$k = k + 1$ ;

end if

$j = j + 1$ ;

end while

$k_0 = (k_0' + j) \mathrm{mod} N_{cb};$

---

---

Algorithm 8-b:

---

$j = 0$ ;

$k = 0$ ;

while $k < G$

if $d_{(k_0' + j) mod N_{cb}} \neq NULL$

$k = k + 1$ ;

end if

$j = j + 1$ ;

end while

$k_0 = (k_0' + j) \mathrm{mod} N_{cb};$

---

d represents a code block that is stored in the circular buffer and that is obtained after LDPC coding.

Possible implementation 7:

A starting bit index $k_0$ of another time unit other than the 1st time unit in the N time units of the one TBoMS repetition is determined based on $E_r$ or G, and a starting bit index $k_0$ ' of a previous time unit.
Example 1: An interval between $k_0$ ' and $k_0$ is $E_r$ or G. For example, $k_0 = \mathrm{mod}(k_0$ '$+ E_r, N_{cb})$ or

$$k_0 = \mathrm{mod}\left(k_0 \,'+ G, N_{cb}\right).$$

Example 2: $k_{r,n} = \mathrm{mod}(k_0 + n \times E_r, N_{cb})$ or $k_{r,n} = \mathrm{mod}(k_0 + n \times G, N_{cb})$, and $n = 1,2,...,N -1$. It should be noted that, in Example 2, $k_0$ represents the starting bit index in bit selection in rate matching corresponding to the 1st time unit (time unit #0) in the N time units of the one TBoMS repetition, and is determined based on the RV and the BG; $k_{r,n}$ represents a starting bit index in bit selection in rate matching corresponding to the time unit #n (time unit #n, $n = 1,2,..., N -1$) of the $r$th code block; and r is a code block index, r=0, 1, ..., or C-1, and n=0, 1, ..., or N-1, where C is the quantity of code blocks.

Possible implementation 8:

$k_{r,n}$ is determined based on $k_0$, and $E_r$ or $G$, where $n = 1, 2, ..., N-1$, and $n$ represents a time unit index. $k_0$ represents the starting bit index in bit selection in rate matching corresponding to the 1st time unit (time unit #0) in the N time units of the one TBoMS repetition, and is determined based on the RV and the BG; $k_{r,n}$ represents a starting bit index in bit selection in rate matching corresponding to the time unit #n (time unit #n, $n = 1, 2, ..., N-1$) of the $r^{th}$ code block; and r is a code block index, r=0, 1, ..., or C-1, and n=0, 1, ..., or N-1, where C is the quantity of code blocks.

Step a:

Calculate a sum of bit selection lengths in all time units before the time unit corresponding to the time unit #n, that is, a sum of bit selection lengths in rate matching corresponding to a total of $n$ time units from the time unit #0 to the time unit #n-1.

For example, assuming that the bit selection lengths in all the time units are equal, that is, $E_r$ or $G$, the sum of the bit selection lengths in rate matching corresponding to the total of n time units from the time unit #0 to the time unit #n-1 is $n \times E_r$ or $n \times G$.

Step b:

Determine the real periodicity $N_{cb}'$ of bit selection.
For example,

$$N_{cb}' = N_{cb} - \left( K_{NULL} - K_{NULL}' \right).$$

Step c:

Map $n \times E_r$ and $n \times G$ to the real periodicity $N_{cb}'$ of bit selection, which is denoted as $L_n$.
A manner of representing $L_n$ includes but is not limited to the following several examples:

$$L_n = \mathrm{mod}\left( n \times E_r, N_{cb} - \left( K_{NULL} - K_{NULL}' \right) \right);$$

or

$$L_n = \mathrm{mod}\left( n \times E_r, N_{cb}' \right);$$

or

$$L_n = \mathrm{mod}\left( n \times G, N_{cb} - \left( K_{NULL} - K_{NULL}' \right) \right);$$

or

$$L_n = \mathrm{mod}\left( n \times G, N_{cb}' \right).$$

Step d:

Assuming that there is no filler bit, determine a starting bit index $\overline{k_n}$ (an intermediate variable) of the time unit #n based on $L_n$ and $k_0$.

A manner of representing $\overline{k_n}$ includes but is not limited to the following several examples:

$$\overline{k}_n = k_0 + L_n\,;$$

or

$$\overline{k}_n = k_0 + \mathrm{mod}\left(n \times E_r, N_{cb} - \left(K_{NULL} - K_{NULL}{}'\right)\right);$$

or

$$\overline{k}_n = k_0 + \mathrm{mod}\left(n \times E_r, N_{cb}{}'\right),$$

or

$$\overline{k}_n = k_0 + \mathrm{mod}\left(n \times G, N_{cb} - \left(K_{NULL} - K_{NULL}{}'\right)\right);$$

or

$$\overline{k}_n = k_0 + \mathrm{mod}\left(n \times G, N_{cb}{}'\right).$$

Step e:

Determine a starting bit index $k_{r,n}$ of the time unit #n based on $k_0{}'$, $\overline{k}_0$, and a location of a filler bit in the circular buffer.

First, it is determined, based on $k_0{}'$, $\overline{k}_0$, and the location of the filler bit in the circular buffer, whether a bit selection process in which a bit selection length is $L_n$ is performed with the filler bit. The following separately describes several different cases.

1. If a bit selection process in which a bit selection length is $L_n$ is performed with filler bits, $\overline{k}_n$ is corrected based on a quantity $K_{NULL}\text{-}K_{NULL}{}'$ of filler bits, that is, $k_{r,n} = \overline{k}_n + K_{NULL}\text{-}K_{NULL}{}'$.

For example, when $k_0 < K_{NULL}{}'\text{-}2Z_c$ and $\overline{k}_n \geq K_{NULL}{}'\text{-}2Z_c$, the bit selection process is performed with filler bits, and therefore $k_{r,n} = \mathrm{mod}(\overline{k}_n + K_{NULL}\text{-}K_{NULL}{}', N_{cb})$.

For another example, when $k_0 \geq K_{NULL}\text{-}2Z_c$ and $\overline{k}_n \geq K_{NULL}{}'\text{-}2Z_c + N_{cb}$ (or this condition may be simplified as: when $\overline{k}_n \geq K_{NULL}{}'\text{-}2Z_c + N_{cb}$), the bit selection process is performed with filler bits, and therefore $k_{r,n} = \mathrm{mod}(\overline{k}_n + K_{NULL} - K_{NULL}{}', N_{cb})$.

2. If a bit selection process in which a bit selection length is $L_n$ is performed with no filler bit, obtain $k_{r,n}$ based on $\overline{k}_n$.

For example, when $k_0 < K_{NULL}{}'\text{-}2Z_c$ and $\overline{k}_n < K_{NULL}{}'\text{-}2Z_c$ (or this condition may be simplified as: when $\overline{k}_n < K_{NULL}{}'\text{-}2Z_c$), the bit selection process is performed with no filler bit, and therefore

$$k_{r,n} = \mathrm{mod}\left(\overline{k}_n, N_{cb}\right) \text{ or } k_{r,n} = \overline{k}_n\,.$$

For another example, when $k_0 \geq K_{NULL}\text{-}2Z_c$ and $\overline{k}_n < K_{NULL}{}'\text{-}2Z_c + N_{cb}$, the bit selection process is performed with no filler bit, and therefore $k_{r,n} = \mathrm{mod}(\overline{k}_n, N_{cb})$ or $k_{r,n} = \overline{k}_n$.

Optionally, if the starting bit indicated by $k_{r,n}$ is a filler bit, $K_{NULL}{}'\text{-}2Z_c \leq k_{r,n} < K_{NULL}\text{-}2Z_c$. In this case, $\overline{k}_n$ is corrected based on $K_{NULL}\text{-}2Z_c$ and $k_0$, to obtain $k_{r,n}$. For example,

$$k_{r,n} = \mathrm{mod}\left(\overline{k}_n + K_{NULL} - 2Z_c - k_0, N_{cb}\right) \text{ or } k_{r,n} = \overline{k}_n + K_{NULL} - 2Z_c - k_0\,.$$

The following provides several algorithm examples of the possible implementation 8:

Algorithm 9-a:

$$\overline{k}_n = k_0 + \mathrm{mod}\left(n \times E_r, N_{cb} - (K_{NULL} - K'_{NULL})\right);$$

if $\left(k_0 < K'_{NULL} - 2Z_c \text{ and } \overline{k}_n \geq K'_{NULL} - 2Z_c\right)$ or $\left(k_0 > K_{NULL} - 2Z_c \text{ and } \overline{k}_n \geq K'_{NULL} - 2Z_c + N_{cb}\right)$

$$\overline{k}_n = \overline{k}_n + K_{NULL} - K'_{NULL};$$

end if

$$k_{r,n} = \mathrm{mod}\left(\overline{k}_n, N_{cb}\right);$$

Algorithm 9-b:

$$\overline{k}_n = k_0 + \mathrm{mod}\left(n \times E_r, N_{cb} - (K_{NULL} - K'_{NULL})\right);$$

if $\left(k_0 < K'_{NULL} - 2Z_c \text{ and } \overline{k}_n \geq K'_{NULL} - 2Z_c\right)$ or $\left(\overline{k}_n \geq K'_{NULL} - 2Z_c + N_{cb}\right)$

$$\overline{k}_n = \overline{k}_n + K_{NULL} - K'_{NULL};$$

end if

$$k_{r,n} = \mathrm{mod}\left(\overline{k}_n, N_{cb}\right);$$

Algorithm 9-c:

$$\overline{k}_n = k_0 + \mathrm{mod}\left(n \times E_r, N_{cb} - (K_{NULL} - K'_{NULL})\right);$$

if $\left(k_0 < K'_{NULL} - 2Z_c \text{ and } \overline{k}_n \geq K'_{NULL} - 2Z_c\right)$ or $\left(k_0 > K_{NULL} - 2Z_c \text{ and } \overline{k}_n \geq K'_{NULL} - 2Z_c + N_{cb}\right)$

$$k_{r,n} = \mathrm{mod}\left(\overline{k}_n + K_{NULL} - K'_{NULL}, N_{cb}\right);$$

else

$$k_{r,n} = \mathrm{mod}\left(\overline{k}_n, N_{cb}\right);$$

end if

Algorithm 9-d:

$$\bar{k}_n = k_0 + \mathrm{mod}\left(n \times E_r, N_{cb} - (K_{NULL} - K'_{NULL})\right);$$

$$\text{if } \left(k_0 < K'_{NULL} - 2Z_c \text{ and } \bar{k}_n \geq K'_{NULL} - 2Z_c\right) \text{or } \left(\bar{k}_n \geq K'_{NULL} - 2Z_c + N_{cb}\right)$$

$$k_{r,n} = \mathrm{mod}\left(\bar{k}_n + K_{NULL} - K'_{NULL}, N_{cb}\right);$$

else

$$k_{r,n} = \mathrm{mod}\left(\bar{k}_n, N_{cb}\right);$$

end if

Algorithm 9-e:

$$\bar{k}_n = k_0 + \mathrm{mod}\left(n \times G, N_{cb} - (K_{NULL} - K'_{NULL})\right);$$

$$\text{if } \left(k_0 < K'_{NULL} - 2Z_c \text{ and } \bar{k}_n \geq K'_{NULL} - 2Z_c\right) \text{or } \left(k_0 > K_{NULL} - 2Z_c \text{ and } \bar{k}_n \geq K'_{NULL} - 2Z_c + N_{cb}\right)$$

$$\bar{k}_n = \bar{k}_n + K_{NULL} - K'_{NULL};$$

end if

$$k_{r,n} = \mathrm{mod}\left(\bar{k}_n, N_{cb}\right);$$

Algorithm 9-f:

$$\bar{k}_n = k_0 + \mathrm{mod}\left(n \times G, N_{cb} - (K_{NULL} - K'_{NULL})\right);$$

$$\text{if } \left(k_0 < K'_{NULL} - 2Z_c \text{ and } \bar{k}_n \geq K'_{NULL} - 2Z_c\right) \text{or } \left(\bar{k}_n \geq K'_{NULL} - 2Z_c + N_{cb}\right)$$

$$\bar{k}_n = \bar{k}_n + K_{NULL} - K'_{NULL};$$

end if

$$k_{r,n} = \mathrm{mod}\left(\bar{k}_n, N_{cb}\right);$$

Algorithm 9-g:

$$\bar{k}_n = k_0 + \mathrm{mod}\left(n \times G, N_{cb} - (K_{NULL} - K'_{NULL})\right);$$

$$\text{if } \left(k_0 < K'_{NULL} - 2Z_c \text{ and } \overline{k}_n \geq K'_{NULL} - 2Z_c\right) \text{or } \left(k_0 > K_{NULL} - 2Z_c \text{ and } \overline{k}_n \geq K'_{NULL} - 2Z_c + N_{cb}\right)$$

$$k_{r,n} = \text{mod}\left(\overline{k}_n + K_{NULL} - K'_{NULL}, N_{cb}\right);$$

else

$$k_{r,n} = \text{mod}\left(\overline{k}_n, N_{cb}\right);$$

end if

---

Algorithm 9-h:

---

$$\overline{k}_n = k_0 + \text{mod}\left(n \times G, N_{cb} - (K_{NULL} - K'_{NULL})\right);$$

$$\text{if } \left(k_0 < K'_{NULL} - 2Z_c \text{ and } \overline{k}_n \geq K'_{NULL} - 2Z_c\right) \text{or } \left(\overline{k}_n \geq K'_{NULL} - 2Z_c + N_{cb}\right)$$

$$k_{r,n} = \text{mod}\left(\overline{k}_n + K_{NULL} - K'_{NULL}, N_{cb}\right);$$

else

$$k_{r,n} = \text{mod}\left(\overline{k}_n, N_{cb}\right);$$

end if

---

Possible implementation 9:

Algorithm 4 in the possible implementation 3 is improved:

| Algorithm 4-a: |
| --- |
| for $n = 0$ to N−1 |
| if n=0 |
| if $K'_{NULL} - 2Z_c \leq k_0 < K_{NULL} - 2Z_c$ |
| $k_{r,0} = K_{NULL} - 2Z_c;$ |
| else |
| $k_{r,0} = k_0 ;$ |
| end if |
| else |
| $k_{r,n} = k_{r,n-1} + \text{mod}\left(E_{r,n-1}, N_{cb} - \left(K_{NULL} - K_{NULL}'\right)\right);$ |
| if ( $k_{r,n-1} < K_{NULL}' - 2Z_c$ and $k_{r,n} \geq K_{NULL}' - 2Z_c$ ) or |
| ( $k_{r,n} \geq K_{NULL}' - 2Z_c + N_{cb}$ ) |
| $k_{r,n} = k_{r,n} + K_{NULL} - K_{NULL}' ;$ |
| end if |
| $k_{r,n} = \text{mod}\left(k_{r,n}, N_{cb}\right);$ |
| end if |
| end for |

It should be understood that the starting bit index indicated by the RV may fall on the filler bit. In this case, the starting bit should be a next bit of the last filler bit.

Possible implementation 10:

Algorithm 5 in the possible implementation 4 is improved:

| Algorithm 5-a: |
|---|
| for $n = 0$ to N–1 |
| if n=0 |
| if $K'_{NULL} - 2Z_c \leq k_0 < K_{NULL} - 2Z_c$ |
| $k_{r,0} = K_{NULL} - 2Z_c$; |
| else |
| $k_{r,0} = k_0$; |
| end if; |
| else |
| $k_{r,n} = k_{r,n-1} + \mathrm{mod}\left(E_r, N_{cb} - \left(K_{NULL} - K_{NULL}'\right)\right)$; |
| if ( $k_{r,n-1} < K_{NULL}' - 2Z_c$ and $k_{r,n} \geq K_{NULL}' - 2Z_c$ )or |
| ( $k_{r,n} \geq K_{NULL}' - 2Z_c + N_{cb}$ ) |
| $k_{r,n} = k_{r,n} + K_{NULL} - K_{NULL}'$; |
| end if |
| $k_{r,n} = \mathrm{mod}\left(k_{r,n}, N_{cb}\right)$; |
| end if |
| end for |

It should be understood that the starting bit index indicated by the RV may fall on the filler bit. In this case, the starting bit should be a next bit of the last filler bit.

Possible implementation 11:

A difference between Algorithm 10-a and Algorithm 10-d lies in that, for slots with different G ($G_n$), Algorithm 10-a or 10-c may be used, and for slots with same G, Algorithm 10-b or 10-d may be used.

Algorithm 10-a:

$j = 0$;

$k_{r,0} = k_0$;

for n=1 to N−1

$k = 0$;

while $k < E_{r,n-1}$

if $d_{(k_{r,0}+j)mod N_{cb}} \neq NULL$

$k = k + 1$;

end if

$j = j + 1$;

end while

$k_{r,n} = \left(k_{r,0} + j\right)\mathrm{mod} N_{cb}$;

end for

It should be understood that, for Algorithm 10-a or 10-c, a starting bit $k_{r,n}$ in bit selection in rate matching in the slot #n and the code block #r is a next bit of an ending bit in bit selection with a bit selection length $E_{r,n-1}$ in rate matching in the slot #n-1 and the code block #r. It should be noted that bit selection herein is only used to determine a starting bit, and is not a bit sequence length that is output through bit selection. The bit sequence length that is output through bit selection is determined by the bit selection length used in step 4.

Algorithm 10-b:

$j = 0$;

$k_{r,0} = k_0$;

for n=1 to N−1

$k = 0$;

while $k < E_r$

if $d_{(k_{r,0}+j)mod N_{cb}} \neq NULL$

$k = k + 1$;

end if

$j = j + 1$;

end while

$$k_{r,n} = \left(k_{r,0} + j\right)\mathrm{mod} N_{cb};$$

end for

Algorithm 10-c:

$k_{r,0} = k_0;$

for n=1 to N−1

$j = 0;$

$k = 0;$

while $k < E_{r,n-1}$

if $d_{(k_{r,n-1}+j)modN_{cb}} \neq NULL$

$k = k+1;$

end if

$j = j+1;$

end while

$k_{r,n} = (k_{r,n-1} + j)\mathrm{mod}N_{cb};$

end for

---

Algorithm 10-d:

$k_{r,0} = k_0;$

for n=1 to N−1

$j = 0;$

$k = 0;$

while $k < E_{r,n-1}$

if $d_{(k_{r,n-1}+j)modN_{cb}} \neq NULL$

$k = k+1;$

end if

$j = j+1;$

end while

$k_{r,n} = (k_{r,n-1} + j)\mathrm{mod}N_{cb};$

end for

---

Another embodiment of this application provides an uplink transmission method, including:
A terminal device receives first indication information from a network device, where the first indication information indicates the terminal device to send a first transport block in a plurality of time units.

The terminal device receives second indication information from the network device, where the second indication information indicates the terminal device to send uplink control information UCI in a first time unit, and the first time unit is one of the plurality of time units.

The terminal device determines, based on a parameter G corresponding to the first time unit, a location that is in a circular buffer and that is of a starting bit in a first coded bit sequence, where the first coded bit sequence is a coded bit sequence that is output through rate matching in a second time unit, the parameter G is a total quantity of coded bits available for transmission of the first transport block and the UCI in one time unit, G is a positive integer, and the second time unit is one of the plurality of time units.

The terminal device sends the UCI and the first transport block to the network device in the plurality of time units.

A difference between this embodiment and the embodiment in FIG. 8 lies in that the second time unit is one of the plurality of time units. For example, the second time unit is a next time unit of the first time unit, or the second time unit is a 1st time unit in the plurality of time units, or the second time unit is any one of the plurality of time units. For other related content in this embodiment, refer to the descriptions in the foregoing embodiment. Details are not described herein again.

In an implementation, the plurality of time units correspond to an equal parameter G.

In an implementation, that the terminal device determines, based on a parameter G corresponding to the first time unit, a location that is in a circular buffer and that is of a starting bit in a first coded bit sequence includes:

determining, based on the parameter G corresponding to the first time unit and a real periodicity $N'_{cb}$ of bit selection, the location that is in the circular buffer and that is of the starting bit in the first coded bit sequence.

For example, a first starting bit index $k'_{r,n}$ is determined based on the parameter G corresponding to the first time unit and the real periodicity $N'_{cb}$ of bit selection.

The location $k_{r,n}$ that is in the circular buffer and that is of the starting bit in the first coded bit sequence is determined based on the first starting bit index $k'_{r,n}$.

With reference to a specific example, the following describes determining of the first starting bit index $k'_{r,n}$ and the location $k_{r,n}$ that is in the circular buffer and that is of the starting bit in the first coded bit sequence.

A quantity of time units allocated to one TBoMS transmission is N, a TBS calculation scaling factor K is equal to N, and an RV update periodicity is also N. It should be understood that, if a TBoMS repetition is not enabled, TBoMS transmission occupies N time units, one RV is used, and the used RV is indicated by higher layer signaling; or if a TBoMS repetition is enabled, M represents a quantity of TBoMS repetitions, and each TBoMS repetition occupies N time units, so that M TBoMS repetitions occupy M×N time units in total, an RV is updated in a 1st time unit of each TBoMS repetition, and an update sequence is indicated by higher layer signaling.

In this case, a starting bit index (or a starting bit location) $k_{r,n}$ in bit selection in rate matching performed in each time unit of one TBoMS repetition may be determined in the following manner: n represents a time unit index, $n = 0,1, ..., N - 1$, r represents a code block index, $r = 0,1, ... , C - 1$, and C represents a quantity of code blocks.

(1) Determine the real periodicity $N'_{cb}$ of bit selection.

The following should be understood: (i) In a bit selection process, data in the circular buffer is sequentially read one by one. Because the circular buffer is periodic (a periodicity is $N_{cb}$), bits selected through the bit selection process are also periodic. Herein, a periodicity of the bits selected through the bit selection process is referred to as the real periodicity $N'_{cb}$ of bit selection. (ii) Because filler bits are not selected through the bit selection process, the real periodicity of bit selection is less than the circular buffer length (periodicity) $N_{cb}$.

For example, $N'_{cb} = N_{cb} - (K_{NULL} - K'_{NULL})$. $K_{NULL} - K'_{NULL}$ represents a quantity of filler bits in the circular buffer.

(2) For a 1st time unit in N time units of one TBoMS repetition:

A starting bit index $k_0$ is determined based on an RV and a BG. For a specific determining manner, refer to descriptions corresponding to Table 2 in this application.

The starting bit index $k_0$ is corrected, and a corrected starting bit index is denoted as $k'_{r,0}$. An example is as follows:

If a starting bit indicated by the starting bit index $k_0$ is a systematic bit (systematic bit), that is, before correction, $0 \leq k_0 < K'_{NULL} - 2Z_c$ , correction is not required, that is, $k'_{r,0} = k_0$ , where $K'_{NULL} - 2Z_c$ represents an index of a 1st filler bit in the circular buffer.

If a starting bit indicated by the starting bit index $k_0$ is a filler bit (filler bit), that is, before correction,

$K'_{NULL} - 2Z_c \leq k_0 < K_{NULL} - 2Z_c$ , after correction, $k'_{r,0} = K'_{NULL} - 2Z_c$ , where $K_{NULL}$-$2Z_c$ represents an index of a 1st parity bit in the circular buffer.

If a starting bit indicated by the starting bit index $k_0$ is a parity bit (parity bit), that is, before correction, $K_{NULL}$-$2Z_c \leq k_0 < N_{cb}$, after correction, $k'_{r,0} = k_0 - (K_{NULL} - K'_{NULL})$ .

The foregoing example may alternatively be written in a form of Algorithm 11-a.

---

Algorithm 11-a:

---

if $0 \leq k_0 < K'_{NULL} - 2Z_c$

$k'_{r,0} = k_0$;

elseif $K'_{NULL} - 2Z_c \leq k_0 < K_{NULL} - 2Z_c$

$k'_{r,0} = K'_{NULL} - 2Z_c$;

else

$k'_{r,0} = k_0 - (K_{NULL} - K'_{NULL})$;

end

---

It should be understood that the starting bit index $k_0$ indicates a location of a coded bit in a circular buffer whose length is $N_{cb}$, the starting bit index $k'_{r,0}$ indicates a location of a coded bit in a circular buffer whose length is $N'_{cb}$ , and $k_0$ and $k'_{r,0}$ indicate a same coded bit. The circular buffer whose length is $N'_{cb}$ is obtained after a filler bit sequence is deducted from the circular buffer whose length is $N_{cb}$. The circular buffer whose length is $N'_{cb}$ is virtual and is only used to understand the implementation.

For example, a coded bit sequence stored in the circular buffer whose length is $N_{cb}$ is shown in FIG. 28(a), where systematic bit indexes are 0 to $K'_{NULL} - 2Z_c - 1$ , filler bit indexes are $K'_{NULL} - 2Z_c$ to $K_{NULL}$-$2Z_c$ - 1, and parity bit indexes are $K_{NULL}$-$2Z_c$ to $N_{cb}$ - 1; a coded bit sequence stored in the circular buffer whose length is $N'_{cb}$ is shown in FIG. 28(b), where systematic bit indexes are 0 to $K'_{NULL} - 2Z_c - 1$ , and parity bit indexes are $K'_{NULL} - 2Z_c$ to $N'_{cb} - 1$ ; and the coded bit sequence corresponding to the indexes 0 to $K'_{NULL} - 2Z_c - 1$ in FIG. 28(a) is the same as the coded bit sequence corresponding to the indexes 0 to $K'_{NULL} - 2Z_c - 1$ in FIG. 28(b), and the coded bit sequence corresponding to the indexes $K_{NULL}$ - $2Z_c$ to $N_{cb}$ - 1 in FIG. 28(a) is the same as the coded bit sequence corresponding to the indexes $K'_{NULL} - 2Z_c$ to $N'_{cb} - 1$ in FIG. 28(b).

(3) For another time unit other than the 1st time unit in the N time units of the one TBoMS repetition: A starting bit index $k'_{r,n}$ in bit selection in rate matching corresponding to the another time unit is determined by at least one of the following parameters, where $n = 1,2,..., N - 1$:

a starting bit index $k'_{r,0}$ in bit selection in rate matching in the 1st time unit;

the real periodicity $N'_{cb}$ of bit selection;

a value of G corresponding to a previous time unit;

a bit length $E_r$ ($E_r$ is determined by the value of G corresponding to the previous time unit) that is output through rate matching corresponding to the previous time unit and that is determined in step 2;

a value of G corresponding to the 1st time unit;

a bit length $E_r$ (determined by the value of G corresponding to the 1st time unit) that is output through rate matching corresponding to the 1st time unit and that is determined in step 2;

a value of G corresponding to any time unit in the N time units of the one TBoMS repetition; and

a bit length $N_{cb}$ (determined by the value of G corresponding to the any time unit) that is output through rate matching corresponding to the any time unit in the N time units of the one TBoMS repetition and that is determined in step 2.

It should be understood that $k'_{r,n}$ is the location of the coded bit in the circular buffer whose length is $N'_{cb}$.

For example, when a quantity of code blocks is: $C = 1$, $E = E_r = G$, and $r = 0$. In this case, $k'_{r,n}$

may be directly determined based on the value of G. When $C>1$, $E_r \neq G$, and $k'_{r,n}$ needs to be determined based on $E_r$. $G \equiv N_{RE} \times Q_m \times N_L$, and $N_{RE} = \min(156, N'_{RE})n_{PRB}$, where $n_{PRB}$ represents a total quantity of allocated PRBs; $N'_{RE} = N^{RB}_{sc} \cdot N^{sh}_{symb} - N^{PRB}_{DMRS} - N^{PRB}_{oh}$, where $N^{RB}_{sc} = 12$ is a quantity of subcarriers in frequency domain in a physical resource block, $N^{sh}_{symb}$ is a quantity $L$ of symbols allocated to the PUSCH, $N^{PRB}_{DMRS}$ is a quantity of DM-RS REs of each PRB in allocated duration and includes that there is no data in a DM-RS CDM group, and $N^{PRB}_{oh}$ is overheads configured by a higher-layer parameter xOverhead of PUSCH-ServingCellConfig; and $r$ is a code block index, $r = 0,1, ..., C-1$, and $n = 1,2, ..., N-1$, where $C$ is the quantity of code blocks. Specially, the quantity $N_L$ of layers is equal to 1. In this case, $G \equiv N_{RE} \times Q_m$.

Specific steps are as follows.

Step a:

Calculate a sum of bit selection lengths in all time units before the time unit corresponding to the time unit #n, that is, a sum of bit selection lengths in rate matching corresponding to a total of $n$ time units from the time unit #0 to the time unit #n-1.

For example, assuming that the bit selection lengths in all the time units are equal, that is, $E_r$ or $G$, the sum of the bit selection lengths in rate matching corresponding to the total of n time units from the time unit #0 to the time unit #n-1 is $n \times E_r$ or $n \times G$.

Step b:

Determine, based on $n \times E_r$ or $n \times G$, and $k'_{r,0}$, an index $k'_{r,n}$ of a starting bit that is in the circular buffer whose length is $N'_{cb}$ and that is in bit selection in rate matching corresponding to the time unit #n.

For example, $k'_{r,n} = \mathrm{mod}(k'_{r,0} + n \times G, N'_{cb})$ , or $k'_{r,n} = \mathrm{mod}(k'_{r,0} + n \times E_r, N'_{cb})$ , where mod

represents a modulo operation.

It should be understood that an addressing manner of the circular buffer is a modulo operation.

(4) Determine the starting bit index $k_{r,n}$ based on the starting bit index $k'_{r,n}$, where $n = 0,1,..., N$-1, and an example is as follows:

If a starting bit indicated by the starting bit index $k'_{r,n}$ is a systematic bit, that is, before correction, $0 \leq k'_{r,n} < K'_{NULL} - 2Z_c$, correction is not required, that is, $k_{r,n} = k'_{r,n}$.

If a starting bit indicated by the starting bit index $k'_{r,n}$ is a parity bit, that is, before correction, $K'_{NULL} - 2Z_c \leq k'_{r,n} < N'_{cb}$, after correction, $k_{r,n} = k'_{r,n} + (K_{NULL} - K'_{NULL})$. It should be understood that the starting bit index $k'_{r,n}$ indicates the location of the coded bit in the circular buffer whose length is $N'_{cb}$. Therefore, the starting bit index needs to be corrected to the indicated location of the coded bit in the circular buffer whose length is $N_{cb}$, that is, the starting bit index $k_{r,n}$. Because a filler bit is inserted between a systematic bit and a parity bit, the starting bit indicated by the starting bit index $k'_{r,n}$ is a parity bit, and the quantity $K_{NULL} - K'_{NULL}$ of filler bits needs to be considered in counting of the starting bit index $k_{r,n}$.

The foregoing example may alternatively be written in a form of Algorithm 11-b.

---

Algorithm 11-b: $n = 0,1, ..., N - 1$

---

if $0 \leq k'_{r,n} < K'_{NULL} - 2Z_c$

$k_{r,n} = k'_{r,n}$;

else

$k_{r,n} = k'_{r,n} + (K_{NULL} - K'_{NULL})$;

end

---

Optionally, for the starting bit index $k_{r,0}$ in bit selection in rate matching corresponding to the time unit #0, the following may be directly determined based on $k_0$: $k_{r,0} = k_0$. (The starting bit index $k_{r,n}$ in selection in rate matching corresponding to the another time unit is still determined based on Algorithm 11-b, where $n = 1,2, ..., N$ - 1).

Step 4: The terminal device performs bit selection based on the starting bit location and the bit length, to determine an output bit sequence.

The terminal device performs bit selection based on the starting bit location and the bit length, to determine a first coded bit sequence.

Optionally, the terminal device determines the first coded bit sequence based on a starting bit location $k_{r,n}$ in bit selection in rate matching of a code block #r in the time unit #n and a bit length $E_{r,n}$ that is output through rate matching of the code block #r in the time unit #n. For example, as shown in Algorithm 6, d represents a code block stored in the circular buffer, and e represents the first coded bit sequence.

---

Algorithm 6:

---

$k = 0$ ;

$j = 0$ ;

while $k < E_{r,n}$

if $d_{(k_{r,n}+j)\bmod N_{cb}} \neq \text{NULL}$

$e_k = d_{(k_{r,n}+j)\bmod N_{cb}}$ ;

$k = k + 1$ ;

end if

$j = j + 1$ ;

end if

end while

---

Alternatively, in the foregoing step, $E_{r,n}$ may be replaced with $E_r$, and $d_{k_{r,n}}$ may be replaced with $d_k$.

Alternatively, in the foregoing step, $E_{r,n}$ may be replaced with $E_r$', and $d_{k_{r,n}n}$ may be replaced with $d_k$.

Alternatively, in the foregoing step, $E_{r,n}$ may be replaced with $E_{r,n}$'.

Cases in which $E_{r,n}$ and $E_{r,n}$ are separately replaced with $E_r$, $E_r$', and $E_{r,n}$' in the foregoing step respectively correspond to different solutions in step 2 and step 3. Details are as follows:

In step 2, a length of the bit sequence that is output through rate matching is calculated based on the parameter G in the uplink transmission method, and is denoted as $E_r$ ; in step 3, a start point of the bit sequence that is output through rate matching is determined based on $E_r$; and in step 4, bit selection is performed based on a starting bit location and the bit length $E_r$, to determine the output bit sequence.

Alternatively, in step 2, a bit length that is output through rate matching of the code block #r in the time unit #n is determined based on a total quantity $G_n$ of coded bits for transmission of a TB in the time unit #n, and is denoted as $E_{r,n}$; in step 3, a start point of the bit sequence that is output through rate matching in the time unit #n is determined based on $E_{r,n}$; and in step 4, bit selection is performed based on a starting bit location and the bit length $E_{r,n}$, to determine the output bit sequence.

Alternatively, in step 2, a length $E_r$' of the bit sequence that is output through rate matching is calculated based on the parameter G'; in step 3, a length of the bit sequence that is output through rate matching is calculated based on the parameter G in the uplink transmission method, and is denoted as $E_r$, and a start point of the bit sequence that is output through rate matching is determined based on $E_r$; and in step 4, bit selection is performed based on a starting bit location and the bit length $E_r$ ', to determine the output bit sequence.

Alternatively, in step 2, a bit length that is output through rate matching of the code block #r in the time unit #n is determined based on a total quantity $G_n$ ' of coded bits for transmission of a TB in the time unit #n, and is denoted as $E_{r,n}$'; in step 3, a length of the bit sequence that is output through rate matching is calculated based on the parameter $G_n$ in the uplink transmission method, and is denoted as $E_{r,n}$, and a start point of the bit sequence that is output through rate matching in the time unit #n is determined based on $E_{r,n}$; and in step 4, bit selection is performed based on a starting bit location and the bit length $E_{r,n}$ ', to determine the output bit sequence.

Optionally, the terminal device determines the first coded bit sequence based on a starting bit location $k_0$ in bit selection in rate matching of a code block #r in the time unit #n and a bit length $E_{r,n}$ that is output through rate matching of the code block #r in the time unit #n. For example, as shown in Algorithm 6-a, d represents a code block stored in the circular buffer, and e represents the first coded bit sequence.

---

**Algorithm 6-a:**

---

$k = 0$;

$j = 0$;

while $k < E$

if $d_{(k_0+j)\bmod N_{cb}} \neq \mathrm{NULL}$

$e_k = d_{(k_0+j)\bmod N_{cb}}$;

---

**Algorithm 6-a:**

---

$k = k+1$;

end if

$j = j+1$;

end while

---

The terminal device obtains the starting bit location $k_0$ in bit selection in rate matching of the code block #r in the time unit #n in the possible implementation 5 and the possible implementation 6 in step 3 and Example 1 in the possible implementation 7. E represents the bit selection length in bit selection in rate matching of the code block #r in the time unit #n, that is, $E_{r,n}$, $E_r$, $E_r$', or $E_{r,n}$'. Optionally, in the foregoing different solutions, both the starting bit index (or the starting bit location) $k_0$ in bit selection in rate matching performed in each time unit and the bit selection length $E_r$ are determined by G. Further processing may be performed on the output bit sequence whose length is $E_r$ (for example, the following mentioned solution of truncating an output bit sequence), and then subsequent processing such as bit interleaving may be performed.

A quantity of time units allocated to one TBoMS transmission is N, a TBS calculation scaling factor K=N, and an RV update periodicity is also N. It should be understood that, if a TBoMS repetition is not enabled, TBoMS transmission occupies N time units, one RV is used, and the used RV is indicated by higher layer signaling; or if a TBoMS repetition is enabled, M represents a quantity of TBoMS repetitions, and each TBoMS repetition occupies N time units, so that M TBoMS repetitions occupy M×N time units in total, an RV is updated in a 1st time unit of each TBoMS repetition, and an update sequence is indicated by higher layer signaling.

Step 1:

A starting bit index of a previous time unit of a target time unit is $k_0$', and a bit selection length is $E_r$ or G. For example, when a quantity of code blocks is: C=1, $E = E_r = G$, and $r = 0$. In this case, $k_0$ may be directly determined based on the value of G. When C>1, $E_r \neq G$, and $k_0$ needs to be determined based on $E_r$. $G \equiv N_{RE} \times Q_m \times N_L$. Specially, the quantity $N_L$ of layers is equal to 1. In this case, $G \equiv N_{RE} \times Q_m$.

Step 2:

Perform a bit selection process based on $k_0$', and $E_r$ or $G$, where a starting bit index $k_0$ of the target time unit is a next bit of a last bit in bit selection in the previous time unit.

Step 3:

Truncate, based on $E_r$' or $G$', a bit sequence selected in the previous time unit, to obtain first $E_r$' or $G$' bits in the bit sequence, and perform subsequent processing such as bit interleaving on the truncated bit sequence.

For example, the bit sequence that is output through bit selection is $e_0$, $e_1$, ..., $e_{E-1}$ (or $e_0$, $e_1$, ..., $e_{G-1}$), the truncated bit sequence is $e_0$, $e_1$, ..., $e_{E_r-1}$ (or $e_0$, $e_1$, ..., $e_{G'-1}$), and then the subsequent operation such as bit interleaving is performed on the truncated bit sequence

$$e_0, e_1, ..., e_{E_r'-1}.$$

Step 5: The terminal device sequentially performs bit interleaving and code block concatenation based on the first coded bit sequence, to output a UL-SCH.

Optionally, the terminal device further generates the UCI based on scheduling information.

It should be understood that the terminal device performs this step only when receiving signaling indicating that the terminal device carries the UCI on the PUSCH.

S203: The terminal device generates the PUSCH based on at least the UL-SCH, and sends the PUSCH to the network device.

In a possible case 1, the terminal device generates the PUSCH based on the UL-SCH. It should be understood that, in this case, the terminal device detects only signaling for sending the PUSCH, and the network device does not send the signaling indicating the terminal device to include the UCI on the PUSCH; or the network device sends the signaling indicating the terminal device to include the UCI on the PUSCH, but the terminal device misses signaling detection.

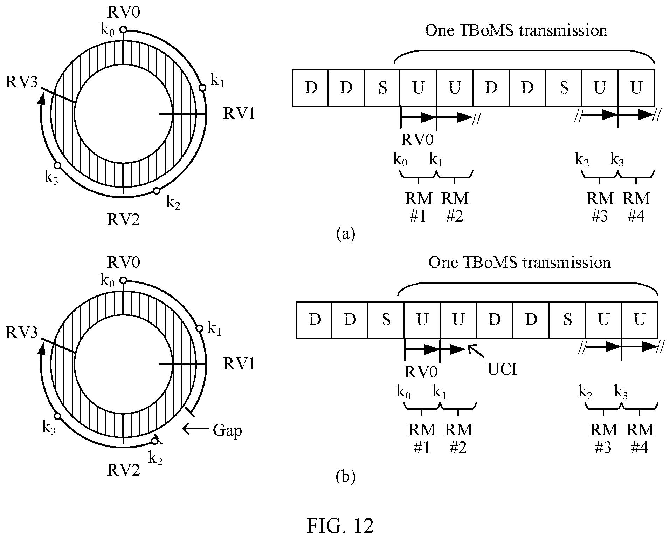

For example, as shown in (a) in FIG. 12, in this case, bit sequences in a circular buffer are sequentially carried by a PUSCH.

In a possible case 2, the terminal device multiplexes the UCI on the UL-SCH to generate the PUSCH.

It should be understood that, in this case, the terminal device detects signaling that is sent by the network device and that indicates the terminal device to send the PUSCH and carry the UCI on the PUSCH.

In an example, when the terminal device calculates, by using $E_r'$ in step 2 in S202, the length of the bit sequence that is output through rate matching, it is assumed that the UCI is multiplexed in a $2^{nd}$ slot of the PUSCH, and the terminal device performs rate matching in the $2^{nd}$ uplink slot. A start point in bit selection in rate matching is determined based on $E_r$ in rate matching in a previous uplink slot, that is, is determined based on G, and a bit length that is output through rate matching in the previous uplink slot is $E_r'$ determined based on G'. In this case, as shown in (b) in FIG. 12, because the total quantity of coded bits of the UCI needs to be deducted from G', G'<G. Therefore, a starting bit in bit selection in rate matching in a $3^{rd}$ uplink slot is after an ending bit in bit selection in the $2^{nd}$ uplink slot in the circular buffer, and there is a gap between the two bits. Obviously, the gap is caused by the UCI occupying REs allocated to the PUSCH.

In another example, when the terminal device calculates, by using $E_r$ in step 2 in S202, the length of the bit sequence that is output through rate matching, the UCI is multiplexed in a $2^{nd}$ slot of the PUSCH, and the terminal device performs rate matching in the $2^{nd}$ uplink slot. A start point in bit selection in rate matching is determined based on $E_r$ in rate matching in a previous uplink slot, that is, is determined based on G, and a bit length that is output through rate matching in the previous uplink slot is also determined based on G. In this case, as shown in (a) in FIG. 12, a starting bit in bit selection in rate matching in a $3^{rd}$ uplink slot is a next bit of an ending bit in bit selection in the $2^{nd}$ uplink slot in the circular buffer.

It should be understood that, through comparison between (a) in FIG. 12 and (b) in FIG. 12, regardless of whether the UCI is multiplexed on the PUSCH, a start point in bit selection in each rate matching remains consistent, that is, the start point is irrelevant to UCI multiplexing.

S204: The network device determines the UL-SCH based on the PUSCH.

Specifically, the network device determines a bit sequence length that is output through rate matching, and a starting bit location by using a method the same as that used by the terminal device in S202, and determines a location of the UL-SCH in the circular buffer.

It should be understood that the network device and the terminal device use a same determining method, so that it can be ensured that the network device and the terminal device have a consistent understanding of the location of the UL-SCH in the PUSCH, thereby ensuring that the UL-SCH is correctly parsed.

For example, if the network device indicates, by using signaling, that the UCI is multiplexed with the UL-SCH, but the terminal device does not detect the signaling, the terminal device sends the PUSCH in (a) in FIG. 12, and the network device determines the UL-SCH and the UCI in (b) in FIG. 12. Because the network device and the terminal device use a same method to determine in advance the starting bit of the UL-SCH in the circular buffer, and the UCI is not excluded during calculation of G, the network device can completely parse all bits carried in the $3^{rd}$ slot.

In this embodiment of this application, the network device indicates the terminal device to carry indication information of the UCI in the first time unit; and when the terminal device detects or does not detect the indication, the total quantity of coded bits of the UCI is not deducted from the parameter G used by the network device and the terminal device to determine the location that is in the circular buffer and that is of the starting bit in the coded bit sequence that is output through rate matching in the second time unit (the next time unit of the first time unit). Therefore, starting from the second time unit, the network device and the terminal device can align locations that are in circular buffers and that are of starting bits in bit selection in each rate matching. This increases a decoding success rate.

It should be noted that, as mentioned in the signaling design of the scheduling information in S201, if the scaling factor K is equal to the quantity N of slots, it may be understood that the network device does not support a TBoMS repetition in the N slots, and the quantity of slots represents only a quantity of slots allocated to one TBoMS transmission; or if K<N, the quantity of slots represents a total quantity of slots including transmission of a TBoMS repetition, and K represents a quantity of slots for one TBoMS transmission, and if N/K is an integer, a quantity of TBoMS repetitions is N/K. In step 3 in S202, in Algorithm 3, Algorithm 4, and Algorithm 5 in the possible implementations 1, 3, and 4, that n=mK is used as a determining condition, where n is a quantity of times of rate matching, and m is an integer. When the condition is met, $k_{r,n} = k_0$, and the starting bit location $k_{r,n}$ in bit selection in rate matching of the code block #r in the time unit n is determined by $k_0$, that is, specified by the RV. When K=N, that n=0 may be used as a special case in which n=mK. In this case, $\overline{k}_0$ is indicated by the RV. When 1<K<N, and N/K is an integer, $k_m$ is indicated by the RV, where m=N/K.

Optionally, the method 200 further includes:

It should be understood that, it is assumed that the network device indicates the terminal device to send the UCI and multiplex the UCI in a bth slot, but the terminal device does not detect the PDCCH. In the foregoing solution, the network device and the terminal device can align starting bits in bit sequences that are output through rate matching in all slots after the bth slot. The method 200 may further optimize a resource mapping method in the bth slot.

In the conventional technology, when the UCI is multiplexed to some time-frequency resources in the bth slot, bits of data information originally carried on the some time-frequency resources are postponed backward. When the terminal device misses PDCCH detection, all bits sent by the terminal device in the bth slot are bits of the data information. In this case, the network device considers that the some time-frequency resources carry the UCI, and time-frequency resources other than the some time-frequency resources in the bth slot are bits of the data information. Consequently, the network device cannot correctly detect the UL-SCH in a current slot.

In S202, when the length of the bit sequence that is output through rate matching is calculated based on G in step 2 and the location that is in the circular buffer and that is of the starting bit in the bit sequence that is output through rate matching is calculated based on G in step 3, the terminal device maps a second coded bit sequence to a time-frequency resource in the first time unit, where the second coded bit sequence is a coded bit sequence that is output through rate matching in the first time unit, and a quantity of bits in the second coded bit sequence is equal to the parameter G corresponding to the first time unit. The terminal device maps the UCI to some time-frequency resources in the first time unit, to replace some bit sequences in the first coded bit sequence carried in the some time-frequency resources.

It should be understood that, when a data bit is mapped to a time unit (a slot is used as an example in this embodiment of this application), a UL-SCH is first mapped to all REs in the time unit, and then UCI is mapped to a corresponding resource in a puncturing manner. In this way, the UCI replaces resources carried on some REs in the time unit. In other words, a time-frequency resource occupied by a data bit other than a data bit replaced by the UCI in the time unit remains unchanged. In this embodiment of this application, in the foregoing solution, the UCI is multiplexed in the first time unit in a puncturing manner, so that a bit sequence that is included in the first transport block and that is carried on a time-frequency resource other than a time-frequency resource occupied by the UCI in the first time unit does not change. This increases a decoding success rate and accuracy of the network device.

In a second possible implementation, the terminal device calculates, based on aG corresponding to the time unit #n-1, the location of the starting bit in the bit sequence that is output through rate matching in the time unit #n, and calculates, based on G or G', a length of the bit sequence that is output through rate matching in the time unit #n. If quantities of OFDM symbols included in all time units are different, the time units correspond to different G. If the quantities of OFDM symbols included in all the time units are the same, the time units correspond to same G.

For details of S201', refer to the descriptions in S201 in the first possible implementation.

For details of S202', refer to the descriptions in S202 in the first possible implementation. A difference is as follows:
A parameter a is introduced, where 0<a≤1; and a product aG of a and G or [aG] is used to replace G in the first possible implementation to calculate the location that is in the circular buffer and that is of the starting bit in the bit sequence that is output through rate matching, where [] represents rounding up, rounding down, or rounding off. For example, a may be indicated by RRC signaling and DCI signaling. For example, a parameter used to indicate a in the RRC signaling may be one field added to a TDRA table, a parameter used to indicate a in the DCI may also be a newly added field, and a width of the newly added field in the RRC or the DCI, for example, 3 bits, 4 bits, or 5 bits, may represent 8/16/32 possible values respectively. For example, a possible value of a may be a subset in a set {0.1x, 0.2x, 0.01x}, where 2 bits indicate that a size of the subset is 4, 3 bits indicate that a size of the subset is 8, 4 bits indicate that a size of the subset is 16, 5 bits indicate that a size of the subset is 32, and 6 bits indicate that a size of the subset is 64.

Alternatively, a parameter G may be further introduced. In a second possible implementation, G-b is used to replace aG or [aG] to implement this method.

The following uses aG as an example to describe S202.

Specifically, in step 2, a length of the bit sequence that is output through rate matching is calculated based on the parameter G in the uplink transmission method provided in this application, and is denoted as $E_r$; and in step 3, $E_r$" is calculated based on aG, and a start point of the bit sequence that is output through rate matching is determined based on $E_r$". Alternatively, in step 2, a length $E_r$' of the bit sequence that is output through rate matching is calculated based on the parameter G' in the conventional technology; and in step 3, $E_r$" is calculated based on aG, and a start point of the bit sequence that is output through rate matching is determined based on $E_r$".

When $E_r$" is calculated based on aG, G in S202 in the first possible implementation is replaced with aG and then is substituted into a specific algorithm to obtain $E_r$", and $E_r$ is replaced with $E_r$" in a subsequent step for calculation.

Alternatively, aG may be replaced with a $G_n$, and $E_r$ is replaced with $E_r$" to implement the foregoing solution.

S203': The terminal device generates the PUSCH based on at least the UL-SCH, and sends the PUSCH to the network device.

In a possible case 1, the terminal device generates the PUSCH based on the UL-SCH. It should be understood that, in this case, the terminal device detects only signaling for sending the PUSCH, and the network device does not send the signaling indicating the terminal device to include the UCI on the PUSCH; or the network device sends the signaling indicating the terminal device to include the UCI on the PUSCH, but the terminal device misses signaling detection.

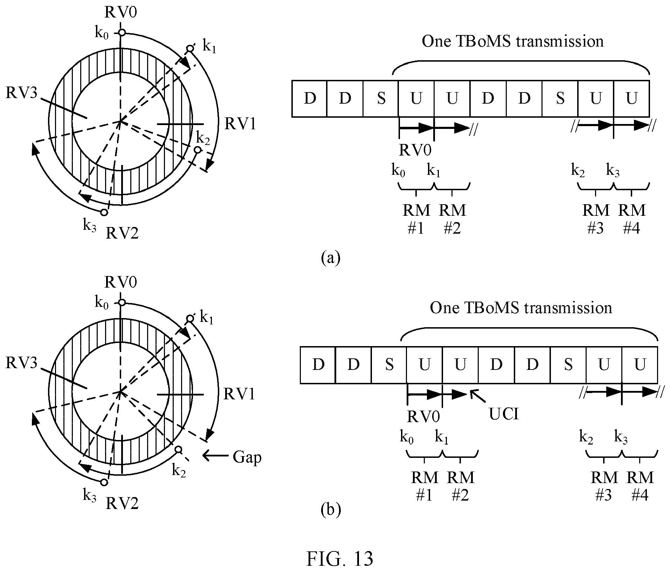

For example, as shown in (a) in FIG. 13, in this case, bit sequences in a circular buffer are sequentially carried by a PUSCH. It can be learned from comparison between (a) in FIG. 12 and (a) in FIG. 13 that a location of a starting bit in a bit sequence that is output through each rate matching in (a) in FIG. 13 is advanced relative to that in (a) in FIG. 12.

In a possible case 2, the terminal device multiplexes the UCI on the UL-SCH to generate the PUSCH.

It should be understood that, in this case, the terminal device detects signaling that is sent by the network device and that indicates the terminal device to send the PUSCH and carry the UCI on the PUSCH.

In an example, when the terminal device calculates, by using $E_r$' in step 2 in S202', the length of the bit sequence that is output through rate matching, it is assumed that the UCI is multiplexed in a 2nd slot of the PUSCH, and the terminal device performs rate matching in the 2nd slot. A start point in bit selection in rate matching is determined based on $E_r$" in rate matching in a previous uplink slot, that is, is determined based on aG, and a bit length that is output through rate matching in the previous uplink slot is $E_r$' determined based on G'. In this case, because the total quantity of coded bits of the UCI needs to be deducted from G', G' may be less than aG, or may be greater than aG. Therefore, when G' <aG, a starting bit in bit selection in rate matching in a 3rd uplink slot may still be later than an ending bit in 2nd bit selection in the circular buffer. As shown in (b) in FIG. 13, there is still a gap between the two bits. However, compared with (b) in FIG. 12, in (b) in FIG. 13, the location of the starting bit in the bit sequence that is output through each rate matching is advanced, and a gap between the starting bit in the bit sequence that is output through 3rd rate matching and the ending bit in the bit sequence that is output through 2nd rate matching is also smaller. Alternatively, when G' >aG, a starting bit in bit selection in 3rd rate matching may be a next bit of an ending bit in 2nd bit selection in the circular buffer. As shown in (a) in FIG. 13, there is no gap between the starting bit in bit selection in 3rd rate matching and the ending bit in 2nd bit selection, and a location of a starting bit in a bit sequence that is output through each rate matching in (a) in FIG. 13 is advanced relative to that in (a) in FIG. 12.

In another example, when the terminal device calculates, by using $E_r$ in step 2 in S202', the length of the bit sequence that is output through rate matching, the UCI is multiplexed in a 2nd slot of the PUSCH, and the terminal device performs rate matching in the 2nd uplink slot. A start point in bit selection in rate matching is determined based on $E_r$" in rate matching in a previous uplink slot, that is, is determined based on aG, and a bit length that is output through rate matching in the previous uplink slot is determined based on G, where aG<G. In this case, as shown in (a) in FIG. 13, a starting bit in bit selection in rate matching in a third uplink slot is a next bit of an ending bit in bit selection in the second uplink slot in the circular buffer, and a location of a starting bit in a bit sequence that is output through each rate matching in (a) in FIG. 13 is advanced relative to that in (a) in FIG. 12.

It should be understood that, through comparison between (a) in FIG. 13 and (b) in FIG. 13, regardless of whether the UCI is multiplexed on the PUSCH, a start point in bit selection in each rate matching remains consistent, that is, the start point is irrelevant to UCI multiplexing.

In this embodiment of this application, G is multiplied by a that is greater than 0 and less than 1, so that the network device can calculate the location that is in the circular buffer and that is of the starting bit in the first coded bit sequence in advance. This shortens a gap between the ending bit in the second coded bit sequence and the starting bit in the first coded bit sequence, and improves channel quality.

It should be noted that, as mentioned in the signaling design of the scheduling information in S201', if the scaling factor K is equal to the quantity N of slots, it may be understood that the network device does not support a TBoMS repetition, and the quantity of slots represents only a quantity of slots allocated to one TBoMS transmission; or if K<N, it may be understood that the network device supports a TBoMS repetition, the quantity of slots represents a total quantity of slots including transmission of a TBoMS repetition, and K represents a quantity of slots for one TBoMS transmission, and if N/K is an integer, a quantity of TBoMS repetitions is N/K. In step 3 in S202', in Algorithm 3, Algorithm 4, and Algorithm 5 in the possible implementations 1, 3, and 4, that n=mK is used as a determining condition, where n is a quantity of times of rate matching, and m is an integer. When the condition is met, $k_{r,0} = k_0$, and the starting bit location $k_{r,n}$ in bit selection in rate matching of the code block #r in the time unit #n is determined by $k_0$, that is, specified by the RV. When K=N, that n=0 may be used as a special case in which n=mK. In this case, $\bar{k}_0$ is indicated by the RV. When 1<K<N, and N/K is an integer, $k_m$ is indicated by the RV, where m=N/K.

Optionally, the method 200 further includes:

It should be understood that, it is assumed that the network device indicates the terminal device to send the UCI and multiplex the UCI in a $b^{th}$ slot, but the terminal device does not detect the PDCCH. In the foregoing solution, the network device and the terminal device can align starting bits in bit sequences that are output through rate matching in all slots after the $b^{th}$ slot. The method 200 may further optimize a resource mapping method in the $b^{th}$ slot.

In the conventional technology, when the UCI is multiplexed to some time-frequency resources in the $b^{th}$ slot, bits of data information originally carried on the some time-frequency resources are postponed backward. When the terminal device misses PDCCH detection, all bits sent by the terminal device in the $b^{th}$ slot are bits of the data information. In this case, the network device considers that the some time-frequency resources carry the UCI, and time-frequency resources other than the some time-frequency resources in the $b^{th}$ slot are bits of the data information. Consequently, the network device cannot correctly detect the UL-SCH in a current slot.

In S202', when the length of the bit sequence that is output through rate matching is calculated based on G, $G_n$, aG, or a $G_n$ in step 2 and the location that is in the circular buffer and that is of the starting bit in the bit sequence that is output through rate matching is calculated based on G, $G_n$, aG, or a $G_n$ in step 3, the terminal device maps a second coded bit sequence to a time-frequency resource in the first time unit, where the second coded bit sequence is a coded bit sequence that is output through rate matching in the first time unit, and a quantity of bits in the second coded bit sequence is equal to the parameter G corresponding to the first time unit. The terminal device maps the UCI to some time-frequency resources in the first time unit, to replace some bit sequences in the first coded bit sequence carried in the some time-frequency resources.

It should be understood that, when a data bit is mapped to a time unit (a slot is used as an example in this embodiment of this application), a UL-SCH is first mapped to all REs in the time unit, and then UCI is mapped to a corresponding resource in a puncturing manner. In this way, the UCI replaces resources carried on some REs in the time unit. In other words, a time-frequency resource occupied by a data bit other than a data bit replaced by the UCI in the time unit remains unchanged. In this embodiment of this application, the UCI is multiplexed in the first time unit in a puncturing manner, so that a bit sequence that is included in the first transport block and that is carried on a time-frequency resource other than a time-frequency resource occupied by the UCI in the first time unit does not change. This increases a decoding success rate and accuracy of the network device. In a third possible implementation, the terminal device calculates, based on G corresponding to the time unit #n-1 and $Z_c$, a location of a starting bit in a bit sequence that is output through rate matching in a time unit #n.

For details of S201", refer to corresponding descriptions in the first possible implementation. For details of S202", refer to corresponding descriptions in the first possible implementation. A difference is as follows:

Step 3: The terminal device determines a starting bit location in bit selection in rate matching, where the following several possible solutions are used for replacement:

Solution 1:

A starting bit in a bit sequence that is output through current rate matching is denoted as $k_n$, and an ending bit in previous rate matching is denoted as $l_{n-1}$. In this case, a manner of determining the starting bit in current rate matching

$$k_n = \left\lceil \frac{l_{n-1}}{Z_c} \right\rceil Z_c , \quad k_n = \left\lfloor \frac{l_{n-1}}{Z_c} \right\rfloor Z_c$$

based on the ending bit in previous rate matching may be, for example,                                              , or

$$k_n = \left\lceil \frac{l_{n-1}}{Z_c} \right\rceil Z_c$$

, where $\left\lceil \frac{l_{n-1}}{Z_c} \right\rceil$, $\left\lfloor \frac{l_{n-1}}{Z_c} \right\rfloor$ , and $\left\lceil \frac{l_{n-1}}{Z_c} \right\rceil$ respectively represent rounding off, rounding down, and

rounding up of $\dfrac{l_{n-1}}{Z_c}$ . $l_{n-1}$ may be explicitly calculated based on a starting location and a length, or may be obtained by recording a last bit location in previous rate matching, or the like.

Solution 2:

A location of a starting bit in a bit sequence that is output through current rate matching is determined based on a location of a starting bit in a bit sequence that is output through previous rate matching. Specifically, the location of the starting bit in the bit sequence that is output through current rate matching may be determined based on the location of the starting bit that is output through previous rate matching and a gap between starting bits in bit sequences that are output through two consecutive times of rate matching.

$$k_n = \mathrm{mod}(k_{n-1} + I_r Z_c, \left\lceil \dfrac{N_{cb}}{Z_C} \right\rceil Z_c)$$

In an example, $k_n = \mathrm{mod}(k_{n-1} + I_r Z_c, N_{cb})$, or , where the starting bit in the bit sequence that is output through previous rate matching is denoted as $k_{n-1}$, the starting bit in the bit sequence that is output through current rate matching is denoted as $k_n$, $N_{cb}$ represents a code block size, n represents a time unit, $I_r Z_c$ is the gap between the starting bits in the bit sequences that are output through the two consecutive times of rate matching, $Z_c$ is a low-density parity-check LDPC factor, and $\left\lceil \dfrac{N_{cb}}{Z_C} \right\rceil$ represents rounding off, rounding up, or rounding down of $\dfrac{N_{cb}}{Z_C}$ .

I in the gap between the starting bits in the bit sequences that are output through two consecutive times of rate matching may be calculated in the following manner. $I_r = \left\lceil \dfrac{E_r}{Z_c} \right\rfloor, \left\lfloor \dfrac{E_r}{Z_c} \right\rfloor$ , or $\left\lceil \dfrac{E_r}{Z_c} \right\rceil$ ; $E_r$ is the length of the bit sequence that is output through previous rate matching and that is obtained through calculation based on G in step 2 in S202; $\left\lceil \dfrac{E_r}{Z_c} \right\rfloor, \left\lfloor \dfrac{E_r}{Z_c} \right\rfloor$ , and $\left\lceil \dfrac{E_r}{Z_c} \right\rceil$ respectively represent rounding off, rounding down, and rounding up of $\dfrac{E_r}{Z_c}$ ; and r represents a code block.

$$k_n = \mathrm{mod}(k_{n-1} + I_r, \left\lceil \dfrac{N_{cb}}{Z_C} \right\rceil Z_C)$$

In another example, $k_n = \mathrm{mod}(k_{n-1} + I_r, N_{cb})$, or , where the starting bit in the bit sequence that is output through previous rate matching is denoted as $k_{n-1}$, the starting bit in the bit sequence that is output through current rate matching is denoted as $k_n$, $N_{cb}$ represents a code block size, n represents a time unit, and $I_r$ is the gap between the starting bits in the bit sequences that are output through the two consecutive times of rate matching.

The gap $I_r$ between the starting bits in the bit sequences that are output through two consecutive times of rate matching may be calculated in the following manner. $I_r = \left\lceil \dfrac{E_r}{Z_c} \right\rfloor Z_c, \left\lfloor \dfrac{E_r}{Z_c} \right\rfloor Z_c$ , or $\left\lceil \dfrac{E_r}{Z_c} \right\rceil Z_c$ ; $E_r$ is the length of the bit sequence that is output through previous rate matching and that is obtained through calculation based on G in step 2 in S202; $\left[\dfrac{E_r}{Z_c}\right]$, $\left\lfloor\dfrac{E_r}{Z_c}\right\rfloor$, and $\left\lceil\dfrac{E_r}{Z_c}\right\rceil$ respectively represent rounding off, rounding down, and rounding up

of $\dfrac{E_r}{Z_c}$ ; r represents a code block; $Z_c$ is a low-density parity-check LDPC factor; and $\left[\dfrac{N_{cb}}{Z_C}\right]$ represents rounding off, rounding up, or rounding down of $\dfrac{N_{cb}}{Z_C}$ .

It should be noted that G in Solution 2 is calculated when quantities of OFDM symbols included in all time units are the same.

For example, a value in $I_r$ herein may be configured. For example, a column is added to the TDRA table for configuration, and a candidate value is a subset in {1, 2, ..., 66}, or a subset in {1, 2, ..., 55}.

The foregoing solution may alternatively be implemented in another manner: $E_r$ is replaced with $E_{r,n}$, and $I_r$ is replaced with $I_{r,n}$; or $E_r$ is replaced with $E_{r,n}'$, and $I_r$ is replaced with $I_{r,n}'$; or $E_r$ is replaced with $E_r'$ ; or $E_r$ is replaced with $E_{r,n}''$, and $I_r$ is replaced with $I_{r,n}$.

Solution 3:

Based on Solution 2, if a higher-layer parameter rateMatching is not set to limitedBufferRM, that is, the parameter $I_{LBRM}$ is equal to 0, $N_{cb}=N$. For example, for BG1, $N=66Z_c$. Therefore, the method in Solution 2 may be simplified as follows: $k_n = \mathrm{mod}(k_{n-1} + I_r, 66)$ , where $I_r$ is the same as that in Solution 2. It is noted that $k_n Z_c$ represents a starting bit location.

Alternatively, similarly, for example, for BG2, $N=50 Z_c$, and $k_n = \mathrm{mod}(k_{n-1} + I_r, 50)$.

It should be noted that, as mentioned in the signaling design of the scheduling information in S201, if the scaling factor K is equal to the quantity N of slots, it may be understood that the network device does not support a TBoMS repetition, and the quantity of slots represents only a quantity of slots allocated to one TBoMS transmission; or if K<N, it may be understood that the network device supports a TBoMS repetition, the quantity of slots represents a total quantity of slots including transmission of a TBoMS repetition, and K represents a quantity of slots for one TBoMS transmission, and if N/K is an integer, a quantity of TBoMS repetitions is N/K. In Solution 2 or Solution 3, when K=N, and when n=0, $k_0$ is indicated by the RV; and when 1<K<N, and N/K is an integer, $k_m$ is indicated by the RV, where m=N/K.

It should be understood that, when $N_{cb}=N$, Solution 3 can greatly reduce calculation overheads. In addition, in Solution 1 to Solution 3, $E_r$ may alternatively be replaced with $E_r'$ obtained through calculation of G' . The rest implementation is consistent with the foregoing specific implementation, and details are not described herein again.

For details of S203", refer to corresponding descriptions in the first possible implementation. For details of S204", refer to corresponding descriptions in the first possible implementation.

In this embodiment of this application, when resource mapping is performed on the terminal side, a step of searching for a location that is in the first coded bit sequence and that is of the last bit mapped to the previous time unit is reduced, and on the basis of determining, based on G, the location that is in the circular buffer and that is of the starting bit in the first coded bit sequence, the location is determined with reference to $Z_c$. This simplifies calculation in a mapping process and reduces overheads.

In a fourth possible implementation, the terminal device calculates, based on aG corresponding to the time unit #n-1 and $Z_c$, a location of a starting bit in a bit sequence that is output through rate matching in a time unit #n.

G in the third possible implementation is replaced with aG, and $E_r$ may be alternatively replaced with $E_r''$ obtained through calculation of aG. The rest implementation is consistent with the foregoing specific implementation, and details are not described herein again.

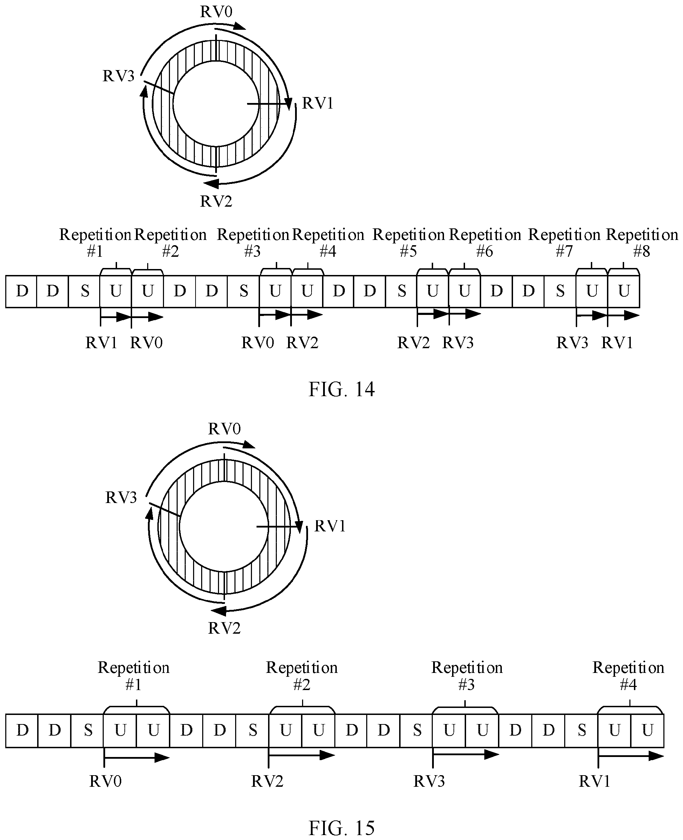

The following describes an uplink transmission method 300 provided in this application with reference to FIG. 14 and FIG. 15.

For a PUSCH repetition type A, when K>1, same symbol allocation is applied across K consecutive slots, and a PUSCH is limited to only a single transport layer. UE shall repeat a TB in the K consecutive slots and apply the same symbol allocation in the slots. A redundancy version applied on an $n^{th}$ transmission occasion of the TB is determined according to Table 1 above, where n=0, 1, ..., or K-1. For example, as shown in FIG. 14, the UE sends one repetition in each available uplink slot.

In the method 300, for a TBoMSPUSCH repetition, a quantity of slots for one TBoMS transmission is N, and a quantity of repetitions for one TBoMS transmission is M. When N>1 and M>1, a same symbol configuration is applied across N×M available slots. The UE shall repeat the TB in M groups (or M repetitions) of N available slots, and apply the same symbol allocation in the slots. The redundancy version applied on the $n^{th}$ transmission occasion of the TB may be determined according to Table 5, where n=0, 1, ..., or N×M-1, or n=0, N, 2N, ..., or (M-1)N. Within each group (or each repetition), a single RV is applied across the N consecutive available slots (or N transmission occasions). For example, as shown in FIG. 15, N=2, and M=4.

**Table 5**

| $rv_{id}$ indicated by DCI for scheduling the PUSCH | $rv_{id}$ used on the $n^{th}$ transmission occasion (TBoMS) | | | |
|---|---|---|---|---|
| | $n/N \bmod 4 = 0$ | $n/N \bmod 4 = 1$ | $n/N \bmod 4 = 2$ | $n/N \bmod 4 = 3$ |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

Compared with an existing method for dynamically scheduling a single slot for transmission of one repetition, this embodiment of this application provides a method for dynamically scheduling uplink transmission in a plurality of slots for one TBoMS transmission, thereby improving the TBoMS transmission method.

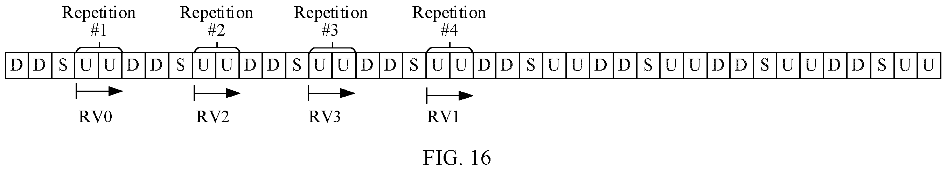

The following describes an uplink transmission method 400 provided in this application with reference to FIG. 16 to FIG. 19.

In the conventional technology, for RV cycling configuration scheduling of a PUSCH repetition type A, a higher-layer parameter repK-RV defines a redundancy version mode to be applied to a repetition. If cg-RetransmissionTimer is provided, a redundancy version of configured grant-uplink transmission is determined by UE. If the parameter repK-RV is not provided in configuredGrantConfig and cg-RetransmissionTimer is not provided, the redundancy version of configured grant-uplink transmission shall be set to 0. If a parameter repK-RVRetransmissionTimer is not provided in configuredGrantConfig and cg-, an $n^{th}$ transmission occasion in K repetitions is associated with a $(mod(n-1, 4)+1)^{th}$ value in a configured RV sequence, where n=1, 2, ..., or K. If startingFromRV0 in a configured grant configuration is set to 'off', initial transmission of a transport block may only start at a $1^{st}$ transmission occasion in the K repetitions; otherwise, initial transmission of a transport block starts at:

(1) the $1^{st}$ transmission occasion in the K repetitions, where the $1^{st}$ transmission occasion corresponds to a case in which a configured RV sequence is {0, 2, 3, 1}; or

(2) any transmission occasion in the K repetitions associated with RV=0, where the any transmission occasion corresponds to a configured RV sequence {0, 3, 0, 3}; or

(3) any transmission occasion in the K repetitions other than a last transmission occasion when K≥8, where the any transmission occasion corresponds to a configured RV sequence {0, 0, 0, 0}.

In the method 400, the higher-layer parameter repK-RV defines a redundancy version mode to be applied to a repetition. If cg-RetransmissionTimer is provided, a redundancy version of configured grant-uplink transmission is determined by UE. If the parameter repK-RV is not provided in configuredGrantConfig and cg-RetransmissionTimer is not provided, for each repetition (or each group of N transmissions), the redundancy version of configured grant-uplink transmission shall be set to 0. If the parameter repK-RV is provided in configuredGrantConfig and cg-Retransmission-Timer is not provided, an $n^{th}$ transmission occasion in M×N transmission occasions is associated with a $(mod((n-1)/N, 4)+1)^{th}$ value in a configured RV sequence, where n=1, N+1, 2N+1, ..., or (M-1)×N+1. If startingFromRV0 in a configured grant configuration is set to off, initial transmission of a transport block may only start at a $1^{st}$ transmission occasion in the M×N transmission occasions; otherwise, initial transmission of a transport block may start at:

(1) the $1^{st}$ transmission occasion in the M×N transmission occasions, where the $1^{st}$ transmission occasion corresponds to a configured RV sequence {0, 2, 3, 1}; or

(2) any transmission occasion in the M×N transmission occasions associated with RV=0, where the any transmission occasion corresponds to a configured RV sequence {0, 3, 0, 3 }; or

(3) any transmission occasion in the M×N transmission occasions associated with RV=0, where the any transmission occasion corresponds to a configured RV sequence {0, 0, 0, 0}; or

(4) any transmission occasion in the M×N transmission occasions associated with RV=0 other than an $((M-1)×N+1)^{th}$ transmission occasion that meets a condition 1, where the any transmission occasion corresponds to a configured RV sequence {0, 0, 0, 0}.

The condition 1 is: M≥µ, N≥µ, and M×N≥µ, where µ=2, 4, 8, 16, 32, or 64.

In each repetition of single TBoMS, a single RV is applied across N consecutive available slots (or N transmission occasions).

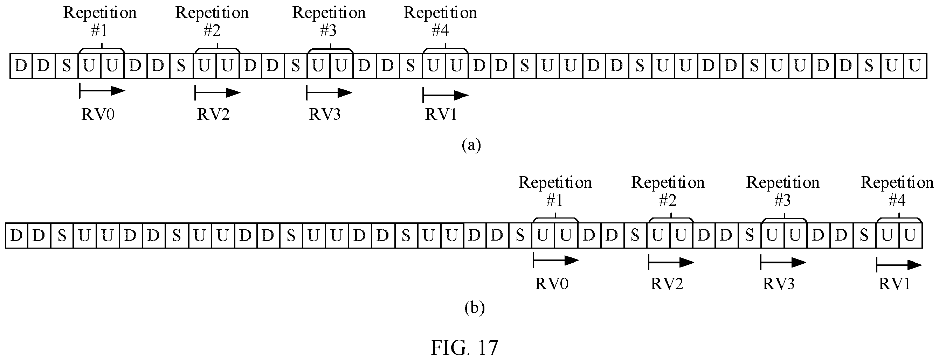

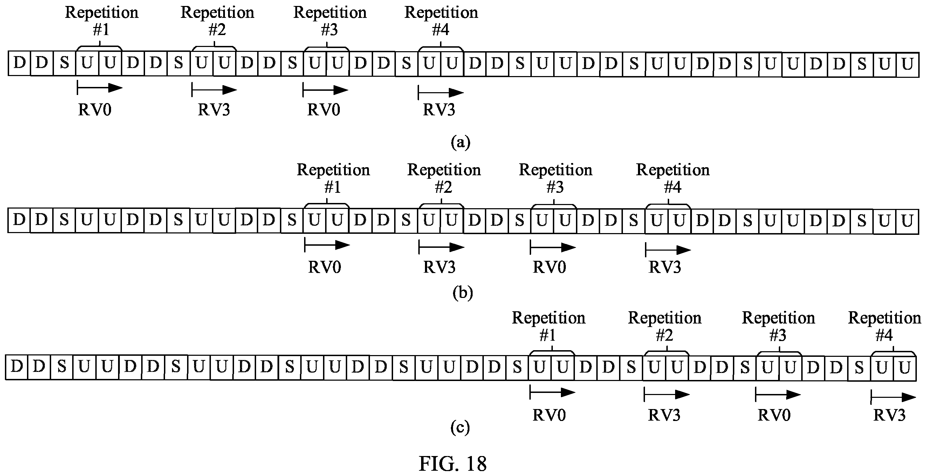

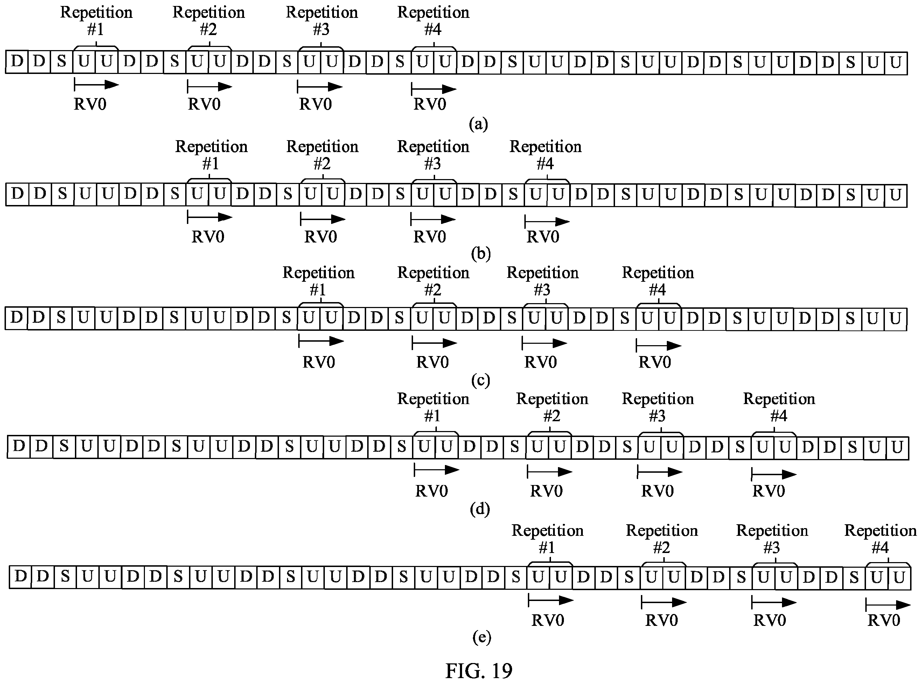

The following separately describes several specific implementations by using an example in which N=2 and M=4. FIG. 16 corresponds to *startingFromRV0* set to *'off'*, FIG. 17 corresponds to a *startingFromRV0* set to *'on'* & *RV sequence* {0,2,3,1 }, FIG. 18 corresponds to a *startingFromRV0* set to *'on'* & *RV sequence* {0,3,0,3}, and FIG. 19 corresponds to a *startingFromRV0* set to *'on'* & *RV sequence* {0,0,0,0}.

Compared with an existing method for dynamically scheduling a single slot for transmission of one repetition, this embodiment of this application provides a method for statically scheduling uplink transmission in a plurality of slots for one TBoMS transmission, thereby improving the TBoMS transmission method.

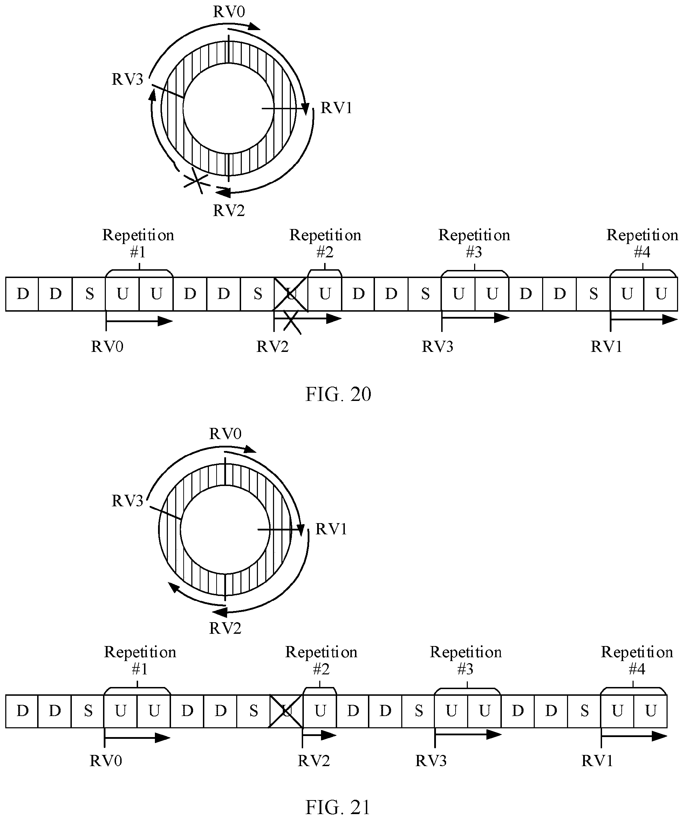

The following describes an uplink transmission method 500 in this application with reference to FIG. 20 to FIG. 22.

For the PUSCH repetition Type A, regardless of whether PUSCH transmission on a transmission occasion is canceled, the RV is still cyclically performed according to the method shown in FIG. 14. Herein, it is assumed that a 1st downlink slot corresponds to RV0. In other words, the RV corresponding to PUSCH transmission on the canceled transmission occasion is skipped. More accurately, it is determined that the RV corresponding to each transmission occasion is unchanged, as shown in Table 6.1.2.1-2. For reasons for canceling transmission on some time domain resources, refer to Case 1 to Case 6.

In the method 500, in a case in which transmission in some time units in TBOMS transmission is canceled, three uplink transmission solutions are proposed. The following uses an example in which one time unit is one slot for description.

Solution 1: For TBoMS PUSCH transmission (regardless of a repetition or a non-repetition), if PUSCH transmission on a transmission occasion is canceled, the RV is still cyclically performed according to the method described in Embodiment 1/2, and coded bits corresponding to PUSCH transmission on the canceled transmission occasion are skipped. (The "corresponding coded bits" are coded bits that are output through code block segmentation, channel coding, rate matching, and code block concatenation.)

As shown in FIG. 20, for example, four repetitions are performed during one transmission, and two slots are occupied for one repetition. Transmission in a 1st slot corresponding to a repetition #2 is canceled. In this case, a bit sequence that originally needs to be transmitted continues to be transmitted in a 2nd slot corresponding to the repetition #2, and a bit sequence that is transmitted in another repetition remains unchanged.

It should be noted that one slot in the method is one available slot and corresponds to one transmission occasion. A correspondence may be an entire slot, or some slots, or some slots indicated by S and L, where S and L are a starting symbol and a length in an RRC signaling TDRA table. The available slot is determined based on an RRC configured uplink-downlink slot configuration (for example, tdd-UL-DL-ConfigurationCommon or tdd-UL-DL-ConfigurationDedicated), the TDRA table, and SSB determining, and discarding due to a conflict is not considered.

Solution 2: For TBoMS PUSCH transmission (regardless of a repetition or a non-repetition), if PUSCH transmission on a transmission occasion is canceled, the RV is still cyclically performed according to the method 300 or 400.

In addition, if a starting bit in bit selection in rate matching on the transmission occasion of canceled PUSCH transmission is indicated by an RV (that is, a 1st transmission occasion for one repetition, or a 1st slot in M groups of N slots), a starting bit in bit selection in rate matching on a next transmission occasion of the transmission occasion of canceled PUSCH transmission is indicated by the RV.

If a starting bit in rate matching on the transmission occasion of canceled PUSCH transmission is not indicated by an RV (that is, a non 1st transmission occasion for one repetition, or a non 1st slot in M groups of N slots), a starting bit in bit selection in rate matching on a next transmission occasion of the transmission occasion of canceled PUSCH transmission is closely connected to an ending bit in bit selection in rate matching on a previous transmission occasion of the transmission occasion of canceled PUSCH transmission.

It should be noted that one slot in the method is one available slot and corresponds to one transmission occasion. A correspondence may be an entire slot, or some slots, or some slots indicated by S and L, where S and L are a starting symbol and a length in an RRC signaling TDRA table. The available slot is determined based on an RRC configured uplink-downlink slot configuration (tdd-UL-DL-ConfigurationCommon or tdd-UL-DL-ConfigurationDedicated), the TDRA table, and SSB determining, and discarding due to a conflict is not considered.

Solution 3: An available slot is re-defined, and the available slot is determined based on an RRC configured uplink-downlink slot configuration (for example, tdd-UL-DL-ConfigurationCommon or tdd-UL-DL-ConfigurationDedicated) and the TDRA table, and discarding due to a conflict is considered. One available slot corresponds to one transmission occasion. A correspondence may be an entire slot, or some slots, or some slots indicated by S and L, where S and L are a starting symbol and a length in an RRC signaling TDRA table. Then, RV cycling is performed by using the method described in Embodiment 1/2.

The following describes an uplink transmission method 600 provided in this application. According to the method 600, rate matching can be performed in N slots together. Specifically, in the method, a parameter G is a total quantity of coded bits available for transmission of a transport block and UCI in one time unit, and the one time unit is the N slots.

UCI multiplexing is performed in the N slots in a puncturing manner, and the UCI is multiplexed in only one slot.

Because rate matching is performed only once in the N slots, bit selection is performed only once, a start point is determined by an RV, and a length is determined based on G.

First, UL-SCH bits are obtained after rate matching and code block concatenation. Bits corresponding to the UCI are multiplexed on UL-SCH bits in a puncturing manner. The UL-SCH bits multiplexed with the UCI are mapped to time-frequency resources of the N slots.

The following describes an uplink transmission method 700 provided in this application.

In a possible implementation 1, A-CSI (aperiodic CSI) is not expected to be multiplexed on a TBoMS PUSCH.

It should be understood that the A-CSI is triggered by DCI, and is multiplexed on a PUSCH scheduled by the DCI to complete reporting of the A-CSI. If the DCI schedules a plurality of PUSCHs, for example, a TBoMS, the A-CSI is multiplexed only on a 1st PUSCH to complete reporting. However, in an output coded bit sequence obtained according to a current rate matching method, generally, a 1st time unit carries systematic bits. Therefore, the A-CSI is not expected to be multiplexed on the TBoMS PUSCH, so that impact of A-CSI multiplexing on systematic bits in the TBoMS PUSCH can be reduced, and a decoding success rate can be increased.

In a possible implementation 2, if A-CSI triggered by a network device by using DCI and a configured grant (configured grant, CG) TBoMS PUSCH that is indicated by other information overlap in a time unit, or resources used to transmit the A-CSI and the CG TBoMS PUSCH overlap in time domain, the following several transmission manners may be used:

Manner 1: Cancel PUSCH transmission in an overlapped time unit.
Manner 2: Cancel A-CSI transmission in an overlapped time unit.

In a possible implementation 3, CSI is not expected to be multiplexed on a TBoMS PUSCH.

It should be understood that a quantity of bits of the CSI is relatively large. Compared with multiplexing the CSI on the TBoMS PUSCH or transmitting the CSI on the TBoMS PUSCH in a puncturing manner, impact of CSI multiplexing on systematic bits in the TBoMS PUSCH can be reduced, and a decoding success rate can be increased. The CSI means all types of CSI.

Herein, puncturing in this embodiment of this application is explained. For example, when the CSI is multiplexed on the TBoMS PUSCH in a puncturing manner, assuming that the CSI occupies 40 bits, which are respectively {a1, a2, ..., a40}, the TBoMS PUSCH occupies 100 bits, which are respectively {b1, b2, ..., b100}, and the CSI is multiplexed on an 11th bit to a 50th bit of the TBoMS PUSCH, {a1, a2, ..., a40} is replaced with {b11, b12..., b50}, and locations of {b1, b2..., b10} and {b51, b52, ..., b100} remain unchanged.

In a possible implementation 4, a starting bit in a 1st time unit is determined by the RV, starting bits in a 2nd time unit to an $n^{th}$ time unit are determined by using Method #1, and starting bits in an $(n+1)^{th}$ time unit to an $N^{h}$ time unit are determined by using Method #2.

Method #1 is a method for calculating an index of a starting bit in bit selection in a rate matching process in a time unit based on G' in the foregoing embodiment of this application. Method #2 is a method for calculating an index of a starting bit in bit selection in a rate matching process in a time unit based on G in the foregoing embodiment of this application. For definitions of G and G', refer to the foregoing descriptions. Details are not described herein again.

$$E_n = N_L Q_m \left\lceil \frac{G_n}{N_L Q_m C'} \right\rceil \quad , \text{or} \quad E_n = N_L Q_m \left\lfloor \frac{G_n}{N_L Q_m C'} \right\rfloor$$

Specifically, $k_{n+1} = l_n + 1$, where $l_n = k_n + E_n - 1$, and

; $k_n$ and $l_n$ respectively represent an index of a starting bit and an index of an ending bit in bit selection in the rate matching process in the $n^{th}$ time unit; $k_{n+1}$ represents an index of a starting bit in bit selection in a rate matching process in a next time unit (that is, the $(n+1)^{th}$ time unit); $N_L$ represents a quantity of layers; $Q_m$ represents a modulation order; C' represents a quantity of scheduled code blocks; $G_n$ represents a quantity of available coded bits available for transmission of a TB in the $n^{th}$ time unit; and $E_n$ is a quantity of bits in a bit sequence. In Method #1, $G_n$ herein is G'; and in Method #2, $G_n$ herein is G. For specific implementation, refer to a corresponding part in the method 200. A start point of a bit sequence that is output through rate matching in each time unit is calculated based on G, and a length of the output bit sequence is calculated based on G or G'.

A value of n may be a default value. For example, n=2, n=3, or n=4. Alternatively, a value of n may be a specified value. For example, a column is added to the TDRA table to indicate a value of n, and a value set of n is n={2, 3, 4} or the like.

Possible implementation 5:

According to the protocol release Rel-15/16, the UCI that is multiplexed on the PUSCH is classified into three types: a HARQ-ACK, CSI, and CG-UCI.

1. For multiplexing of the HARQ-ACK, the DCI schedules the UE to receive the PDSCH, and the UE feeds back the HARQ-ACK on the PUCCH after receiving the PDSCH. If DCI detection is missed, non-alignment occurs in Method #1. If Method #2 is used, it is possible that a systematic bit is punctured. However, considering that a quantity of HARQ-ACK bits is small, impact of multiplexing by puncturing on the PUSCH is small, and therefore a performance loss of Method #2 is not large.
2. For multiplexing of the CSI, a problem of missing detection does not occur, and Method #1 may be used. On the contrary, if Method #2 is used, because a quantity of bits of the CSI is large, impact of puncturing on the PUSCH is large, and therefore a performance loss of Method #2 is large.

There are three CSI feedback modes: periodic CSI (period CSI, P-CSI), semi-persistent CSI (semi-persistent CSI, SP-CSI), and aperiodic (aperiodic, A-CSI).

(1) The P-CSI is configured and triggered by using RRC signaling, and is carried on a PUCCH for reporting. Therefore, a case in which the terminal device misses DCI detection does not occur.
(2) The SP-CSI is configured by using RRC signaling, is triggered by using MAC CE signaling, and is carried on a PUCCH or a PUSCH for reporting. Therefore, a case in which the terminal device misses DCI detection does not occur.
(3) The A-CSI is configured by using RRC signaling, is triggered by using DCI signaling, and is carried on a PUSCH for reporting. The PUSCH is also scheduled by using the DCI. Because the DCI triggers and schedules the PUSCH at the same time, if DCI detection is missed, the PUSCH is not transmitted. Therefore, there is no problem to be resolved in this application.

It can be learned from the foregoing descriptions that, because the P-CSI and the SP-CSI are not triggered by the DCI, the problem of missing detection does not occur. Because same DCI is used for scheduling the PUSCH and triggering reporting of the A-CSI, if DCI detection is missed, the PUSCH is not sent, and therefore the problem of missing detection does not occur.

3. For multiplexing of the CG-UCI, the CG-UCI is configured by using RRC signaling, and is triggered by using RRC or DCI. When the CG-UCI is triggered by using the RRC, a problem of missing detection does not occur. When the CG-UCI is triggered by using the DCI, a problem of missing detection occurs, but the PUSCH is not sent. Therefore, Method #1 is also applicable.

However, in consideration of the fact that joint coding is performed when the CG-UCI and the HARQ-ACK are multiplexed on the PUSCH at the same time, after coding, the CG-UCI and the HARQ-ACK are multiplexed on the PUSCH as the HARQ-ACK, and impact may be large due to direct puncturing.

In conclusion, DCI detection missing occurs only when the HARQ-ACK is multiplexed. A case of simultaneous multiplexing of the CG-UCI and the HARQ-ACK is special and needs to be further discussed.

For the foregoing case, the following several manners may be considered for processing.

Manner 1

In Method #2, $G_n$ represents a total quantity of coded bits available for transmission of a TB in an $n^{th}$ time unit assuming that no HARQ-ACK multiplexing occurs.

Example 1: When only the HARQ-ACK is multiplexed on the PUSCH, a total quantity of coded bits available for transmission of the HARQ-ACK in the $n^{th}$ time unit is not deducted from $G_n$. Example 2: When the UCI is multiplexed on the PUSCH and the UCI is the CSI and/or the CG-UCI, a total quantity of coded bits for transmission of the UCI in the $n^{th}$ time unit is deducted from $G_n$, that is, Method #1 is used.

Example 3: When the CSI and the HARQ-ACK are multiplexed on the PUSCH, a total quantity of coded bits for transmission of the CSI in the $n^{th}$ time unit is deducted from $G_n$, and a total quantity of coded bits for transmission of the HARQ-ACK in the $n^{th}$ time unit is not deducted. Example 1 is used as an example. Assuming that the HARQ-ACK occupies 10 bits, and the PUSCH occupies 100 bits, when the HARQ-ACK is multiplexed on the PUSCH in a puncturing manner, a puncturing location is last 10 bits in the 100 bits occupied by the PUSCH.

Manner 2

G. uses G' in Method #1. In other words, refer to the solution in the conventional technology. However, a HARQ-ACK multiplexing process is modified:

(1) When a quantity of bits occupied by the HARQ-ACK is less than or equal to 2 bits, the HARQ-ACK is multiplexed on the PUSCH in a puncturing manner in the conventional technology.
(2) When a quantity of bits occupied by the HARQ-ACK is greater than 2 bits, UL-SCH coded bits are still punctured, where a puncturing location is consistent with a location at which the HARQ-ACK is multiplexed for direct rate matching in the conventional technology. For details of UCI multiplexing in the conventional technology, refer to 38.212 6.2.7.

In an example, when the CG-UCI is multiplexed, the TBoMS is not applied to an unlicensed frequency band, and is applied only to a licensed spectrum.
It should be understood that the CG-UCI is only enhancement of a CG PUSCH in an unlicensed frequency band, that is, the CG PUSCH reports the CG-UCI only in the unlicensed spectrum, and does not report the CG-UCI in the licensed spectrum.
In another example, the CG-UCI and the HARQ-ACK are jointly coded, and are processed as the HARQ-ACK. In other words, this case is consistent with the HARQ-ACK solution in the foregoing example.
In a possible implementation 6, two switching manners of Method #1 and Method #2 are further described.
In a switching manner 1, switching is performed based on a location of the DCI.
If the DCI for scheduling the PDSCH (and the HARQ-ACK is multiplexed on the PUSCH) is present only before the DCI for scheduling the PUSCH, Method #1 is used; otherwise, Method #2 is used.
In a switching manner 2, switching is performed according to the indication in the TDRA table. For example, a column is added to the TDRA table, and the column includes one bit, to indicate that Method #1 or Method #2 is used.
In the foregoing several possible implementations, impact of CSI multiplexing on systematic bits in the TBoMS PUSCH can be reduced, and a decoding success rate can be increased.
The following describes an uplink transmission method 800 provided in this application.
The network device sends scheduling information to the terminal device. The scheduling information indicates the terminal device to send the TB through the PUSCH. Then, a network side does not receive the TB or does not receive a correct TB. The network device sends the scheduling information to the terminal device again, to indicate the terminal device to retransmit the TB. The terminal device receives the scheduling information, and the terminal device retransmits the TB to the network device based on the scheduling information. In addition, the scheduling information further indicates an uplink transmission manner used when the terminal device retransmits the TB.
Table 6 shows four uplink transmission manners. The network side may indicate to dynamically switch between different rows in the TDRA table by using DCI. N is a quantity of slots, and M is a quantity of repetitions.

**Table 6**

|  | Single-slot PUSCH | Type A PUSCH repetition | TBoMS | TBoMS repetition |
|---|---|---|---|---|
| N=1, and M=1 | √ | × | × | × |
| N=1, and M>1 | × | √ | × | × |
| N>1, and M=1 | × | × | √ | × |
| N>1, and M>1 | × | × | × | √ |

It should be understood that the TBoMS is limited to be transmitted on one CB, but the PUSCH is not limited to be transmitted on one CB. When dynamic switching is performed between single-slot PUSCHs or Type A PUSCH repetitions, and TBoMS or TBoMS repetitions, the following problem may occur: When switching from PUSCH transmission not limited to a single CB to TBoMS transmission limited to a single CB, it is likely that TBoMS transmission cannot be implemented due to lack of support of an existing protocol.
For the foregoing problem, the method 800 proposes a rule of dynamic switching between different transmission manners.
Rule 1: Dynamic switching is not performed.
Dynamic switching is not expected to be performed between a PUSCH/Type A PUSCH repetition {N=1, M≥1} and a TBoMS/TBoMS repetition {N>1, M≥1}. In other words, when initial transmission is the PUSCH/Type A PUSCH repetition {N=1, M≥1}, retransmission cannot be the TBoMS/TBoMS repetition {N>1, M≥1}. When initial transmission is the TBoMS/TBoMS repetition {N>1, M≥1}, retransmission cannot be the PUSCH/Type A PUSCH repetition {N=1, M≥1}.

For example, all rows in the TDRA table meet only N=1 or only N>1, and N=1 and N>1 cannot occur at the same time. Semi-static switching between the two is performed by reconfiguring the TDRA table through RRC.

Rule 2: Switching from initial TBoMS transmission to PUSCH retransmission is performed. Rule 2-1: Only switching from initial transmission of the TBoMS/IBoMS repetition {N>1, M≥1} to retransmission of the single-slot PUSCH {N=1, M=1} is supported.

Alternatively, rule 2-2: Only switching from initial transmission of the TBoMS/TBoMS repetition {N>1, M≥1} to retransmission of the Type A PUSCH repetition {N=1, M>1} is supported. Alternatively, rule 2-3: Only switching from initial transmission of the TBoMS/IBoMS repetition {N>1, M≥1} to the single-slot PUSCH {N=1, M=1} or to the Type A PUSCH repetition {N=1, M>1} is supported.

Rule 3: Switching from initial PUSCH transmission to TBoMS retransmission is performed. Only when a single CB is transmitted, switching from initial transmission of the PUSCH/Type A PUSCH repetition {N=1, M≥1} to retransmission of the TBoMS/TBoMS repetition {N>1, M≥1} is supported; otherwise, dynamic switching is not supported.

In the foregoing embodiment, a rule for dynamically switching between different transmission manners is specified, so that a case in which TBoMS transmission cannot be implemented can be reduced.

The following describes an uplink transmission method 900 provided in this application.

Corresponding to the possible design 1 to the possible design 6 in S201 in the method 200, a column may be added to the TDRA table configured in PUSCH-TimeDomainAllocationList to indicate the quantity N of time units allocated to the TBoMS. For example, a repetition quantity configuration column of the PUSCH repetition type A, that is, numberOfRepetitions, is configured in the TDRA table, to indicate a quantity M of repetitions of a single TBoMS when TBoMS transmission is enabled. However, this implementation provides TDRA indications only for dynamic grant and TBoMS transmission of a configured grant type 2 (configured grant type 2) of configured grant scheduling, but does not cover TDRA indications for TBoMS transmission of a configured grant type 1 (configured grant type 1).

To further improve the uplink transmission method provided in this application, in the method 900, a new field is introduced into an information element (information element, IE) ConfiguredGrantCofig of RRC signaling to indicate the quantity N of allocated time units for single TBoMS transmission, so as to implement the TDRA indications for TBoMS transmission of the configured grant type 1 (configured grant type 1). For example, a specific indication manner may be shown as follows. A new field numberOfSlots indicates N, and N includes at least {2, 4, 8}, for example, {1, 2, 4, 8}.

For example, for TBoMS transmission of the configured grant type 1 or the configured grant type 2, if N exists in the TDRA table, N is provided by an index row in the TDRA table; otherwise, N is provided by a newly added field in ConfiguredGrantCofig. Further, if N is provided by a newly added field in ConfiguredGrantCofig, and N>1, TBoMS transmission is enabled. If N is provided by a newly added field in ConfiguredGrantCofig, and N=1, the single-slot PUSCH is enabled. When TBoMS transmission is enabled, an existing field repK indicates a quantity M of repetitions of the single TBoMS.

In the foregoing embodiment, the TDRA indication of TBoMS transmission of the configured grant type 1 is specified, so that the uplink transmission method provided in this embodiment of this application is further improved, and a decoding success rate is further increased.

The methods provided in embodiments of this application are described above in detail with reference to FIG. 6 to FIG. 23. Apparatuses provided in embodiments of this application are described in detail below with reference to FIG. 24 and FIG. 25.

FIG. 24 is a schematic block diagram of a communications apparatus used for uplink transmission according to an embodiment of this application. As shown in FIG. 24, the communications apparatus 10 may include a transceiver module 11 and a processing module 12.

The transceiver module 11 may be configured to receive information sent by another apparatus, or may be configured to send information to another apparatus. For example, the transceiver module 11 receives first indication information or sends second indication information. The processing module 12 may be configured to perform content processing of the apparatus, for example, determine, based on a parameter G corresponding to a first time unit, a location that is in a circular buffer and that is of a starting bit in a first coded bit sequence.

In a possible design, the communications apparatus 10 may correspond to the terminal device in the foregoing method embodiment.

Specifically, the communications apparatus 10 may correspond to the terminal device or the UE in any one of the method 100 to the method 600 according to embodiments of this application. The communications apparatus 10 may include modules configured to perform operations performed by the terminal device in the corresponding method. In addition, each unit in the communications apparatus 10 is configured to implement an operation performed by the terminal device in the corresponding method.

For example, when the communications apparatus 10 corresponds to the terminal device in the method 100, the transceiver module 11 is configured to perform steps S101, S102, and S104, and the processing module 12 is configured to perform S103.

For example, when the communications apparatus 10 corresponds to the terminal device in the method 200, the transceiver module 11 is configured to perform steps S201 and S203, and the processing module 12 is configured to perform S202.

In another possible design, the communications apparatus 10 may correspond to the network device in the foregoing method embodiment.

Specifically, the communications apparatus 10 may correspond to the network device in any one of the method 100 to the method 400 according to embodiments of this application. The communications apparatus 10 may include modules configured to perform operations performed by the network device in the corresponding method. In addition, each unit in the communications apparatus 10 is configured to implement an operation performed by the network device in the corresponding method.

For example, when the communications apparatus 10 corresponds to the network device in the method 100, the transceiver module 11 is configured to perform steps S101, S102, and S104, and the processing module 12 is configured to perform S105.

For example, when the communications apparatus 10 corresponds to the network device in the method 200, the transceiver module 11 is configured to perform steps S201 and S203, and the processing module 12 is configured to perform step S204.

FIG. 25 is a schematic diagram of a communications apparatus 20 according to an embodiment of this application.

In a possible design, the apparatus 20 may be a network device, or may be a chip, a chip system, or the like located in the network device.

In a possible design, the apparatus 20 may be a terminal device, including various handheld devices, vehicle-mounted devices, wearable devices, or computing devices that have a wireless communication function, or other processing devices connected to a wireless modem, and various forms of terminals, mobile stations, terminals, user equipment, soft terminals, or the like, or may be a chip, a chip system, or the like located in the terminal device.

The apparatus 20 may include a processor 21 (that is, an example of the processing module) and a memory 22. The memory 22 is configured to store instructions, and the processor 21 is configured to execute the instructions stored in the memory 22, so that the apparatus 20 implements the steps performed by the devices in the foregoing possible designs in the methods corresponding to FIG. 8 to FIG. 23.

Further, the apparatus 20 may include an input port 23 (that is, an example of the transceiver module) and an output port 24 (that is, another example of the transceiver module). Further, the processor 21, the memory 22, the input port 23, and the output port 24 may communicate with each other through an internal connection path, to transmit a control signal and/or a data signal. The memory 22 is configured to store a computer program, and the processor 21 may be configured to invoke the computer program from the memory 22 and run the computer program, to control the input port 23 to receive a signal and control the output port 24 to send a signal, so as to complete the steps of the terminal device, the radio access network device, the UE, or the base station in the foregoing methods. The memory 22 may be integrated into the processor 21, or may be disposed separately from the processor 21.

Optionally, if the uplink transmission apparatus 20 is a communications device, the input port 23 is a receiver, and the output port 24 is a transmitter. The receiver and the transmitter may be a same physical entity or different physical entities. When the receiver and the transmitter are a same physical entity, the receiver and the transmitter may be collectively referred to as a transceiver. Optionally, if the apparatus 20 is a chip or a circuit, the input port 23 is an input interface, and the output port 24 is an output interface.

In an implementation, it may be considered that functions of the input port 23 and the output port 34 are implemented through a transceiver circuit or a special-purpose transceiver chip. It may be considered that the processor 21 is implemented through a special-purpose processing chip, a processing circuit, a processor, or a general-purpose chip.

In another implementation, it may be considered that the device provided in this embodiment of this application is implemented by using a general-purpose computer. To be specific, program code for implementing functions of the processor 21, the input port 23, and the output port 24 is stored in the memory 22, and the general-purpose processor implements the functions of the processor 21, the input port 23, and the output port 24 by executing the code in the memory 22.

The modules or units in the apparatus 20 may be configured to perform actions or processing processes performed by a random access device (for example, a terminal device) in the foregoing method. To avoid repetition, detailed descriptions thereof are omitted herein.

For concepts, explanations, detailed descriptions, and other steps of the apparatus 20 that are related to the technical solutions provided in embodiments of this application, refer to the descriptions of the content in the foregoing methods or other embodiments. Details are not described herein again.

It should be understood that, in embodiments of this application, the processor may be a central processing unit (CPU, central processing unit), or the processor may be another general purpose processor, a digital signal processor (DSP, digital signal processor), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

An embodiment of this application further provides a computer-readable storage medium. The computer-readable storage medium stores computer instructions used to implement the method performed by the network device or the terminal device in the foregoing method embodiment. For example, when the computer program is executed by a computer, the computer is enabled to implement the method performed by the network device or the terminal device in the foregoing method embodiment.

An embodiment of this application further provides a computer-readable storage medium. The computer-readable storage medium stores computer instructions used to implement the method performed by the network device or the terminal device in the foregoing method embodiment. For example, when the computer program is executed by a computer, the computer is enabled to implement the method performed by the network device or the terminal device in the foregoing method embodiment.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded or executed on a computer, all or some of the procedures or functions according to embodiments of this application are generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that a term "and/or" in this specification describes only an association relationship between associated objects and represents that three relationships may exist. For example, A and/or B may represent the following three cases: Only A exists, both A and B exist, and only B exists. In addition, a character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, units and algorithm steps may be implemented by using electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An uplink transmission method, comprising:

   receiving, by a terminal device, first indication information from a network device, wherein the first indication information indicates the terminal device to send a first transport block in a plurality of time units;
   receiving, by the terminal device, second indication information from the network device, wherein the second indication information indicates the terminal device to send uplink control information UCI in a first time unit, and the first time unit is one of the plurality of time units;
   determining, by the terminal device based on a parameter G corresponding to the first time unit, a location that is in a circular buffer and that is of a starting bit in bit selection in a first coded bit sequence, wherein the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units; and
   sending, by the terminal device, the UCI and the first transport block to the network device in the plurality of time units.

2. The method according to claim 1, wherein
   the terminal device sends the first UCI to the network device in the first time unit, and sends the UCI and the first transport block to the network device in the plurality of time units.

3. The method according to claim 1 or 2, wherein the terminal device further determines, based on at least one of the following parameters, the location that is in the circular buffer and that is of the starting bit in bit selection in the first coded bit sequence:

   a starting bit index in bit selection in rate matching in the first time unit;
   a circular buffer length; or
   a quantity of filler bits in the circular buffer.

4. The method according to claim 1 or 3, wherein the method further comprises:
   when the terminal device does not send the first UCI to the network device in the first time unit, determining, by the terminal device based on a quantity of filler bits skipped when bit selection is performed in the first time unit, a starting bit index for performing bit selection in the second time unit.

5. The method according to any one of claims 1 to 4, wherein the method further comprises:
determining, by the terminal device based on a parameter G' corresponding to the second time unit, a bit length for performing bit selection in the second time unit, wherein the parameter G' is a total quantity of coded bits available for transmission of only the first transport block in the second time unit.

6. The method according to any one of claims 1 to 5, wherein that the first indication information indicates that the terminal device can send the first transport block in the plurality of time units comprises:
when the terminal device receives the first indication information and a quantity of time units indicated by the first indication information is greater than 1, the first indication information indicates that the terminal device can send the first transport block in the plurality of time units.

7. The method according to claim 6, wherein a quantity of the plurality of time units is at least 1, 2, 4, or 8.

8. An uplink transmission method, comprising:

sending, by a network device, first indication information to a terminal device, wherein the first indication information indicates the terminal device to send a first transport block in a plurality of time units;
sending, by the network device, second indication information to the terminal device, wherein the second indication information indicates the terminal device to send uplink control information UCI in a first time unit, and the first time unit is one of the plurality of time units;
receiving, by the network device, the first transport block from the terminal device in the plurality of time units; and
determining, by the network device based on a parameter G corresponding to the first time unit, a location that is in a circular buffer and that is of a starting bit in bit selection in a first coded bit sequence, wherein the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units.

9. The method according to claim 8, wherein the network device further determines, based on at least one of the following parameters, the location that is in the circular buffer and that is of the starting bit in bit selection in the first coded bit sequence:

a starting bit index in bit selection in rate matching in the first time unit;
a circular buffer length; or
a quantity of filler bits in the circular buffer.

10. The method according to claim 8 or 9, wherein the method further comprises:
determining, by the network device based on a quantity of filler bits skipped when bit selection is performed in the first time unit, a starting bit index for performing bit selection in the second time unit.

11. The method according to any one of claims 8 to 10, wherein the method further comprises:
determining, by the network device based on a parameter G' corresponding to the second time unit, a bit length for performing bit selection in the second time unit, wherein the parameter G' is a total quantity of coded bits available for transmission of only the first transport block in the second time unit.

12. The method according to any one of claims 8 to 11, wherein that the first indication information indicates that the terminal device can send the first transport block in the plurality of time units comprises:
when the terminal device receives the first indication information and a quantity of time units indicated by the first indication information is greater than 1, the first indication information that the terminal device can send the first transport block in the plurality of time units.

13. The method according to claim 12, wherein a quantity of the plurality of time units is at least 1, 2, 4, or 8.

14. An uplink transmission apparatus, comprising:

a transceiver module, configured to receive first indication information from a network device, wherein the first indication information indicates the terminal device to send a first transport block in a plurality of time units, wherein

the transceiver module is further configured to receive second indication information from the network device, wherein the second indication information indicates the terminal device to send uplink control information UCI in a first time unit, and the first time unit is one of the plurality of time units; and

a processing module, configured to determine, based on a parameter G corresponding to the first time unit, a location that is in a circular buffer and that is of a starting bit in bit selection in a first coded bit sequence, wherein the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units, wherein

the transceiver module is further configured to send the UCI and the first transport block to the network device in the plurality of time units.

15. The apparatus according to claim 14, wherein the transceiver module is configured to:
send the first UCI to the network device in the first time unit, and send the UCI and the first transport block to the network device in the plurality of time units.

16. The apparatus according to claim 14 or 15, wherein the processing module is further configured to determine, based on at least one of the following parameters, the location that is in the circular buffer and that is of the starting bit in bit selection in the first coded bit sequence:

a starting bit index in bit selection in rate matching in the first time unit;
a circular buffer length; and
a quantity of filler bits in the circular buffer.

17. The apparatus according to claim 14 or 16, wherein the method further comprises:
the processing module is further configured to: when the transceiver module does not send the first UCI to the network device in the first time unit, determine, based on a quantity of filler bits skipped when bit selection is performed in the first time unit, a starting bit index for performing bit selection in the second time unit.

18. The method according to any one of claims 14 to 17, wherein the method further comprises:
the processing module is further configured to determine, based on a parameter G' corresponding to the second time unit, a bit length for performing bit selection in the second time unit, wherein the parameter G' is a total quantity of coded bits available for transmission of only the first transport block in the second time unit.

19. The apparatus according to any one of claims 14 to 18, wherein that the first indication information indicates that the terminal device can send the first transport block in the plurality of time units comprises:
when the terminal device receives the first indication information and a quantity of time units indicated by the first indication information is greater than 1, the first indication information that the terminal device can send the first transport block in the plurality of time units.

20. The apparatus according to claim 19, wherein a quantity of the plurality of time units is at least 1, 2, 4, or 8.

21. An uplink transmission apparatus, comprising:

a transceiver module, configured to send first indication information to a terminal device, wherein the first indication information indicates the terminal device to send a first transport block in a plurality of time units, wherein

the transceiver module is further configured to send second indication information to the terminal device, wherein the second indication information indicates the terminal device to send uplink control information UCI in a first time unit, and the first time unit is one of the plurality of time units; and

the transceiver module is further configured to receive the first transport block from the terminal device in the plurality of time units; and

a processing module, configured to determine, based on a parameter G corresponding to the first time unit, a location that is in a circular buffer and that is of a starting bit in bit selection in a first coded bit sequence, wherein the first coded bit sequence is a coded bit sequence that is output through rate matching in a second time unit, the parameter G is a total quantity of coded bits available for transmission of the first transport block and the UCI in one time unit, G is a positive integer, and the second time unit is a next time unit of the first time unit in the plurality of time units.

22. The apparatus according to claim 21, wherein the processing module is further configured to determine, based on at least one of the following parameters, the location that is in the circular buffer and that is of the starting bit in bit selection in the first coded bit sequence:

   a starting bit index in bit selection in rate matching in the first time unit;
   a circular buffer length; and
   a quantity of filler bits in the circular buffer.

23. The apparatus according to claim 21 or 22, wherein the method further comprises:
   the processing module is further configured to determine, based on a quantity of filler bits skipped when bit selection is performed in the first time unit, a starting bit index for performing bit selection in the second time unit.

24. The apparatus according to any one of claims 21 to 23, wherein the method further comprises:
   the processing module is further configured to determine, based on a parameter G' corresponding to the second time unit, a bit length for performing bit selection in the second time unit, wherein the parameter G' is a total quantity of coded bits available for transmission of only the first transport block in the second time unit.

25. The apparatus according to any one of claims 21 to 24, wherein that the first indication information indicates that the terminal device can send the first transport block in the plurality of time units comprises:
   when the terminal device receives the first indication information and a quantity of time units indicated by the first indication information is greater than 1, the first indication information that the terminal device can send the first transport block in the plurality of time units.

26. The apparatus according to claim 25, wherein a quantity of the plurality of time units is at least 1, 2, 4, or 8.

27. An uplink transmission method, wherein the method comprises:

   receiving, by a terminal device, downlink control information and first information from a network device, wherein the downlink control information indicates the terminal device to transmit aperiodic channel state information A-CSI on a first time domain resource, the first information indicates to transmit a physical uplink shared channel PUSCH on a second time domain resource, and the first time domain resource overlaps the second time domain resource; and
   canceling, by the terminal device, transmission of the A-CSI, or canceling, by the terminal device, PUSCH transmission on an overlapped time domain resource between the first time domain resource and the second time domain resource.

28. An uplink transmission method, wherein the method comprises:

   receiving, by a terminal device, first indication information from a network device, wherein the first indication information indicates the terminal device to send a first transport block in a plurality of time units;
   receiving, by the terminal device, second indication information from the network device, wherein the second indication information indicates the terminal device to send a HARQ-ACK and first control information in a first time unit, the first control information comprises channel state information CSI and/or configured grant-uplink control information CG-UCI, and the first time unit is one of the plurality of time units;
   determining, by the terminal device based on a parameter G corresponding to the first time unit, a location that is in a circular buffer and that is of a starting bit in a first coded bit sequence, wherein the first coded bit sequence is a coded bit sequence that is output through rate matching in a second time unit, the parameter G is a total quantity of coded bits available for transmission of the first transport block and the HARQ-ACK in one time unit, G is a positive integer, and the second time unit is a next time unit of the first time unit in the plurality of time units; and
   sending, by the terminal device, the HARQ-ACK, the first information, and the first transport block to the network device in the plurality of time units.

29. An uplink transmission method, wherein the method comprises:

receiving, by a terminal device, first indication information from a network device, wherein the first indication information indicates the terminal device to send a first transport block in a plurality of time units;

receiving, by the terminal device, second indication information from the network device, wherein the second indication information indicates the terminal device to send a HARQ-ACK in a first time unit, and the first time unit is one of the plurality of time units;

when a quantity of bits occupied by the HARQ-ACK is greater than 2, multiplexing, by the terminal device, the HARQ-ACK to the first transport block in a puncturing manner; and

sending, by the terminal device to the network device in the plurality of time units, the first transport block to which the HARQ-ACK is multiplexed.

30. An uplink transmission method, wherein the method comprises:

sending, by a network device, first information to a terminal device, wherein the first information indicates the terminal device to send one transport block in a first transmission manner;

skipping receiving or incorrectly receiving, by the network device, the transport block; and

sending, by the network device, second information to the terminal device, wherein the second information indicates the terminal device to send the transport block in a second transmission manner, wherein

the first transmission manner is a single-code-block based physical uplink shared channel PUSCH or single-code-block based PUSCH repetition of a repetition type A, and the second transmission manner is a multi-slot transport block or multi-slot transport block repetition; or

the first transmission manner is a multi-code-block based physical uplink shared channel PUSCH or multi-code-block based PUSCH repetition of a repetition type A, and the first transmission manner is the same as the second transmission manner.

31. An uplink transmission method, comprising:

receiving, by a terminal device, first indication information from a network device, wherein the first indication information indicates the terminal device to send a first transport block in a plurality of time units;

receiving, by the terminal device, second indication information from the network device, wherein the second indication information indicates the terminal device to send uplink control information UCI in a first time unit, and the first time unit is one of the plurality of time units;

determining, by the terminal device based on a parameter G corresponding to the first time unit, a location that is in a circular buffer and that is of a starting bit in a first coded bit sequence, wherein the first coded bit sequence is a coded bit sequence that is output through rate matching in a second time unit, the parameter G is a total quantity of coded bits available for transmission of the first transport block and the UCI in one time unit, G is a positive integer, and the second time unit is one of the plurality of time units; and

sending, by the terminal device, the UCI and the first transport block to the network device in the plurality of time units.

32. The method according to claim 31, wherein the plurality of time units correspond to an equal parameter G.

33. The method according to claim 31 or 32, wherein the determining, by the terminal device based on a parameter G corresponding to the first time unit, a location that is in a circular buffer and that is of a starting bit in a first coded bit sequence comprises:

determining, based on the parameter G corresponding to the first time unit and a real periodicity $N'_{cb}$ of bit selection, the location that is in the circular buffer and that is of the starting bit in the first coded bit sequence.

34. The method according to claim 33, wherein the determining, based on the parameter G corresponding to the first time unit and a real periodicity $N'_{cb}$ of bit selection, the location that is in the circular buffer and that is of the starting bit in the first coded bit sequence comprises:

determining a first starting bit index $k'_{r,n}$ based on the parameter G corresponding to the first time unit and the real periodicity $N'_{cb}$ of bit selection; and

determining, based on the first starting bit index $k'_{r,n}$, the location $k_{r,n}$ that is in the circular buffer and that is of the starting bit in the first coded bit sequence, wherein
n represents an index of the second time unit in the plurality of time units, and the index is obtained by counting the plurality of time units from 0 in a time sequence.

**35.** The method according to claim 34, wherein the first starting bit index $k'_{r,n}$ meets the following:

$$k'_{r,n} = \mathrm{mod}\big(k'_{r,0} + n \times G, N'_{cb}\big),$$

wherein

$k'_{r,0}$ represents a first starting bit index of a 1st time unit in the plurality of time units, $N'_{cb}$ represents the real periodicity of bit selection, n represents the index of the second time unit in the plurality of time units, and the index is obtained by counting the plurality of time units from 0 in the time sequence.

**36.** The method according to claim 34 or 35, wherein the determining, based on the first starting bit index $k'_{r,n}$, the location $k_{r,n}$ that is in the circular buffer and that is of the starting bit in the first coded bit sequence comprises:

$$\text{if } 0 \le k'_{r,n} < K'_{NULL} - 2Z_c,\ k_{r,n} = k'_{r,n};$$

or

$$\text{if } K'_{NULL} - 2Z_c \le k'_{r,n} < N'_{cb},\ k_{r,n} = k'_{r,n} + (K_{NULL} - K'_{NULL}),$$

wherein

$K'_{NULL} - 2Z_c$ represents a location of a 1st filler bit in the circular buffer, and $K_{NULL} - K'_{NULL}$ represents a quantity of filler bits in the circular buffer.

**37.** The method according to any one of claims 33 to 36, wherein the real periodicity $N'_{cb}$ of bit selection meets the following:

$N'_{cb} = N_{cb} - (K_{NULL} - K'_{NULL})$, wherein $K_{NULL} - K'_{NULL}$ represents the quantity of filler bits in the circular buffer, and $N_{cb}$ represents a size of the circular buffer.

**38.** The method according to any one of claims 34 to 37, wherein the first starting bit index $k'_{r,0}$ of the 1st time unit in the plurality of time units meets the following:

if $0 \le k_0 < K'_{NULL} - 2Z_c,\ k'_{r,0} = k_0$, wherein $K'_{NULL} - 2Z_c$ represents an index of the 1st filler bit in the circular buffer;

if $K'_{NULL} - 2Z_c \le k_0 < K_{NULL} - 2Z_c,\ k'_{r,0} = K'_{NULL} - 2Z_c$, wherein $K_{NULL} - 2Z_c$ represents an index of a 1st parity bit in the circular buffer; or

if $K_{NULL} - 2Z_c \le k_0 < N_{cb}$, $k'_{r,0} = k_0 - (K_{NULL} - K'_{NULL})$, wherein $K_{NULL} - K'_{NULL}$ $K_{NULL}$ represents the quantity of filler bits in the circular buffer, wherein
$k_0$ represents a location that is in the circular buffer and that is of a starting bit, in coded bits, corresponding to the 1st time unit in the plurality of time units, and $k_0$ is jointly determined by a redundancy version RV and a base graph BG.

**39.** An uplink transmission method, comprising:

sending, by a terminal device, a transport block to a network device in N available slots, wherein the transport block is configured to be repeatedly sent M times in the N slots, wherein

when a redundancy version sequence is {0, 2, 3, 1}, initial transmission of the transport block starts from a $1^{st}$ transmission occasion in M×N transmission occasions;

when a redundancy version sequence is {0, 3, 0, 3}, initial transmission of the transport block starts from any one of M×N transmission occasions associated with RV=0; or

when a redundancy version sequence is {0, 0, 0, 0}, initial transmission of the transport block starts from any one of M×N transmission occasions associated with RV=0, wherein

an $n^{th}$ transmission occasion in the M×N transmission occasions is associated with a $(mod((n-1)/N, 4)+1)^{th}$ value in the redundancy version sequence, n=1, N+1, 2N+1, ..., or (M-1)×N+1, and the redundancy version sequence is configured by the network device.

40. An uplink transmission method, comprising:

receiving, by a network device, a transport block from a terminal device in N available slots, wherein the transport block is configured to be repeatedly sent M times in the N slots, wherein

when a redundancy version sequence is {0, 2, 3, 1}, initial transmission of the transport block starts from a $1^{st}$ transmission occasion in M×N transmission occasions;

when a redundancy version sequence is {0, 3, 0, 3}, initial transmission of the transport block starts from any one of M×N transmission occasions associated with RV=0; or

when a redundancy version sequence is {0, 0, 0, 0}, initial transmission of the transport block starts from any one of M×N transmission occasions associated with RV=0, wherein

an $n^{th}$ transmission occasion in the M×N transmission occasions is associated with a $(mod((n-1)/N, 4)+1)^{th}$ value in the redundancy version sequence, n=1, N+1, 2N+1, ..., or (M-1)×N+1, and the redundancy version sequence is configured by the network device.

41. A communications apparatus, comprising:

a processor and a memory, wherein
the memory is configured to store a computer program; and
the processor is configured to execute the computer program stored in the memory, so that the communications apparatus performs the communication method according to any one of claims 1 to 7, or performs the communication method according to any one of claims 8 to 13, or performs the communication method according to any one of claims 27 to 40.

42. A computer-readable storage medium, wherein the computer-readable storage medium stores a computer program, and when the computer program runs on a computer, the computer is enabled to perform the communication method according to any one of claims 1 to 7, or perform the communication method according to any one of claims 8 to 13, or perform the communication method according to any one of claims 27 to 40.

43. A chip system, comprising a processor, configured to invoke a computer program from a memory and run the computer program, so that a communications device in which the chip system is installed performs the communication method according to any one of claims 1 to 7, or performs the communication method according to any one of claims 8 to 13, or performs the communication method according to any one of claims 27 to 40.

System
100

121                                      111

FIG. 1

TBoMS

| TB#1 | TB#2 | TB#3 | TB#4 |
|------|------|------|------|

Slot
boundary

Slot
boundary

Slot
boundary

FIG. 2

| Information bit string | Channel encoding → | Coded bit string | Rate matching → | Selected bit string | Modulation, mapping, ... → |
|---|---|---|---|---|---|

FIG. 3

FIG. 4

FIG. 5

FIG. 6

RV0

$k_0$

RV3

RV1

$k_1$

$k_2$

$k_3$

RV2

One TBoMS transmission

| D | D | S | U | U | D | D | S | U | U |

RV0

$k_0$  $k_1$

RM  RM
#1  #2

$k_2$  $k_3$

RM  RM
#3  #4

(a)

RV0

$k_0$

RV3

RV1

$k_1$

$k_3$

$k_2$

RV2

One TBoMS transmission

| D | D | S | U | U | D | D | S | U | U |

RV0          UCI

$k_0$  $k_1$

RM  RM
#1  #2

$k_2$  $k_3$

RM  RM
#3  #4

(b)

FIG. 7

Network
device

Terminal
device

S101: First indication information

S102: Second indication information

S103: Determine, based on a parameter G corresponding to a
first time unit, a location that is in a circular buffer and that
is of a starting bit in a first coded bit sequence

S104: Send a first transport block

S105: Determine, based on the parameter G corresponding to
the first time unit, the location that is in the circular buffer
and that is of the starting bit in the first coded bit sequence

FIG. 8

FIG. 9

(a)

(b)

FIG. 10

FIG. 11

RV0

k_0

RV3

RV1

k_1

k_3

k_2

RV2

One TBoMS transmission

| D | D | S | U | U | D | D | S | U | U |

RV0

k_0    k_1

RM    RM
#1    #2

k_2    k_3

RM    RM
#3    #4

(a)

RV0

k_0

RV3

RV1

k_1

k_3

Gap

k_2

RV2

One TBoMS transmission

| D | D | S | U | U | D | D | S | U | U |

RV0        UCI

k_0    k_1

RM    RM
#1    #2

k_2    k_3

RM    RM
#3    #4

(b)

FIG. 12

FIG. 13

RV0

RV3

RV1

RV2

| Repetition #1 | Repetition #2 | | Repetition #3 | Repetition #4 | | Repetition #5 | Repetition #6 | | Repetition #7 | Repetition #8 |

| D | D | S | U | U | D | D | S | U | U | D | D | S | U | U | D | D | S | U | U |

RV1  RV0        RV0  RV2        RV2  RV3        RV3  RV1

FIG. 14

RV0

RV3

RV1

RV2

| Repetition #1 | | | Repetition #2 | | | Repetition #3 | | | Repetition #4 |

| D | D | S | U | U | D | D | S | U | U | D | D | S | U | U | D | D | S | U | U |

RV0            RV2            RV3            RV1

FIG. 15

FIG. 16

EP 4 404 664 A1

Repetition #1    Repetition #2    Repetition #3    Repetition #4

D D S U U D D S U U D D S U U D D S U U D D S U U D D S U U D D S U U D D S U U

RV0    RV2    RV3    RV1

(a)

Repetition #1    Repetition #2    Repetition #3    Repetition #4

D D S U U D D S U U D D S U U D D S U U D D S U U D D S U U D D S U U D D S U U

RV0    RV2    RV3    RV1

(b)

FIG. 17

FIG. 18

EP 4 404 664 A1

Repetition #1  Repetition #2  Repetition #3  Repetition #4

D D S U U D D S U U D D S U U D D S U U D D S U U D D S U U D D S U U D D S U U

RV0  RV0  RV0  RV0

(a)

Repetition #1  Repetition #2  Repetition #3  Repetition #4

D D S U U D D S U U D D S U U D D S U U D D S U U D D S U U D D S U U D D S U U

RV0  RV0  RV0  RV0

(b)

Repetition #1  Repetition #2  Repetition #3  Repetition #4

D D S U U D D S U U D D S U U D D S U U D D S U U D D S U U D D S U U D D S U U

RV0  RV0  RV0  RV0

(c)

Repetition #1  Repetition #2  Repetition #3  Repetition #4

D D S U U D D S U U D D S U U D D S U U D D S U U D D S U U D D S U U D D S U U

RV0  RV0  RV0  RV0

(d)

Repetition #1  Repetition #2  Repetition #3  Repetition #4

D D S U U D D S U U D D S U U D D S U U D D S U U D D S U U D D S U U D D S U U

RV0  RV0  RV0  RV0

(e)

FIG. 19

FIG. 20

FIG. 21

RV0

RV3

RV1

RV2

| Repetition #1 | | | Repetition #2 | | | Repetition #3 | | | Repetition #4 | | |

| D | D | S | U | U | D | D | S | X | U | D | D | S | U | U | D | D | S | U | U | D | D | S | U | U |

RV0          RV2          RV3          RV1

## FIG. 22

TBoMS PUSCH transmission: N=8

| D | D | S | U | U | D | D | S | U | U | D | D | S | U | U | D | D | S | U | U |

TB aggregation: K=4

## FIG. 23

Communications apparatus 10

Transceiver module 11

Processing module 12

## FIG. 24

Processor
21

Input port
23

20

Memory
22

Output port
24

FIG. 25

$N_{cb}$

$K_{NULL}-K_{NULL}'$

| Systematic bit | Filler bit | Parity bit |

$k_0$

$K_{NULL}-2Z_c$

$K_{NULL}'-2Z_c$

FIG. 26

EP 4 404 664 A1

$N_{cb}$

$N_{cb}$

| Systematic bit | Filler bit | Parity bit | Systematic bit | Filler bit | Parity bit |

$K_{NULL}-K_{NULL}'$

$K_{NULL}-K_{NULL}'$

$k_0'$    $K_{NULL}'-2Z_c$    $k_0'+L$    $K_{NULL}'-2Z_c+N_{cb}$

(a)

$N_{cb}$

$N_{cb}$

| Systematic bit | Filler bit | Parity bit | Systematic bit | Filler bit | Parity bit |

$K_{NULL}-K_{NULL}'$

$K_{NULL}-K_{NULL}'$

$K_{NULL}'-2Z_c$    $k_0'$    $K_{NULL}'-2Z_c+N_{cb}$    $k_0'+L$

(b)

$N_{cb}$

$N_{cb}$

| Systematic bit | Filler bit | Parity bit | Systematic bit | Filler bit | Parity bit |

$K_{NULL}-K_{NULL}'$

$K_{NULL}-K_{NULL}'$

$k_0'$    $k_0'+L$    $K_{NULL}'-2Z_c$    $K_{NULL}'-2Z_c+N_{cb}$

(c)

$N_{cb}$

$N_{cb}$

| Systematic bit | Filler bit | Parity bit | Systematic bit | Filler bit | Parity bit |

$K_{NULL}-K_{NULL}'$

$K_{NULL}-K_{NULL}'$

$K_{NULL}'-2Z_c$    $k_0'$    $k_0'+L$    $K_{NULL}'-2Z_c+N_{cb}$

(d)

FIG. 27

$N_{cb}$

$K_{NULL}-K_{NULL}'$

| Systematic bit | Filler bit | Parity bit |

$K_{NULL}'-2Z_c$    $K_{NULL}-2Z_c$

(a)

$N_{cb}'$

| Systematic bit | Parity bit |

$K_{NULL}'-2Z_c$

(b)

FIG. 28

## INTERNATIONAL SEARCH REPORT

<table>
<tr><td colspan="2"></td><td>International application No.<br><br>**PCT/CN2022/122922**</td></tr>
</table>

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W,H04L

Documentation searched other than minimum documentation to the extent that such documents are included in the fields searched

Electronic data base consulted during the international search (name of data base and, where practicable, search terms used)

CNPAT, WPI, EPODOC, 3GPP: 速率匹配, 开始, 起始, 初始, 比特, 传输块, 多时隙, 跨时隙, 多个时隙, 切换, 动态, 指示, 单时隙, 单个时隙, 单码块, 模, 冗余版本, 重叠, 交叠, 丢弃, 取消, 不发送, 停止发送, 复用, rate, match, start, bit, pusch, pucch, UCI, multi-slot, multislots, multiple, slot, TBoMS, switch, dynamic, indicate, single slot, Single-slot, mod, RV, overlap, cancel, drop, puncture, multiplex

**C. DOCUMENTS CONSIDERED TO BE RELEVANT**

| Category* | Citation of document, with indication, where appropriate, of the relevant passages | Relevant to claim No. |
|---|---|---|
| A | PANASONIC. "Discussion on TB processing over multi-slot PUSCH"<br>*3GPP TSG RAN WG1 #106-e, R1-2107117*, 06 August 2021 (2021-08-06),<br>section 2.2 | 1-43 |
| X | LG ELECTRONICS. "Discussions on TB processing over multi-slot PUSCH"<br>*3GPP TSG RAN WG1 #105-e, R1-2105489*, 12 May 2021 (2021-05-12),<br>sections 3.1, 6.1 and 6.2 | 27, 29, 41-43 |
| X | NEC. "Discussion on TB processing over multi-slot PUSCH"<br>*3GPP TSG RAN WG1 #104-e, R1-2100943*, 19 January 2021 (2021-01-19),<br>section 2.2 | 30, 41-43 |
| X | HUAWEI et al. "Discussion on TB processing over multi-slot PUSCH"<br>*3GPP TSG RAN WG1 Meeting #106-e, R1-2106496*, 07 August 2021 (2021-08-07),<br>section 2.3.5 | 27, 29, 41-43 |
| X | CN 110972286 A (TELECOMMUNICATIONS TECHNOLOGY RESEARCH INSTITUTE CO., LTD.) 07 April 2020 (2020-04-07)<br>claims 1-50 | 27, 29, 41-43 |

| ✓ Further documents are listed in the continuation of Box C. | ✓ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 November 2022** | **28 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/122922**

**C.      DOCUMENTS CONSIDERED TO BE RELEVANT**

| Category* | Citation of document, with indication, where appropriate, of the relevant passages | Relevant to claim No. |
|---|---|---|
| A | WO 2020145860 A1 (TELEFONAKTIEBOLAGET LM ERICSSON (PUBL)) 16 July 2020 (2020-07-16)<br>        entire document | 1-43 |

Form PCT/ISA/210 (second sheet) (January 2015)

**INTERNATIONAL SEARCH REPORT**

International application No.

**PCT/CN2022/122922**

| Box No. III | Observations where unity of invention is lacking (Continuation of item 3 of first sheet) |
|---|---|

This International Searching Authority found multiple inventions in this international application, as follows:

[1]   The claims are divided into four groups: a first group relates to claims (1, 8, 14, 21, 28, and 31), and the technical solutions of claims 41-43 when referring to the described related claims; a second group relates to claims (27, 29), and the technical solutions of claims 41-43 when referring to claim 27 or 29; a third group relates to claim (30), and the technical solutions of claims 41-43 when referring to claim 30; and a fourth group relates to claims (39, 40), and the technical solutions of claims 41-43 when referring to any one of claims 39-40.

[2]   Comparing the described four groups of claims, the same or corresponding technical feature between any two of the four groups comprises: sending, by a terminal device, transmission blocks on a plurality of time units. However, the described technical feature is common general knowledge in the art. Therefore, claims (1, 8, 14, 21, 28, and 31) and the technical solutions of claims 41-43 when referring to the described related claims, claims (27, 29) and the technical solutions of claims 41-43 when referring to claim 27 or 29, claim (30) and the technical solutions of claims 41-43 when referring to claim 30, and claims (39, 40) and the technical solutions of claims 41-43 when referring to any one of claims 39-40 do not share a same or corresponding special technical feature, and thus lack unity of invention as defined in PCT Rules 13.1 and 13.2.

1. ☐   As all required additional search fees were timely paid by the applicant, this international search report covers all searchable claims.

2. ☑   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet) (January 2015)

INTERNATIONAL SEARCH REPORT
Information on patent family members

International application No.

**PCT/CN2022/122922**

| Patent document cited in search report | | | Publication date (day/month/year) | Patent family member(s) | | | Publication date (day/month/year) |
|---|---|---|---|---|---|---|---|
| CN | 110972286 | A | 07 April 2020 | None | | | |
| WO | 2020145860 | A1 | 16 July 2020 | US | 2022070911 | A1 | 03 March 2022 |
| | | | | EP | 3909177 | A1 | 17 November 2021 |

Form PCT/ISA/210 (patent family annex) (January 2015)